# EUROPEAN PATENT SPECIFICATION

(11) **EP 3 345 379 B1**
(45) Date of publication and mention of the grant of the patent: **26.01.2022**
(21) Application number: 16879102.8
(22) Date of filing: 15.07.2016
(51) Int. Cl.: H04M 1/725, H04N 21/4363, G08C 17/02, H04L 12/24, G06F 3/0488, G06K 9/00, G06K 9/62, G06F 3/0482, H04N 21/41, H04N 21/422, H04N 21/436, G06F 3/0484, H04M 1/72415

(54) **METHOD FOR ELECTRONIC DEVICE TO CONTROL OBJECT AND ELECTRONIC DEVICE**
VERFAHREN FÜR ELEKTRONISCHE VORRICHTUNG ZUR STEUERUNG EINES OBJEKTS UND ELEKTRONISCHE VORRICHTUNG
PROCÈDÈ POUR LA COMMANDE D'UN OBJET PAR UN DISPOSITIF ÈLECTRONIQUE ET DISPOSITIF ÈLECTRONIQUE

(30) Priority: 23.12.2015 KR 20150185098; 22.04.2016 KR 20160049403
(43) Date of publication of application: 11.07.2018
(73) Proprietor: Samsung Electronics Co., Ltd., Suwon-si, Gyeonggi-do 16677 (KR)
(72) Inventor: LEE, Won-hee, Suwon-si, Gyeonggi-do 16527 (KR); LEE, Ki-heon, Suwon-si, Gyeonggi-do 16434 (KR); KIM, Hwa-kyung, Seoul 03418 (KR); MIN, Hyun-seok, Suwon-si, Gyeonggi-do 16712 (KR); PARK, In-su, Osan-si, Gyeonggi-do 18134 (KR); HAN, Sung-young, Suwon-si, Gyeonggi-do 16509 (KR); KOH, Jun-ho, Suwon-si, Gyeonggi-do 16713 (KR); KIM, Ju-hee, Suwon-si, Gyeonggi-do 16709 (KR); KIM, Jin-sung, Seoul 05301 (KR); LEE, Yong-chan, Seoul 05769 (KR)
(74) Representative: HGF
(86) International application number: PCT/KR2016/007708
(87) International publication number: WO 2017/111234

(56) References cited:
- KR-A- 20150 086 807
- US-A1- 2008 036 570
- US-A1- 2011 170 787
- US-A1- 2011 170 787
- US-A1- 2012 299 709
- US-A1- 2014 266 639
- US-A1- 2014 266 639
- US-A1- 2014 300 827

## Description

### [Technical Field]

Apparatuses and methods consistent with exemplary embodiments relate to a method for an electronic device to control at least one object selected by a user, and the electronic device.

### [Background Art]

A mobile terminal may be configured to perform various functions. Examples of the various functions include a data and voice communication function, a function of capturing a photo or a video through a camera, a voice storage function, a function of playing a music file through a speaker system, an image or video display function, and so on.

Some mobile terminals have an additional function for executing games, and some other mobile terminals may be implemented as multimedia players. Also, a mobile terminal provides a remote control function for remotely controlling other devices. However, since devices have different control interfaces, it is inconvenient for a user to control other devices through the mobile terminal.

US2012299709 A1 concerns a remote control device including a display unit, an operation detecting unit, a reading unit, a control unit, and a code transmitting unit. The operation detecting unit detects an operation. The reading unit reads information used for remotely controlling an electrical device from the electrical device. The control unit causes the display unit to display a control screen used for remotely controlling the electrical device based on the information read by the reading unit. The code transmitting unit transmits a control code acquired based on the information read by the reading unit to the electrical device in response to an operation detected by the operation detecting unit while the control screen is displayed on the display unit.

US2011/170787 A1 concerns interacting with a target object using an imaging device of a handheld mobile device.

US2014/266639 A1 concerns configuration of a mobile electronic device with remote control functionality for a target electronic device for which an original remote control is unavailable. It is said that this is achieved by automated identification of control data for the target device based on non-textual device identification data captured by the mobile electronic device. The device identification data can include a picture of the target device or part thereof captured by the mobile electronic device. The picture may be automatically processed to identify the target device based on device shape, or based on device-specific symbols carried on an exterior of the target device. The device identification data can include signal data captured at device, including a wireless tag code, or location-specific data indicative of device location in an establishment.

### [Disclosure]

### [Technical Solution]

Exemplary embodiments may address at least the above problems and/or disadvantages and other disadvantages not described above. Also, exemplary embodiments are not required to overcome the disadvantages described above, and may not overcome any of the problems described above.

One or more exemplary embodiments provide a method and electronic device for automatically controlling at least one object according to a user's intention based on an attribute of each of a plurality of objects recognized through a camera or a short-range wireless communication interface.

### [Advantageous Effects]

According to an exemplary embodiment, the electronic device determines a target object to control and a target operation according to a user's intention based on attributes of a plurality of objects recognized by the electronic device, thereby enabling the user to conveniently control an external device.

### [Brief Description of Drawings]

The above and/or other aspects will become more apparent by describing certain exemplary embodiments with reference to the accompanying drawings, in which:
FIG. 1 is a diagram illustrating an object control system according to an exemplary embodiment;
FIG. 2 is a flowchart illustrating a method for an electronic device to control an object according to an exemplary embodiment;
FIG. 3 is an inter-object associated attribute table according to an exemplary embodiment;
FIG. 4 is a flowchart illustrating a method of recognizing an object through an image sensor according to an exemplary embodiment;
FIGS. 5A and 5B are diagrams illustrating an operation of an electronic device receiving a user input for selecting an object according to an exemplary embodiment;
FIG. 6 is a flowchart illustrating a method of recognizing an object through short-range communication according to an exemplary embodiment;
FIG. 7 is a diagram illustrating an object map according to an exemplary embodiment;
FIG. 8 is a sequence diagram illustrating a method for an electronic device to control an object according to an exemplary embodiment when all of a plurality of objects are controllable devices;
FIG. 9 is a sequence diagram illustrating a method for an electronic device to control one object based on attributes of a plurality of objects according to an exemplary embodiment when the electronic device is connected to the plurality of objects for communication;
FIGS. 10A, 10B and 10C are diagrams illustrating an operation of an electronic device controlling a light fixture based on an attribute of a television (TV) and an attribute of the light fixture according to an exemplary embodiment;
FIG. 11 is a sequence diagram illustrating a method for an electronic device to control an object according to an exemplary embodiment when only one of a plurality of objects recognized by the electronic device is a controllable device;
FIG. 12 is a diagram illustrating an operation of an electronic device controlling a TV based on an attribute of a person and an attribute of the TV according to an exemplary embodiment;
FIG. 13 is a diagram illustrating an operation of an electronic device controlling an audio system based on an attribute of surroundings and an attribute of the audio system according to an exemplary embodiment;
FIG. 14 is a diagram illustrating an operation of an electronic device controlling a dehumidifier based on an attribute of a thing and an attribute of the dehumidifier according to an exemplary embodiment;
FIG. 15 is a sequence diagram illustrating a method for an electronic device to control an additional object according to an exemplary embodiment when objects recognized by the electronic device as uncontrollable objects;
FIG. 16 is a diagram illustrating an operation of an electronic device controlling a TV based on an attribute of a person and an attribute of a doll according to an example outside the scope of the claims;
FIG. 17 is a diagram illustrating an operation of an electronic device playing content based on an attribute of a person and an attribute of a doll recognized by the electronic device according to an example outside the scope of the claims;
FIG. 18 is a diagram illustrating an operation of an electronic device displaying a notification based on an attribute of a refrigerator and an attribute of a person recognized by the electronic device according to an example outside the scope of the claims;
FIG. 19 is a diagram illustrating an operation of an electronic device controlling the display of an external device based on an attribute of a refrigerator and an attribute of a person recognized by the electronic device according to an example outside the scope of the claims;
FIG. 20 is a diagram illustrating an operation of an electronic device remotely controlling an external device according to an example outside the scope of the claims;
FIG. 21 is a flowchart illustrating a method for an electronic device to display attributes of a plurality of recognized objects according to an exemplary embodiment;
FIG. 22 is a diagram illustrating an operation of an electronic device displaying attributes of a TV and attributes of a light fixture according to an exemplary embodiment;
FIG. 23 is a flowchart illustrating a method for an electronic device to recommend a plurality of operations according to an exemplary embodiment;
FIG. 24 is a diagram illustrating an operation of an electronic device recommending a plurality of operations based on an attribute of a TV and an attribute of a light fixture according to an exemplary embodiment;
FIG. 25 is a diagram illustrating an application execution system according to an exemplary embodiment;
FIG. 26 is a sequence diagram illustrating a method of a server generating object recognition model information according to an exemplary embodiment;
FIG. 27 is a diagram illustrating categories and keywords according to an exemplary embodiment;
FIG. 28 is a diagram illustrating an operation of generating images for object recognition according to an exemplary embodiment;
FIG. 29 is a sequence diagram illustrating a method of modifying object recognition model information according to an exemplary embodiment when there is an object recognition error;
FIG. 30 is a diagram illustrating a case in which an object recognition error occurs in an electronic device;
FIG. 31 is a sequence diagram illustrating a method of generating personalized object recognition model information according to an exemplary embodiment;
FIG. 32 is a diagram illustrating an operation of linking an object and an application according to an exemplary embodiment;
FIG. 33A is a diagram illustrating an operation of an electronic device acquiring a video of an object according to an exemplary embodiment;
FIG. 33B is a diagram illustrating an operation of an electronic device downloading object recognition model information from a server;
FIG. 34 is a diagram illustrating an operation of linking an object and a controller according to an exemplary embodiment;
FIG. 35 is a flowchart illustrating a method of updating object recognition model information according to an exemplary embodiment;
FIG. 36 is a diagram illustrating an operation of an electronic device modifying object recognition model information at a user's request according to an exemplary embodiment;
FIG. 37 is a flowchart illustrating a method of an electronic device executing an application or a controller according to an exemplary embodiment;
FIG. 38 is a diagram illustrating an operation of an electronic device displaying a controller corresponding to a TV according to an exemplary embodiment;
FIG. 39 is a sequence diagram illustrating a method of generating object recognition model information by linking a memo or a website address and an object according to an exemplary embodiment;
FIG. 40 is a diagram illustrating an operation of linking a credit card and a memo according to an exemplary embodiment;
FIG. 41 is a diagram illustrating an operation of linking a window and a website address according to an exemplary embodiment;
FIG. 42 is a diagram illustrating an operation of an electronic device displaying weather information corresponding to a window according to an exemplary embodiment;
FIG. 43 is a block diagram illustrating a configuration of an electronic device according to an exemplary embodiment; and
FIG. 44 is a block diagram illustrating a configuration of a server according to an exemplary embodiment.

### [Best Mode]

According to an aspect of an exemplary embodiment, a method in an electronic device to control an object is hereby disclosed according to claim 1.

According to an aspect of an exemplary embodiment, an electronic device is hereby disclosed according to claim 12.

### [Mode for Invention]

Certain exemplary embodiments will be described in greater detail with reference to the accompanying drawings.

In the following description, like drawing reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or constructions are not described in detail since they would obscure the description with unnecessary detail.

As terminology used in exemplary embodiments, general terms currently in wide use are selected wherever possible in consideration of functions in exemplary embodiments, but may vary according to intentions of those of ordinary skill in the art, precedent cases, the advent of new technology, and so on. In particular, some terms may be arbitrarily selected by the applicant, and in such cases, the detailed meanings of the terms will be stated in the corresponding description. Therefore, the terms used in exemplary embodiments should be defined based on the meanings of the terms together with the description throughout the specification rather than their simple names.

Throughout the specification, when a portion "includes" an element, unless otherwise described, another element may be further included, rather than the presence of other elements being excluded. Also, terms such as "portion," "module," etc. used herein indicate a unit for processing at least one function or operation, in which the unit may be embodied as hardware or software or may be embodied by a combination of hardware and software.

As used herein, the term "and/or" includes any and all combinations of one or more of the associated listed items. Expressions such as "at least one of," when preceding a list of elements, modify the entire list of elements and do not modify the individual elements of the list.

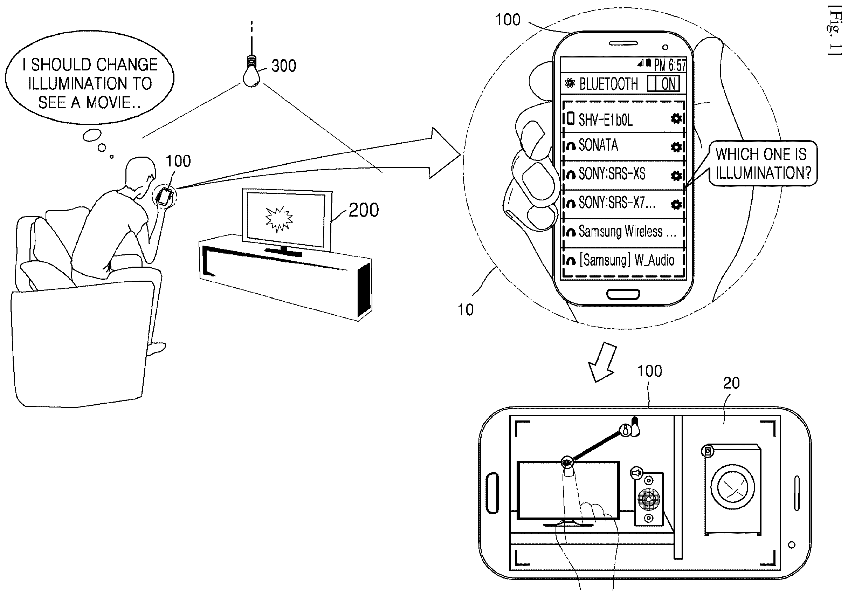

FIG. 1 is a diagram illustrating an object control system according to an exemplary embodiment.

Referring to FIG. 1, an object control system according to an exemplary embodiment may include an electronic device 100 and a plurality of objects. However, all the illustrated components are not essential components. The object control system may be implemented by a larger or smaller number of components than the illustrated components.

The electronic device 100 may be a device capable of controlling an external object. For example, the electronic device 100 may transfer control information to the external object through a network. According to an exemplary embodiment, the network may be implemented with wireless communication technology or mobile communication technology, such as wireless fidelity (Wi-Fi), home radio frequency (RF), Bluetooth, high rate-wireless personal area network (HR-WPAN), ultra-wideband (UWB), low rate-wireless personal area network (LR-WPAN), Institute for Electrical and Electronics Engineers (IEEE) 1394, etc., but is not limited thereto.

The electronic device 100 according to an exemplary embodiment may be implemented in various forms. For example, the electronic device 100 may be a digital camera, a smart phone, a laptop computer, a tablet PC, an e-book terminal, a terminal for digital broadcast, a personal digital assistant (PDA), a portable multimedia player (PMP), a navigation device, an MP3 player, etc., but is not limited thereto. The electronic device 100 described herein may a device wearable by a user. The wearable device may include at least one of an accessory device (e.g., a watch, a ring, a bracelet, an ankle bracelet, a necklace, glasses, or a contact lens), a head-mounted device (HMD), a device integrally formed with fabric or clothes (e.g., electronic clothing), a body-attachable device (e.g., a skin pad), and an implantable device (e.g., an implantable circuit), but is not limited thereto. For convenience of description, a case of the electronic device 100 being a mobile terminal will be described as an example.

In an exemplary embodiment, an object may be a thing, a person, a device (e.g., an Internet of things (IoT) device), an animal, an environment, etc. recognizable by the electronic device 100, but is not limited thereto. For example, objects may be a display device (e.g., a TV), a smart phone, a laptop computer, a tablet PC, an e-book terminal, a terminal for digital broadcast, a PDA, a PMP, a navigation device, an MP3 player, consumer electronics (CE) devices (e.g., a light fixture, a refrigerator, an air conditioner, a water purifier, a dehumidifier, a humidifier, an espresso machine, an oven, a robot vacuum cleaner, etc.), wearable devices (e.g., a band, a watch, glasses, a virtual reality (VR) headset, shoes, a belt, gloves, a ring, a necklace, etc.), persons (e.g., family members, friends, etc.), animals (e.g., a cat, a dog, etc.), things (e.g., a doll, clothing, a bed, a window, etc.), an environment (e.g., weather, a season, a temperature, a humidity, etc.), but is not limited thereto.

According to an exemplary embodiment, the electronic device 100 may control an external object according to a user input. For example, to view a movie on a TV 200, the user may want to lower the illuminance of a light fixture 300. At this time, referring to a reference numeral 10 of FIG. 1, the electronic device 100 may search for surrounding devices through short-range communication (e.g., Bluetooth), and display a list of detected devices. When the user selects identification information of the light fixture 300 to control among the detected devices, the electronic device 100 may perform a pairing procedure with the light fixture 300, and then display a graphical user interface (GUI) for adjusting the illuminance of the light fixture 300. When the user sets the illuminance of the light fixture 300 to 20 % through the GUI, the electronic device 100 may transmit an instruction to set the illuminance to 20 % to the light fixture 300. However, it is not easy for the user to find identification information of the light fixture 300 in the list of detected devices for the pairing procedure. Also, it is inconvenient for the user to carry out several procedures to adjust the illuminance of the light fixture 300.

Therefore, according to an exemplary embodiment, the electronic device 100 may provide an interface 20 which enables the user to recognize objects at a glance and easily manipulate functions of the objects as shown in FIG. 1. For example, when the user draws a line connecting the TV 200 to the light fixture 300 in a live view of a camera of the electronic device 100, the electronic device 100 may control the light fixture 300 to automatically adjust the illuminance according to a type of content played on the TV 200.

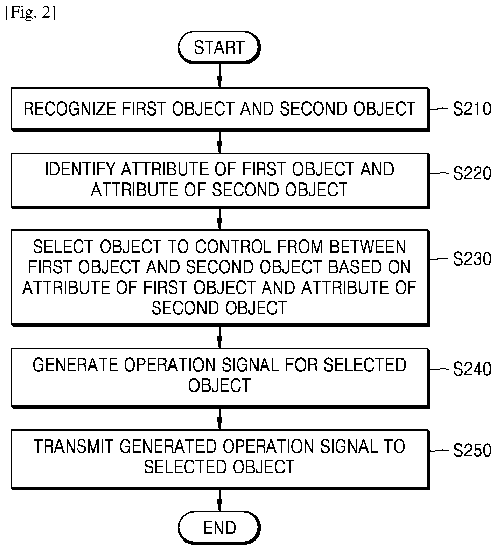

A method for the electronic device 100 to automatically control an object according to the user's intention will be described in detail below with reference to FIG. 2.

FIG. 2 is a flowchart illustrating a method for an electronic device to control an object according to an exemplary embodiment.

In operation S210, the electronic device 100 recognizes a first object and a second object.

"Recognizing an object" denotes that an object is identified and a screen is in a state in which it is possible to display an image (e.g., an actual image or an alternative image) corresponding to the object.

The electronic device 100 may recognize a first object and a second object existing outside the electronic device 100 using an image sensor or the camera. For example, the electronic device 100 may acquire an original frame including the first object and the second object, and identify the first object and the second object through image processing of the original frame. For example, the electronic device 100 may detect the contour of the first object and the contour of the second object through analysis of the original frame. Then, the electronic device 100 may compare the detected contours of the first object and the second object with a predefined template to detect types, names, etc. of the objects. For example, the electronic device 100 may recognize the first object included in the original frame as a TV when the contour of the first object is similar to the template of a TV, and may recognize the second object as a refrigerator when the contour of the second object is similar to the template of a refrigerator.

In some examples, the electronic device 100 may also perform face recognition on an object included in the original frame. For example, the electronic device 100 may detect a face region of a person in the original frame. Methods of detecting a face region include knowledge-based methods, feature-based methods, template-matching methods, appearance-based methods, etc., but are not limited thereto.

The electronic device 100 may extract a feature of the face (e.g., shapes, etc. of the eyes, nose, and mouth) from the detected face region. The electronic device 100 may use a Gabor filter, a local binary pattern (LBP), etc. to extract a feature of the face from the face region, but a method used to extract a feature of the face from the face region is not limited thereto.

The electronic device 100 may compare the feature of the face extracted from the face region with facial features of pre-registered users. For example, when the extracted feature of the face is similar to the face of a first user (e.g., Tom) registered in advance, the electronic device 100 may recognize the object as the first user (e.g., Tom). Also, when the extracted feature of the face is similar to the face of a child registered in advance, the electronic device 100 may recognize the object as the child.

Also, in some examples, the electronic device 100 may compare a certain region of the original frame with a color map (color histogram), and extract visual features of the image, such as a color arrangement, patterns, an atmosphere, etc., as image analysis information. In this case, the electronic device 100 may recognize rain or snow falling outside a window.

Further, in some examples, the electronic device 100 may perform optical character recognition (OCR) on characters included in an object. OCR denotes a technique for converting the alphabet of various human languages, numeral fonts, etc. included in an image document into a character code which is editable in the electronic device 100. Therefore, the electronic device 100 may identify an object by recognizing a character shown in the object.

According to an exemplary embodiment, the electronic device 100 may recognize an object through short-range communication. For example, the electronic device 100 may receive advertising packets broadcast by an object (or a Bluetooth Low Energy (BLE) tag attached to the object) through BLE communication and extract identification information included in the advertising packets to recognize the object. The electronic device 100 may also calculate the distance from the object based on the intensity of a BLE signal.

When the first object is a tablet PC, the electronic device 100 may receive advertising packets including identification information of the first object (e.g., a code corresponding to the tablet PC) from the first object (tablet PC) through BLE communication. The electronic device 100 may analyze the advertising packets and recognize that the first object is a tablet PC. Also, when the second object is a doll, the electronic device 100 may analyze advertising packets received from a BLE tag attached to the doll and recognize that the second object is a doll.

The electronic device 100 may recognize a first object and a second object by receiving the identification information of the first object and the identification information of the second object through at least one of light fidelity (Li-Fi) communication, Wi-Fi communication, and Bluetooth communication, but a method used to receive the identification information of the first and second objects is not limited thereto.

Li-Fi may be one visible light communication (VLC) technique for transferring information using a wavelength of light emitted from a light-emitting diode (LED). Data transmission is performed through flickering of light. The flickering is made at intervals of one-millionth seconds, and thus is not noticed by human eyes. In other words, a bulb appears to be turned on, but in fact, data is being transmitted. Therefore, Li-Fi may be used anywhere in which there is illumination and is harmless to a human body.

According to an example, when the electronic device 100 is connected to a home network, the electronic device 100 may recognize other objects connected to the home network. For example, by receiving identification information, location information, state information, function information, etc. of other objects from a home gateway (which may be expressed as a repeater, a server, or an IoT hub), the electronic device 100 may recognize the other objects. The electronic device 100 may display icon images corresponding to the recognized objects on the screen.

Both the first object and the second object recognized by the electronic device 100 may be controllable devices. For example, a "controllable device" may denote a device which may have a communication link established with the electronic device 100 and operate according to a control signal transferred from the electronic device 100 through the communication link.

According to an example not forming part of the claimed invention, , only one of the first object and the second object recognized by the electronic device 100 may be a controllable device, and the other may be an uncontrollable object. For example, uncontrollable objects may be a thing, a person, an animal, an environment (weather, a season, a temperature, etc.) which cannot unilaterally or bi-directionally communicate in a technical sense, but are not limited thereto.

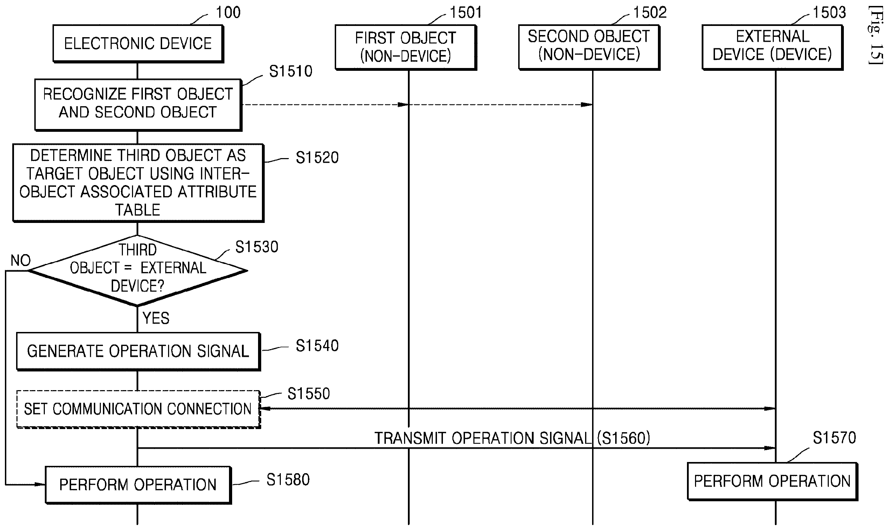

Meanwhile, in some examples, both the first object and the second object recognized by the electronic device 100 may be uncontrollable objects (e.g., an environment, a thing, etc.). This case will be described in detail below with reference to FIG. 15.

According to an exemplary embodiment, when three or more objects are recognized through the camera or a communication interface, the electronic device 100 displays the recognized objects on the screen and receives an input for selecting a first object and a second object among the recognized objects from the user.

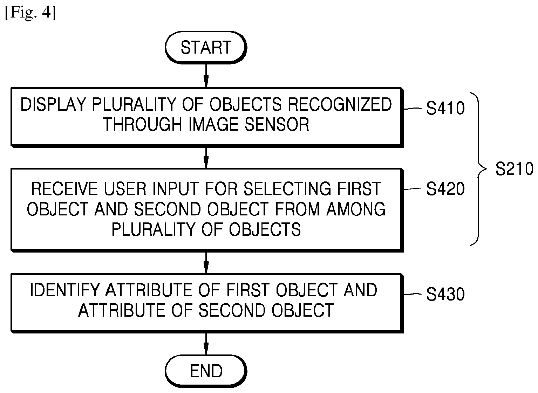

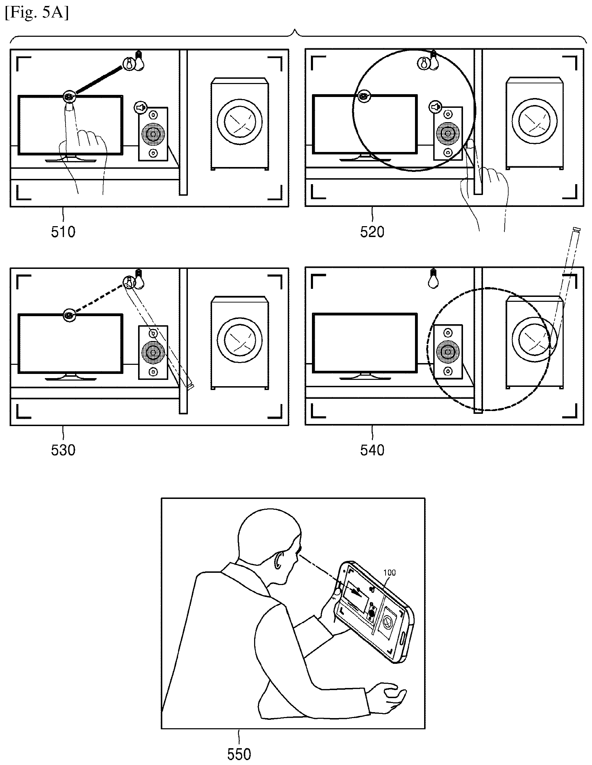

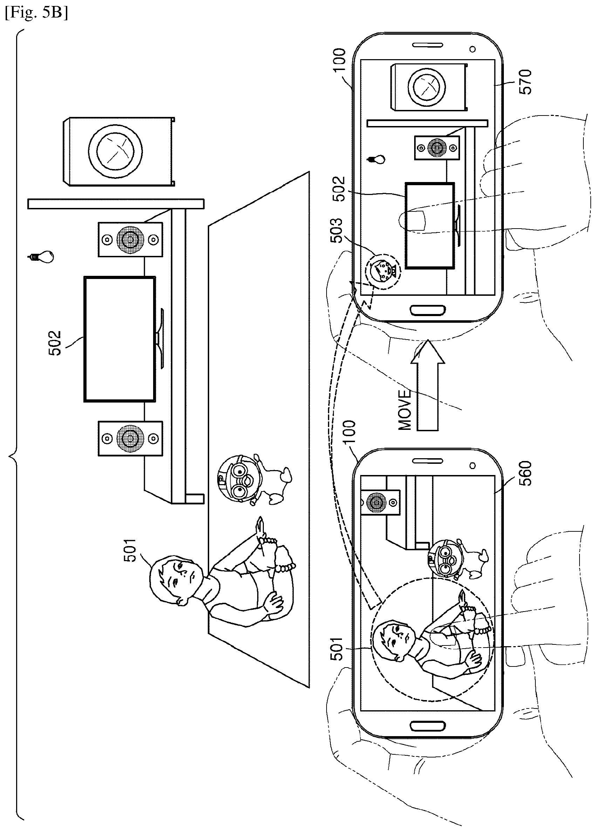

The electronic device 100 may display the objects in various forms. For example, the electronic device 100 may display actual images of the objects using a live view which shows a subject recognized through the camera. An operation of the electronic device 100 displaying objects through a live view will be described in detail below with reference to FIGS. 4, 5A, and 5B.

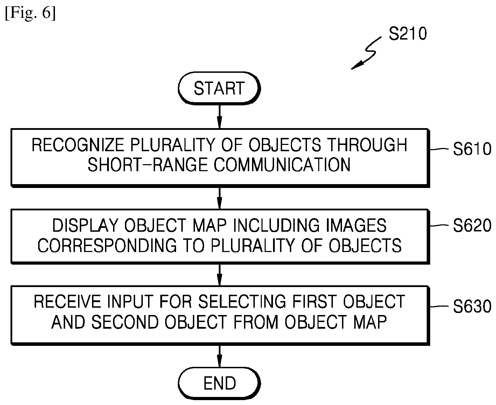

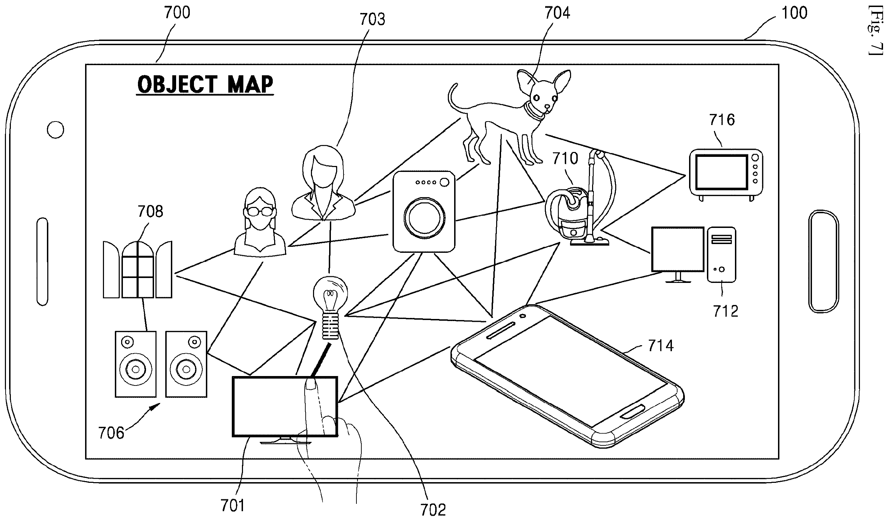

According to an exemplary embodiment, the electronic device 100 may generate an object map including virtual images (e.g., icon images, text images, etc.) corresponding to objects and display the object map on the screen. An object map will be described in detail below with reference to FIGS. 6 and 7.

According to an exemplary embodiment, the electronic device 100 may display recognized objects in a VR mode. For example, the electronic device 100 may display some of the recognized objects with actual images or live images, and display some objects with virtual images (e.g., VR images or appropriate recognizable icons).

In operation S220, the electronic device 100 may identify attributes of the first object and attributes of the second object.

Here, attributes of an object may include an identifier (ID) of the object, a type of the object, a function provided by the object, a current state of the object, etc., but are not limited thereto. Attributes of an object may vary according to a type of the object.

When an object is a device, attributes of the object may include a function provided by the object, a current state of the object, a location of the object, a communication method supported by the object, and so on. For example, when an object is a TV, attributes of the object may include a function (e.g., brightness adjustment, volume adjustment, power control, application execution, etc.) provided by the TV, a type (e.g., movie, news, game, music, etc.) of content played on the TV, a genre (e.g., action, romance, fantasy, etc.) of content, a current channel, a current volume level, a current brightness level, whether the TV is in an on or off state, whether the TV is or not in an operation error state, etc., but are not limited thereto.

When an object is a person, attributes of the object may include an ID of the person, the age of the person, the sex of the person, a channel preferred by the person, content (e.g., movie, music, etc.) preferred by the person, device information of the person, biometric data of the person, etc., but are not limited thereto. When an object is a thing, attributes of the object may include a type of the thing, the name of the thing, a function of the thing, etc., but are not limited thereto. When an object is an environment, attributes of the object may include weather, a temperature, a humidity, a season, etc., but are not limited thereto.

According to an exemplary embodiment, when the first object and the second object are devices capable of communication, the electronic device 100 may receive attribute information of the first object from the first object, and receive attribute information of the second object from the second object. The electronic device 100 may receive the attribute information of the object directly from the object through short-range communication (e.g., Bluetooth, Wi-Fi direct (WFD), etc.), or receive the attribute information of the object through a gateway.

According to an exemplary embodiment, the electronic device 100 identifies an attribute of the first object and an attribute of the second object with reference to an inter-object associated attribute table stored in a storage. For example, when identification information of the first object is acquired, the electronic device 100 searches for a first attribute corresponding to the identification information of the first object in the inter-object associated attribute table.

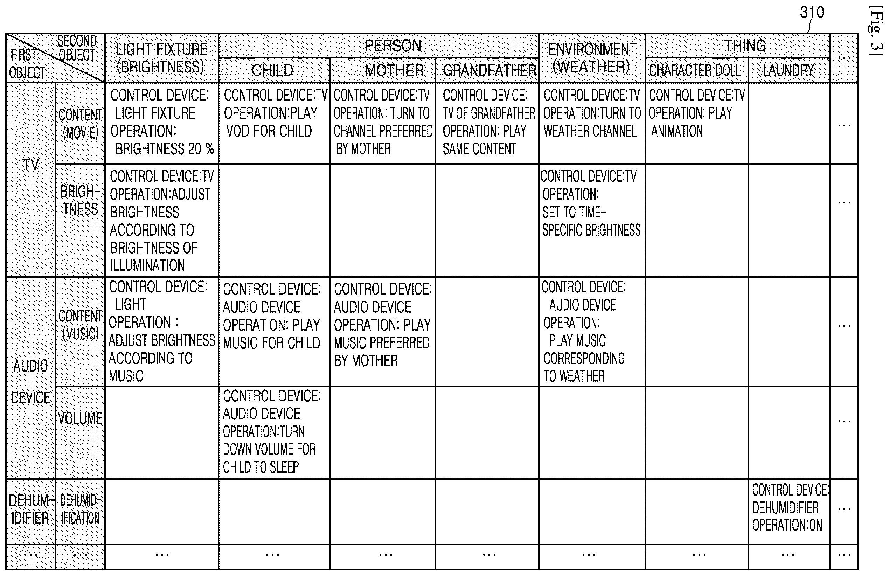

With reference to FIG. 3, an inter-object associated attribute table 310 is described. The inter-object associated attribute table 310 is a table in which control information corresponding to a combination of attributes of a plurality of objects is defined, for example, based on user's history of usage, user's preferences, or any other appropriate method. For example, the control information includes information on a device to be controlled (referred to as a control device or a target object below) among the plurality of objects and an operation to be performed (referred to as a control operation below) by the control device. For example, when the electronic device 100 refers to the inter-object associated attribute table 310, attributes of a TV are "content (movie)" and "brightness," an attribute of a light fixture is "brightness," first control information corresponding to a combination of "content" which is one of the attributes of the TV and "brightness" which is the attribute of the light fixture is "control device: the light fixture, operation: set brightness to 20%," and second control information corresponding to a combination of "brightness" which is the other of the attributes of the TV and "brightness" which is the attribute of the light fixture is "control device: the TV, operation: adjust brightness of the TV to correspond to brightness of the illumination."

Meanwhile, when each object has a plurality of attributes, the electronic device 100 selects one attribute to use for object control with reference to the inter-object associated attribute table 310. For example, when the first object and the second object are selected, the electronic device 100 selects a first attribute among a plurality of attributes of the first object and select a second attribute among a plurality of attributes of the second object with reference to the inter-object associated attribute table 310.

According to an exemplary embodiment, the electronic device 100 may select an attribute with a higher priority among a plurality of attributes corresponding to an object. In other words, a plurality of attributes of an object may have a priority order. For example, when an object is a TV and attributes of the TV include playback content, volume, brightness, etc., the electronic device 100 may select "playback content" which has the highest priority among the attributes of the TV. I.e., the attributes of the TV may be arranged in the priority order of playback content, volume, brightness, for example, based on user's history of usage, user's preferences, or any other appropriate method.

According to an exemplary embodiment, the priority order of a plurality of attributes of the first object may vary according to a type of the second object. For example, when the first object is a TV and the second object is a person, the electronic device 100 may select "playback content" among attributes of the first object. On the other hand, when the first object is a TV and the second object is a light fixture, the electronic device 100 may select "brightness" among attributes of the first object.

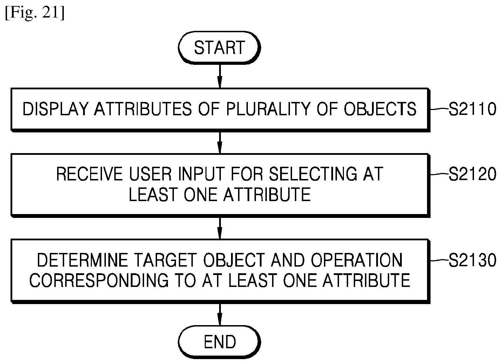

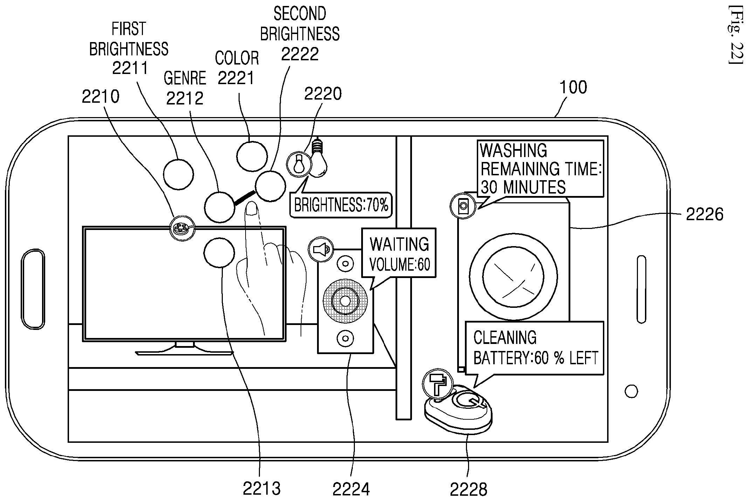

According to an exemplary embodiment, the electronic device 100 may select one of a plurality of attributes corresponding to an object based on a user input. For example, the electronic device 100 may display attributes corresponding to each of a plurality of objects together with the plurality of objects on the screen, and receive a user input for selecting one of the displayed attributes. An operation of the electronic device 100 displaying attributes corresponding to at least one object will be described in detail below with reference to FIGS. 21 and 22.

In operation S230, the electronic device 100 selects an object to control between the first object and the second object based on the attributes of the first object and the attributes of the second object. For convenience of description, an "object to be controlled" will be referred to as a "target object (or control device)."

According to an exemplary embodiment, the electronic device 100 selects a controllable object between the first object and the second object as a target object based on the attributes of the first object and the attributes of the second object. For example, when results of analyzing the attributes of the first object and the attributes of the second object indicate that the first object is a thing and the second object is a display device, the electronic device 100 may select the second object (display device) between the first object and the second object as a target object.

According to an exemplary embodiment, the electronic device 100 selects an object to control between the first object and the second object with reference to the inter-object associated attribute table 310. For example, when the first object is a TV, an attribute of the first object is "content (movie)," the second object is a light fixture, and an attribute of the second object is "brightness," the electronic device 100 may select first control information (e.g., control device: the light fixture, operation: set brightness to 20%) corresponding to a combination of "content (movie)" which is an attribute of the TV and "brightness" which is the attribute of the light fixture in the inter-object associated attribute table 310. The electronic device 100 analyzes the first control information and check that the light fixture is a target object.

In operation S240, the electronic device 100 generates an operation signal for the selected object. The operation signal is a signal which instructs a particular operation of the selected object (target object), and expressed as a control signal. For example, the electronic device 100 may determine an operation to be performed by the selected object, and generate an operation signal which instructs the determined operation. According to an exemplary embodiment, when the selected object has an infrared (IR) transmitter, the electronic device 100 may search for an IR signal corresponding to a model of the IR transmitter of the selected object, and generate an operation signal using the detected IR signal.

According to an exemplary embodiment, the electronic device 100 determines an operation (referred to as a control operation below) to be performed by the selected object based on attributes of the first object and attributes of the second object. For example, the control operation may be one of functions provided by the selected object. For example, when the target object is a TV, the control operation may be one of "channel change," "video on demand (VOD) playing," "brightness adjustment," "volume adjustment," and "application execution," but is not limited thereto. Also, when the target object is a light fixture, the control operation may be one of "brightness adjustment," "color adjustment," and "adjustment of flickering periods," but is not limited thereto.

According to an exemplary embodiment, when the second object is selected as a target object between the first object and the second object, the electronic device 100 may determine a control operation of the second object based on state information among attributes of the first object and function information among attributes of the second object. For example, when the first object is an environment and the second object (target object) is a TV, the electronic device 100 may determine "changing the current channel of the TV to a weather channel" as a control operation based on state information (e.g., current weather: rain) of the first object and function information (e.g., channel change) of the second object.

According to an exemplary embodiment, the electronic device 100 determines an operation corresponding to an attribute of the first object and an attribute of the second object based on the inter-object associated attribute table 310. For example, when the first object is a TV, an attribute of the first object is "content (movie)," the second object is a person, and an attribute of the second object is a "child," the electronic device 100 may select second control information (e.g., control device: the TV, operation: playing a VOD for children) corresponding to a combination of "content (movie)" which is an attribute of the TV and "child" which is an attribute of the person. The electronic device 100 may analyze the second control information and check that an operation to be performed by the TV is "playing a VOD for children."

According to an exemplary embodiment, the electronic device 100 may generate an operation signal according to a control protocol of the target object. For example, according to the control protocol of the target object, the electronic device 100 may generate an operation signal including a control command which is readable by the target object.

Meanwhile, according to an exemplary embodiment, the electronic device 100 may generate an operation signal based on a sequence in which the user selects the first object and the second object displayed on the screen. For example, when the user selects the first object and then the second object, the electronic device 100 may generate a first operation signal so that the first object performs a first operation, and when the user selects the second object and then the first object, the electronic device 100 may generate a second operation signal so that the first object performs a second operation. For example, when the user touches the first object (child) displayed on the screen with his or her finger and then drags the first object to the second object (audio system), the electronic device 100 may generate an operation signal which instructs the audio system to play music for children. On the other hand, when the user touches the second object (audio system) displayed on the screen with his or her finger and then drags the second object to the first object (child), the electronic device 100 may generate an operation signal which instructs the audio system to adjust the volume to level 2 for the child to sleep.

According to an exemplary embodiment, when the user selects the first object and then the second object, the electronic device 100 may generate a third operation signal for controlling the second object, and when the user selects the second object and then the first object, the electronic device 100 may generate a fourth operation signal for controlling the first object. On the other hand, when the user selects the first object and then the second object, the electronic device 100 may generate a fifth operation signal for controlling the first object, and when the user selects the second object and then the first object, the electronic device 100 may generate a sixth operation signal for controlling the second object.

For example, when the user touches a TV displayed on the screen with his or her finger and then touches a light fixture with the finger, the electronic device 100 may generate an operation signal for adjusting an illumination level of the light fixture according to content played on the TV. Also, when the user touches a light fixture displayed on the screen with his or her finger and then touches a TV with the finger, the electronic device 100 may generate an operation signal for adjusting the brightness of the TV according to an illumination level of the light fixture.

In operation S250, the electronic device 100 may transmit the generated operation signal to the selected object.

The electronic device 100 according to an exemplary embodiment transmits an operation signal, which may include a control command, to the target object through wired and/or wireless communication. For example, the electronic device 100 may transmit the operation signal to the target object using short-range communication (Bluetooth, WFD, Li-Fi, UWB, etc.) or mobile communication.

According to an exemplary embodiment, the electronic device 100 may transmit the operation signal to the target object either directly or through a repeater device (e.g., a server, a home gateway, an IoT hub, etc.). For example, when the electronic device 100 transmits the operation signal together with identification information of the target object to the repeater device, the repeater device may transfer the operation signal to the target object. According to an exemplary embodiment, the repeater device may convert the operation signal to correspond to the control protocol of the target object, and transfer the converted operation signal to the target object.

According to an example, the target object may analyze the received operation signal and perform an operation corresponding to the operation signal. For example, when an audio system receives an operation signal including an instruction to set the volume to level 3, the audio system may adjust the volume from level 10 to level 3.

An operation of the electronic device 100 receiving a user input for selecting a first object and a second object among a plurality of objects will be described in further detail below.

FIG. 4 is a flowchart illustrating a method of recognizing an object through an image sensor according to an exemplary embodiment.

For example, operations S410 and S420 of FIG. 4 may correspond to operation S210 of FIG. 2.

In operation S410, the electronic device 100 may display a plurality of objects recognized through the image sensor. For example, the electronic device 100 may display actual images of the plurality of objects using a live view which shows a subject recognized through the image sensor.

In operation S420, the electronic device 100 may receive a user input for selecting a first object and a second object among the plurality of objects.

For example, the user input for selecting the first object and the second object may be varied. For example, the user input for selecting the first object and the second object may be at least one of a touch input, a voice input, an ocular input, and a bending input, but is not limited thereto.

Throughout the specification, a "touch input" denotes a gesture, etc. made on a touch screen by a user to control the electronic device 100. For example, a touch input stated in an exemplary embodiment may be a tap, a touch and hold, a double tap, a drag, panning, a flick, a drag and drop, or so on.

"Tap" denotes the action of the user touching the screen with his or her finger or a touch tool (e.g., an electronic pen) and immediately lifting the finger or the touch tool from the screen without moving it.

"Touch and hold" denotes the action of the user touching the screen with his or her finger or a touch tool (e.g., an electronic pen) and maintaining the touch input for a threshold time (e.g., two seconds) or longer. For example, this is a case in which a difference between a touch-in time point and a touch-out time point is the threshold time (e.g., two seconds) or longer. To make the user recognize whether a touch input is a tap or a touch and hold, a feedback signal may be provided in an auditory or tactile manner when the touch input is maintained for the threshold time or longer. The threshold time may be changed according to an implemented example.

"Double tap" denotes the action of the user touching the screen two times with his or her finger or a touch tool (e.g., an electronic pen).

"Drag" denotes the action of the user touching the screen with his or her finger or a touch tool and moving the finger or the touch tool to another position in the screen while maintaining the touch. Due to a drag action, an object moves, or a panning action to be described below is performed.

"Panning" denotes the action of the user taking a drag action without selecting an object. Since a panning action does not select any object, no objects move in a page, and the page itself moves in the screen, or an object group moves in the page.

"Flick" denotes the action of the user taking a drag action at a threshold speed (e.g., 100 pixels/s) or faster using his or her finger or a touch tool. A drag (or panning) action and a flick action may be distinguished from each other based on whether a moving speed of the finger or the touch tool is the threshold speed (e.g., 100 pixels/s) or faster.

"Drag and drop" denotes the action of the user dragging an object to a position in the screen and dropping the object using his or her finger or a touch tool.

"Pinch" denotes the action of the user moving two fingers in different directions while touching the screen with the two fingers. A pinch may be a gesture for enlarging (pinch open) or reducing (pinch close) an object, and an enlargement value or a reduction value is determined according to the distance between the two fingers.

"Swipe" denotes the action of the user moving his or her finger or a touch tool in a horizontal or vertical direction by a distance while touching an object in the screen with the finger or the touch tool. A motion in a diagonal direction is not recognized as a swipe event.

According to an exemplary embodiment, the electronic device 100 may receive a drag input for connecting the first object and the second object with a line. Also, the electronic device 100 may receive an input of tapping, double tapping, or touching and holding each of the first object and the second object, but the touch input is not limited thereto.

According to an exemplary embodiment, the electronic device 100 may analyze the voice of the user and recognize identification information of the first object and identification information of the second object included in the voice of the user. Also, when the electronic device 100 includes a flexible display, the electronic device 100 may receive a bending input of bending a partial region to select the first object and the second object.

According to an exemplary embodiment, when the first object and the second object are not displayed in one screen, the user may select the first object in a first live view and select the second object in a second live view. At this time, in a partial region (e.g., an upper left portion) of the second live view, the electronic device 100 may display an icon corresponding to the first object selected in the first live view.

For example, after touching a child in a first live view, the user may move the electronic device 100, and when a second live view including a TV is displayed in the electronic device 100, the user may touch the TV. A case in which the first object and the second object are not displayed in one screen will be further described below with reference to FIG. 5B.

In operation S430, the electronic device 100 may identify attributes of the first object and attributes of the second object.

According to an exemplary embodiment, the electronic device 100 may identify the first object and the second object selected in a live view by the user through image processing. For example, through image processing of an image including the first object and the second object, the electronic device 100 may identify the first object corresponding to a first touch position as a TV, and identify the second object corresponding to a second touch position as a child.

According to an exemplary embodiment, the electronic device 100 identifies the first object and the second object selected by the user and then identify attributes of the first object and attributes of the second object, as described above with reference to operation S220 of FIG. 2.

FIGS. 5A and 5B are diagrams illustrating an operation of an electronic device receiving a user input for selecting an object according to an exemplary embodiment.

Referring to a first screen 510 of FIG. 5A, the electronic device 100 may display a live view including a TV, a light fixture, an audio device, and a washing machine. Through image processing of an image corresponding to the live view, the electronic device 100 may identify positions of the TV, the light fixture, the audio device, and the washing machine in the live view.

The electronic device 100 may mark objects selectable by the user in the live view. For example, when objects selectable by the user are the TV, the light fixture, and the audio device, the electronic device 100 may display a first icon close to the TV, a second icon close to the light fixture, and a third icon close to the audio device.

According to an exemplary embodiment, the electronic device 100 receives an input for selecting the TV and the light fixture in the live view. For example, the electronic device 100 may receive a drag input of touching and dragging the first icon displayed close to the TV to the second icon displayed close to the light fixture. By identifying a start point and an end point of the drag input, the electronic device 100 may recognize that the user has selected the TV and the light fixture.

Referring to a second screen 520, the electronic device 100 may receive an input of drawing a closed figure (e.g., a circle, a rectangle, etc.). The electronic device 100 may select an object through which the closed figure passes and an object in the closed figure. For example, when the user draws a circle passing through the TV, the light fixture, and the audio device on the live view, the electronic device 100 may recognize that the user has selected the TV, the light fixture, and the audio device.

According to an exemplary embodiment, the electronic device 100 may receive an input for selecting three or more objects and control two or more objects among the three or more objects. For example, the electronic device 100 may determine the light fixture and the audio device as target objects based on attributes of the TV, attributes of the light fixture, and attributes of the audio device, transmit a first operation signal which instructs to change illuminance according to content played on the TV to the light fixture, and transmit a second operation signal which instructs to adjust the volume according to the played content to the audio device.

For convenience of description, a case in which the electronic device 100 controls one of two recognized objects will be described as an example below.

Referring to a third screen 530, the electronic device 100 may receive an input made with an electronic pen. For example, the electronic device 100 may receive a drag input of touching and dragging the first icon displayed close to the TV with the electronic pen to the second icon displayed close to the light fixture. By checking a start point and an end point of the drag input, the electronic device 100 may recognize that the user has selected the TV and the light fixture.

Referring to a fourth screen 540, the electronic device 100 may receive an input of drawing a closed figure (e.g., a circle, a rectangle, etc.). For example, the electronic device 100 may receive an input of drawing a circle passing through the audio device and the washing machine with the electronic pen.

Referring to a fifth screen 550, the electronic device 100 may receive an ocular input for selecting the TV and the light fixture on the live view. An ocular input denotes an input of the user adjusting eye blinks, a gaze position, a moving speed of his or her eyeballs, etc. to control the electronic device 100. For example, the electronic device 100 may sense a user input of looking at the TV for three seconds or more on the live view, moving his or her eyes to the light fixture, and then looking at the light fixture for three seconds or more. The electronic device 100 may analyze the gaze positions of the user and determine that the user has selected the TV and the light fixture.

Referring to FIG. 5B, when the first object and the second object are not displayed together on one screen, the user may move the electronic device 100. In this case, the field of view of an image lens included in the electronic device 100 may be moved.

For example, when the first object is a child 501 and the second object is a TV 502, the child 501 and the TV 502 may be far apart from each other, and are not displayed together in a live view of the electronic device 100. In this case, the user may select the child 501 first in a first live view 560, move the electronic device 100, and then select the TV 502 in a second live view 570 when the TV 502 is displayed in the second live view 570. According to an exemplary embodiment, when the electronic device 100 is moved after the user selects the child 501, the electronic device 100 may display an icon 503 corresponding to the child 501 in a certain region of the screen of the electronic device 100.

Meanwhile, when a first object and a second object are not displayed together in one live view, the user may adjust the angle of view. For example, by widening the angle of view (e.g., zooming out), the user may cause the first object and the second object to be displayed together in a live view.

FIG. 6 is a flowchart illustrating a method of recognizing an object through short-range communication according to an exemplary embodiment.

In operation S610, the electronic device 100 may recognize a plurality of objects through short-range communication. For example, the electronic device 100 may search for objects within a Bluetooth communication radius using Bluetooth communication. Also, the electronic device 100 may recognize objects within a BLE communication radius by receiving BLE advertising packets broadcast by the objects through BLE communication. In various short-range communication methods besides Bluetooth and BLE communication, the electronic device 100 may recognize objects within a certain range. For example, the electronic device 100 may recognize objects using WFD, near field communication (NFC), Li-Fi, or so on.

According to an exemplary embodiment, the electronic device 100 may determine distances between a plurality of objects and the electronic device 100 based on the intensities of communication signals. For example, when the intensity of a communication signal from a first object is greater than the intensity of a communication signal from a second object, the electronic device 100 may determine that the first object is closer than the second object. Also, the electronic device 100 may calculate a distance corresponding to the intensity of a communication signal.

According to an exemplary embodiment, when the electronic device 100 is connected to a home network, the electronic device 100 may receive information (e.g., object identification values, current states of objects, locations, etc.) on the objects connected to the home network.

In operation S620, the electronic device 100 may display an object map including images which correspond to the plurality of objects on a one-to-one basis.

The object map may be a map which shows images of objects selectable by the user among objects around the electronic device 100. For example, the images corresponding to the plurality of objects on a one-to-one basis may be icon images, thumbnail images, signs, figures, text images, etc., but are not limited thereto.

According to an exemplary embodiment, the object map may be implemented in various forms. For example, the object map may be in a form which shows stored object images on a plan view or a form which shows images of devices around the electronic device 100 on a magnetic map, but is not limited thereto.

According to an exemplary embodiment, the images corresponding to the objects may be disposed according to distances from the electronic device 100. For example, when the electronic device 100 is closer to the TV than the audio device, the TV may be in front of the audio device in the object map.

In operation S630, the electronic device 100 receives a user input for selecting the first object and the second object among the plurality of objects.

Here, the user input for selecting the first object and the second object may be varied. For example, the user input for selecting the first object and the second object may be at least one of a touch input, a voice input, an ocular input, and a bending input, but is not limited thereto.

According to an exemplary embodiment, the electronic device 100 may receive a drag input for connecting the first object and the second object with a line on the object map. Also, the electronic device 100 may receive an input of tapping, double tapping, or touching and holding each of the first object and the second object, but the touch input is not limited thereto.

According to an exemplary embodiment, the electronic device 100 may analyze the voice of the user and recognize identification information of the first object and identification information of the second object included in the voice of the user. Also, when the electronic device 100 includes a flexible display, the electronic device 100 may receive a bending input of bending a partial region to select the first object and the second object.

FIG. 7 is a diagram illustrating an object map according to an exemplary embodiment.

According to an exemplary embodiment, the electronic device 100 may display an object map 700 including virtual images of surrounding objects. For example, the object map 700 may include images (e.g., a TV icon 701, a light fixture icon 702, a dog 704, an audio device icon 706, a window 708, a vacuum cleaner icon 710, a computer icon 712, an image 714 of the electronic device 100, and a microwave icon 716) of objects recognized, e.g., sensed, through short-range communication.

According to an exemplary embodiment, when a mobile phone is recognized, the electronic device 100 may display a facial image of the mobile phone user in the object map 700. For example, when a phone of a first user (e.g., mother) is recognized, a facial image 703 of the first user (e.g., mother) may be displayed in the object map 700.

According to an exemplary embodiment, the electronic device 100 may display images of predefined objects in the object map 700 even when the predefined objects are not recognized through short-range communication. For example, when the user makes a setting so that images of respective family members are displayed in the object map 700, the electronic device 100 may display the facial image 703 of the first user (e.g., mother), a facial image of a second user (e.g., daughter), an image of a puppy, etc. in the object map 700. Also, according to an exemplary embodiment, the electronic device 100 may always display a window icon 708 representing environments in the object map 700.

According to an exemplary embodiment, the user may check selectable objects through the object map 700 and select two objects among the selectable objects. For example, the electronic device 100 may receive a drag input of touching and dragging the TV icon 701 to the light fixture icon 702. The electronic device 100 may recognize that the user has selected the TV and the light fixture using location information of object icons included in the object map 700.

An operation of the electronic device 100 controlling one of a first object and a second object based on an attribute of the first object and an attribute of the second object will be described in detail below.

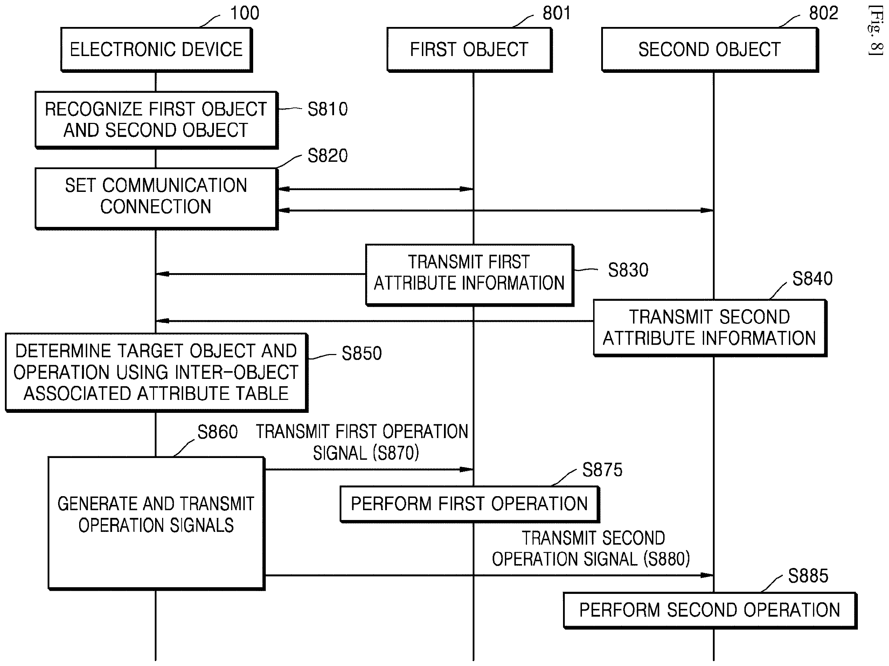

FIG. 8 is a sequence diagram illustrating a method for an electronic device to control an object according to an exemplary embodiment when all of a plurality of objects are controllable devices. In FIG. 8, a case in which both a first object 801 and a second object 802 are devices capable of communicating with the electronic device 100 will be described as an example.

In operation S810, the electronic device 100 recognizes the first object 801 and the second object 802.

According to an exemplary embodiment, the electronic device 100 recognizes the first object 801 and the second object 802 existing outside the electronic device 100 using the image sensor or the camera. Also, the electronic device 100 may recognize the first object 801 and the second object 802 through short-range communication.

Meanwhile, when three or more objects are recognized through the camera or the communication interface, the electronic device 100 may select the first object 801 and the second object 802 among the recognized objects based on a user input.

Since operation S810 corresponds to operation S210 of FIG. 2, the detailed description thereof will not be reiterated.

In operation S820, the electronic device 100 may set a communication connection with the first object 801 and the second object 802. For example, when the electronic device 100 is not connected to the first object 801 and the second object 802 for communication, the electronic device 100 may establish a first communication link with the first object 801 and establish a second communication link with the second object 802.

The electronic device 100 may establish the first communication link and the second communication link by exchanging identification information (e.g., device IDs, media access control (MAC) addresses, device names, etc.), function information (e.g., support for BLE, Bluetooth, Ant+, Wi-Fi, and NFC), information on a preferred communication method (e.g., Bluetooth), etc. with the first object 801 and the second object 802.

According to an exemplary embodiment, the first communication link and the second communication link may include at least one of a Bluetooth network, a BLE network, a wireless local area network (WLAN and/or Wi-Fi network), a WFD network, a UWB network, and a mobile communication network (e.g., a second generation (2G), 3G, 4G, 5G, etc., network), but are not limited thereto.

In operation S830, the first object 801 transmits first attribute information to the electronic device 100. For example, the first object 801 transmits the first attribute information (e.g., current state information of the first object 801, information on a function supported by the first object 801, etc.) to the electronic device 100 through the first communication link.

According to an exemplary embodiment, the first object 801 may periodically transmit the first attribute information to the electronic device 100, or may transmit the first attribute information to the electronic device 100 when a request is received from the electronic device 100.

In operation S840, the second object 802 may transmit second attribute information to the electronic device 100. For example, the second object 802 may transmit the second attribute information (e.g., current state information of the second object 802, information on a function supported by the second object 802, etc.) to the electronic device 100 through the second communication link.

According to an exemplary embodiment, the second object 802 may periodically transmit the second attribute information to the electronic device 100, or may transmit the second attribute information to the electronic device 100 when a request is received from the electronic device 100.

In operation S850, the electronic device 100 may determine a target object and an operation using an inter-object associated attribute table.

According to an exemplary embodiment, the electronic device 100 selects a target object to control between the first object 801 and the second object 802 with reference to the inter-object associated attribute table 310. Also, the electronic device 100 may determine an operation corresponding to an attribute of the first object 801 and an attribute of the second object 802. For example, when the first object 801 is a TV, an attribute of the first object 801 is "content (movie)," the second object 802 is a light fixture, and an attribute of the second object 802 is "brightness," the electronic device 100 may select first control information (e.g., control device: the light fixture, operation: set brightness to 20 %) corresponding to a combination of "content (movie)" which is the attribute of the TV and "brightness" which is the attribute of the light fixture in the inter-object associated attribute table 310. The electronic device 100 may analyze the first control information and check that the light fixture is a target object and an operation to be performed by the light fixture is "to set a brightness level to 20 %."

In operation S860, the electronic device 100 may generate and transmit an operation signal. For example, when the first object 801 is determined as a target object, the electronic device 100 may transmit a first operation signal corresponding to the first object 801 to the first object 801 in operation S870. In operation S875, the first object 801 may perform a first operation corresponding to the first operation signal.

When the second object 802 is determined as a target object, the electronic device 100 may transmit a second operation signal corresponding to the second object 802 to the second object 802 in operation S880. In operation S885, the second object 802 may perform a second operation corresponding to the second operation signal.

According to an exemplary embodiment, a sequence of some operations may be varied. For example, operation S820 may be performed before operation S810.

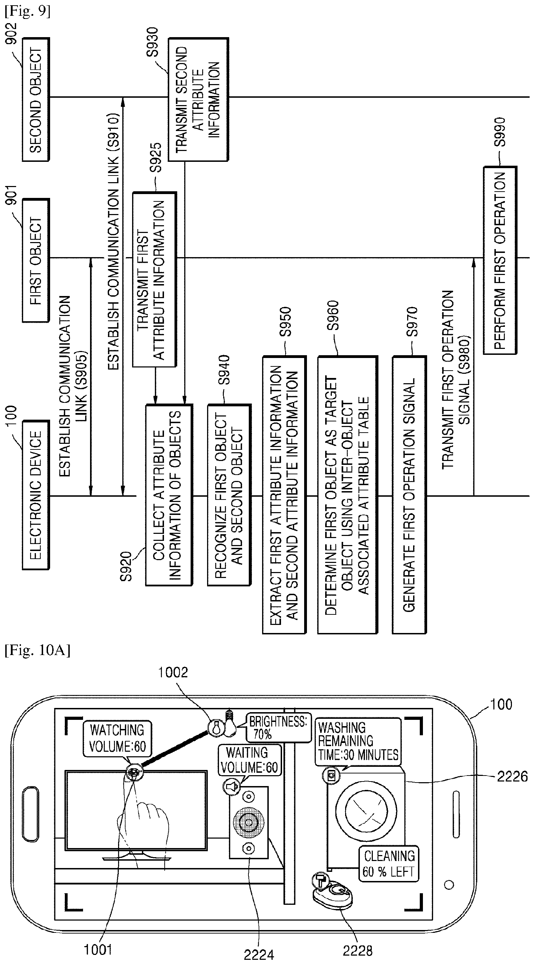

A case in which the electronic device 100 collects attribute information of objects before the user selects an object to control will be described in detail below with reference to FIG. 9.

FIG. 9 is a sequence diagram illustrating a method for an electronic device to control one object based on attributes of a plurality of objects according to an exemplary embodiment when the electronic device is connected to the plurality of objects for communication. In FIG. 9, a case in which both a first object 901 and a second object 902 are devices capable of communicating with the electronic device 100 will be described as an example.

The electronic device 100 may establish a first communication link with the first object 901 in operation S905, and establish a second communication link with the second object 902 in operation S910.

According to an exemplary embodiment, the electronic device 100 may be connected to the first object 901 and the second object 902 directly through short-range communication (e.g., Bluetooth, Wi-Fi, etc.) or indirectly through a home gateway.

Since operations S905 and S910 correspond to operation S820 of FIG. 8, the detailed description thereof will not be reiterated.

In operation S920, the electronic device 100 collect attribute information of the objects. For example, in operation S925, the electronic device 100 receives first attribute information from the first object 901 through the first communication link. For example, the first attribute information includes one or more of identification information, state information, and function information of the first object 901.

In operation S930, the electronic device 100 receives second attribute information from the second object 902 through the second communication link. For example, the second attribute information includes one or more of identification information, state information, and function information of the second object 902.

According to an exemplary embodiment, the electronic device 100 may receive first attribute information or second attribute information from the first object 901 or the second object 902 at certain intervals (e.g., 10 minutes). Also, when a particular event occurs, the electronic device 100 may receive first attribute information or second attribute information from the first object 901 or the second object 902. For example, the particular event may include an event in which power of the first object 901 or the second object 902 is turned on, an event in which the first object 901 or the second object 902 establishes a communication link with the electronic device 100, an event in which a state of the first object 901 or the second object 902 is changed, etc., but is not limited thereto.

According to an exemplary embodiment, the electronic device 100 may update an attribute information database (DB) of objects based on the new first attribute information or the new second attribute information received from the first object 901 or the second object 902.

In operation S940, the electronic device 100 recognizes the first object 901 and the second object 902.

According to an exemplary embodiment, the electronic device 100 may recognize the first object 901 and the second object 902 existing outside the electronic device 100 using the image sensor or the camera. Also, the electronic device 100 may recognize the first object 901 and the second object 902 using short-range communication.

Meanwhile, when three or more objects are recognized through the camera or the communication interface, the electronic device 100 may select the first object 901 and the second object 902 among the recognized objects based on a user input. Since operation S940 corresponds to operation S210 of FIG. 2, the detailed description thereof will not be reiterated.

In operation S950, the electronic device 100 may extract the first attribute information and the second attribute information.

According to an exemplary embodiment, the electronic device 100 may search for first attribute information corresponding to the identification information of the first object 901 in the attribute information DB which stores the collected attribute information of objects. Also, the electronic device 100 may search the attribute information DB for second attribute information corresponding to the identification information of the second object 902.

In operation S960, using an inter-object associated attribute table, the electronic device 100 determines the first object 901 as a target object to control. According to an exemplary embodiment, the inter-object associated attribute table may be included in the attribute information DB or may be separate from the attribute information DB.

According to an exemplary embodiment, the electronic device 100 checks first control information corresponding to the first attribute information of the first object 901 and the second attribute information of the second object 902 with reference to the inter-object associated attribute table 310. When the first object 901 has been defined as a control device in the first control information, the electronic device 100 selects the first object 901 as a target object.

In operation S970, the electronic device 100 may generate a first operation signal.

According to an exemplary embodiment, the electronic device 100 determines an operation corresponding to the first attribute information of the first object 901 and the second attribute information of the second object 902. Also, the electronic device 100 generates a first operation signal corresponding to the determined operation. The first operation signal may be generated based on control protocol information of the first object 901.

Since operation S970 corresponds to operation S240 of FIG. 2, the detailed description thereof will not be reiterated.

In operation S980, the electronic device 100 may transmit the first operation signal to the first object 901. For example, the electronic device 100 may transmit the first operation signal to the first object 901 through the first communication link.

In operation S990, the first object 901 may perform a first operation according to the first operation signal. When the first operation is finished, the first object 901 may transmit a completion message to the electronic device 100.

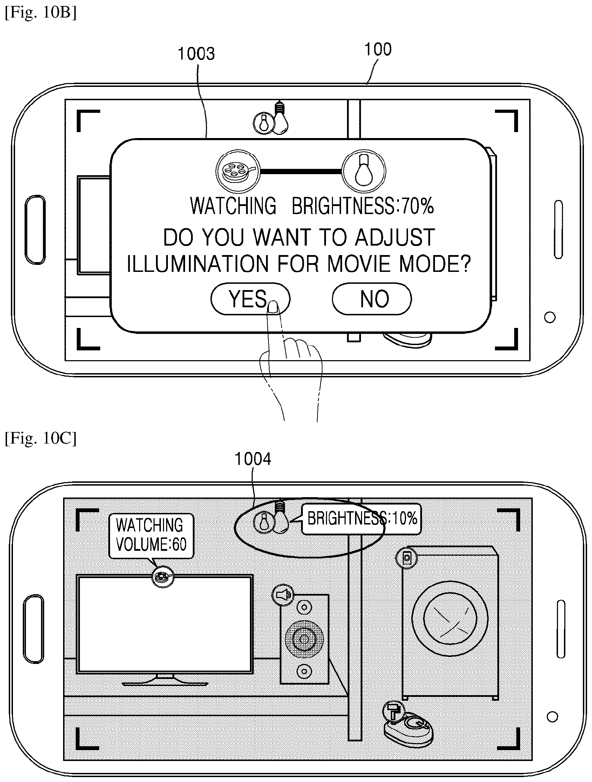

An exemplary embodiment in which the electronic device 100 controls a particular object based on attribute information of a plurality of objects will be described in detail below with reference to FIGS. 10A, 10B and 10C.

FIGS. 10A, 10B and 10C are diagrams illustrating an operation of an electronic device controlling a light fixture based on an attribute of a TV and an attribute of the light fixture according to an exemplary embodiment.

Referring to FIG. 10A, the electronic device 100 displays a live view including a plurality of objects. The electronic device 100 identifies the plurality of objects included in the live view and displays indicators (e.g., icons) indicating the plurality of identified objects around the corresponding objects. Also, the electronic device 100 may display state information of each of the plurality of objects in the live view.

For example, the electronic device 100 may identify a TV 1001, a light fixture 1002, an audio device 2224, a washing machine 2226, and a robot vacuum cleaner 2228. Also, the electronic device 100 may display state information (e.g., Watching, Volume: 60) of the TV 1001, state information (e.g., Brightness: 70 %) of the light fixture 1002, state information (e.g., Waiting, Volume: 60) of the audio device 2224, state information (e.g., Washing, Remaining time: 30 minutes) of the washing machine 2226, state information (e.g., Cleaning, Battery: 60 % left) of the robot vacuum cleaner 2228, and so on.

When the user wants to view a movie played on the TV 1001 in a dark environment, the electronic device 100 may receive a user input for selecting the TV 1001 and the light fixture 1002 through the live view. For example, the electronic device 100 may receive a drag input of touching and dragging the TV 1001 to the light fixture 1002.

In this case, the electronic device 100 identifies an attribute (e.g., playing movie content) of the TV 1001 and an attribute (e.g., brightness: 70%) of the light fixture 1002, and determine a target object and target operation with reference to the inter-object associated attribute table 310. For example, the electronic device 100 determines the light fixture 1002 as a target object, and determine "brightness: set to 10 %" as a target operation.

Referring to FIG. 10B, the electronic device 100 may display a pop-up window 1003 which requests confirmation of the target object (light fixture 1002) and the target operation ("brightness: set to 10%") determined based on the attribute of the TV 1001 and the attribute of the light fixture 1002. For example, the electronic device 100 may display the pop-up window including the message "Do you want to adjust illumination for the movie mode?".

Referring to FIG. 10C, when the user selects "YES" in the pop-up window, the electronic device 100 generates an operation signal which instructs to set a brightness level to 10 %. Also, the electronic device 100 transmits the generated operation signal to the light fixture. According to the received operation signal, the light fixture may adjust the brightness level from 70 % to 10 % (reference numeral 1004).

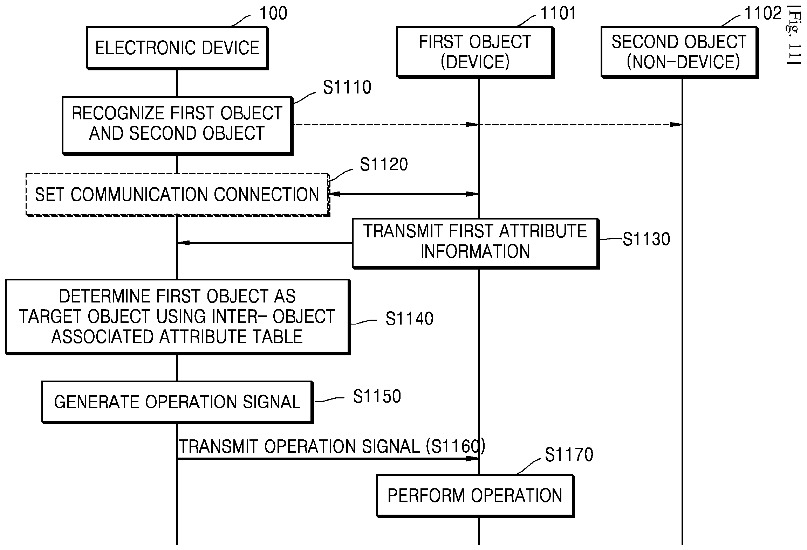

FIG. 11 is a sequence diagram illustrating a method for an electronic device to control an object according to an exemplary embodiment when only one of a plurality of objects recognized by the electronic device is a controllable device. In FIG. 11, a case in which a first object 1101 is a controllable device and a second object 1102 is an uncontrollable thing will be described as an example.

In operation S1110, the electronic device 100 may recognize the first object 1101 and the second object 1102.

According to an exemplary embodiment, the electronic device 100 may recognize the first object 1101 and the second object 1102 existing outside the electronic device 100 using the image sensor or the camera. Also, the electronic device 100 may recognize at least one among the first object 1101 and the second object 1102 through short-range communication.

Meanwhile, when three or more objects are recognized through the camera or the communication interface, the electronic device 100 may select the first object 1101 and the second object 1102 among the recognized objects based on a user input.

Since operation S1110 corresponds to operation S210 of FIG. 2, the detailed description thereof will not be reiterated.

In operation S1120, the electronic device 100 may set a communication connection with the first object 1101.

For example, when the electronic device 100 is not connected to the first object 1101 for communication, the electronic device 100 may request a communication connection from the first object 1101 to establish a communication link.

According to an exemplary embodiment, the communication link may include at least one of a Bluetooth network, a BLE network, a WLAN (Wi-Fi network), a WFD network, a UWB network, and a mobile communication network (e.g., a 2G, 3G, 4G, 5G, etc. network), but is not limited thereto.

Meanwhile, the second object 1102 may be a thing (e.g., a person or an environment), and thus the electronic device 100 is unable to establish a communication link with the second object 1102.

In operation S1130, the first object 1101 may transmit first attribute information to the electronic device 100.

For example, the first object 1101 may transmit the first attribute information (e.g., current state information of the first object 1101, information on a function supported by the first object 1101, etc.) to the electronic device 100 through the communication link.

According to an exemplary embodiment, the first object 1101 may periodically transmit the first attribute information to the electronic device 100, or may transmit the first attribute information to the electronic device 100 when a request is received from the electronic device 100.

Meanwhile, since the second object 1102 is a thing (or a person or an environment), the electronic device 100 is unable to receive second attribute information of the second object 1102 from the second object 1102. Therefore, according to an exemplary embodiment, the electronic device 100 may acquire second attribute information of the second object 1102 from the storage. For example, the electronic device 100 may search second attribute information corresponding to identification information of the second object 1102 in the attribute information DB stored in the storage.

In operation S1140, the electronic device 100 may determine the first object 1101 as a target object using an inter-object associated attribute table.

For example, since the first object 1101 is a controllable device and the second object 1102 is an uncontrollable thing, the electronic device 100 may select the first object 1101 between the first object 1101 and the second object 1102 as a target to control with reference to the inter-object associated attribute table 310.

In operation S1150, the electronic device 100 generates an operation signal for the first object 1101.

According to an exemplary embodiment, the electronic device 100 determines an operation corresponding to the first attribute information of the first object 1101 and the second attribute information of the second object 1102. Then, the electronic device 100 generates an operation signal corresponding to the determined operation. The operation signal may be generated based on control protocol information of the first object 1101.

Since operation S1150 corresponds to operation S240 of FIG. 2, the detailed description thereof will not be reiterated.

In operation S1160, the electronic device 100 transmits the operation signal to the first object 1101. For example, the electronic device 100 may transmit the operation signal to the first object 1101 through the pre-established short-range communication link.

In operation S1170, the first object 1101 may perform an operation corresponding to the operation signal. According to an exemplary embodiment, when the operation is finished, the first object 1101 may transmit a completion message to the electronic device 100.

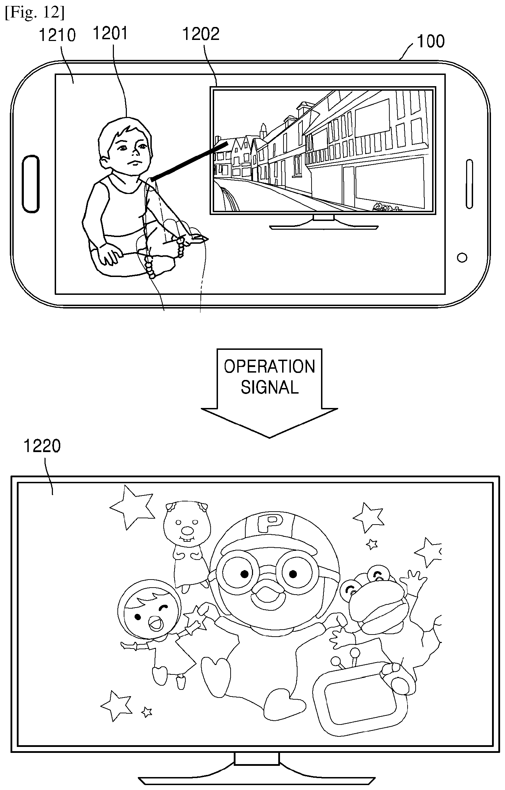

An exemplary embodiment in which the electronic device 100 controls the first object 1101 will be described in detail below with reference to FIGS. 12 to 14.

FIG. 12 is a diagram illustrating an operation of an electronic device controlling a TV based on an attribute of a person and an attribute of the TV according to an exemplary embodiment.

Referring to a screen 1210 of FIG. 12, the electronic device 100 may display a live view including an image in which a person 1201 is sitting beside a TV 1202. For example, the electronic device 100 may identify the person 1201 and the TV 1202 displayed in the live view through image processing technology.

The electronic device 100 may receive a drag input for connecting an image of the person 1201 and an image of the TV 1202. The electronic device 100 may identify an attribute (e.g., a child) of the person 1201 and an attribute (e.g., content) of the TV 1202.

In the inter-object associated attribute table 310, the electronic device 100 may search for control information (e.g., control device: the TV, operation: playing a VOD for children) corresponding to a combination of "content" which is the attribute of the TV 1202 and "child" which is the attribute of the person 1201. By analyzing the control information, the electronic device 100 may determine the TV 1202 as a target object and check that an operation to be performed by the TV is "playing a VOD for children."

Referring to FIG. 12, the electronic device 100 may generate an operation signal including a control command which instructs to "play a VOD for children." Then, the electronic device 100 may transmit the generated operation signal to the TV 1220 through short-range communication.

Based on the operation signal received from the electronic device 100, the TV 1220 may search for or play VOD content for children (e.g., animation content).

According to an exemplary embodiment, without going through a complex procedure, the user may cause VOD content for children to be played on the TV 1220 by connecting the child and the TV 1220 displayed in the live view of the electronic device 100.

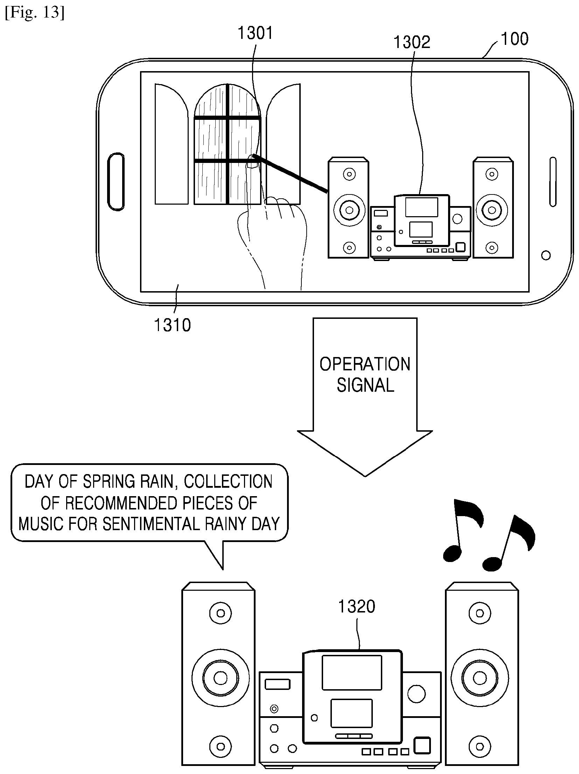

FIG. 13 is a diagram illustrating an operation of an electronic device controlling an audio system based on an attribute of surroundings and an attribute of the audio system according to an exemplary embodiment.

Referring to a screen 1310 of FIG. 13, the electronic device 100 may display a live view including an image in which the rain is shown outside a window 1301 and an audio system 1302 is located next to the window 1301. For example, the electronic device 100 may identify the window 1301 and the audio system 1302 displayed in the live view through image processing technology.

The electronic device 100 may receive a drag input for connecting an image of the window 1301 and an image of the audio system 1302. The electronic device 100 may identify an attribute (weather) of the window 1301 and an attribute (music content) of the audio system 1302. For example, when the user touches the window 1301, the electronic device 100 may check the weather (rain) using a weather application. Also, the electronic device 100 may recognize rain drops falling outside the window 1301 through image processing technology.

In the inter-object associated attribute table 310, the electronic device 100 may search for control information (e.g., control device: the audio system, operation: playing music suited to the weather) corresponding to a combination of "weather: rain" which is the attribute of the window 1301 and "music content" which is the attribute of the audio system 1302. By analyzing the control information, the electronic device 100 may determine the audio system 1302 as a target object and check that an operation to be performed by the audio system is "playing music suited to the weather."

Referring to FIG. 13, the electronic device 100 may generate an operation signal including a control command which instructs to "play recommendable music good to hear on a rainy day." Then, the electronic device 100 may transmit the generated operation signal to the audio system 1320 through short-range communication.

When no music files corresponding to "recommendable music good to hear on a rainy day" are stored in the audio system 1320, the audio system 1320 may search a music server for "recommendable music good to hear on a rainy day" and play the music.

Also, when no music files corresponding to "recommendable music good to hear on a rainy day" are stored in the audio system 1320, the electronic device 100 may transmit a music file corresponding to "recommendable music good to hear on a rainy day" to the audio system 1320. For example, the music file may have been stored in the storage of the electronic device 100 or may be searched for in the music server in real time.

According to an exemplary embodiment, the audio system 1320 may download and play a music file, or may play a music file in a streaming fashion.

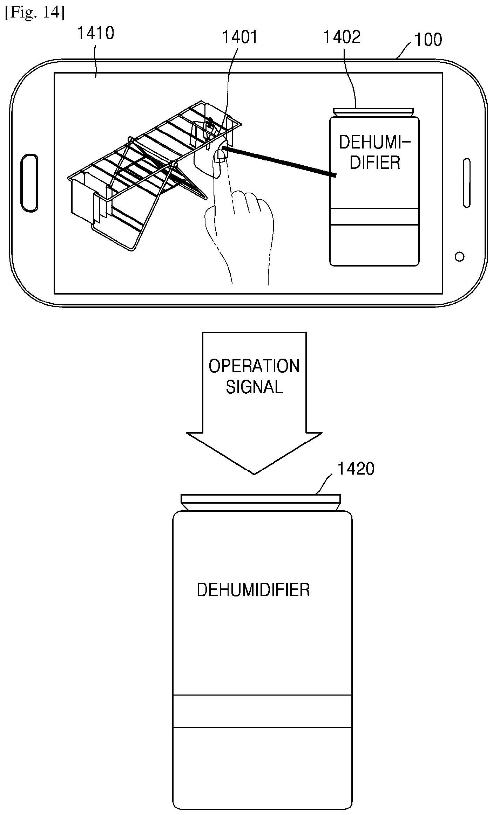

FIG. 14 is a diagram illustrating an operation of an electronic device controlling a dehumidifier based on an attribute of a thing and an attribute of the dehumidifier according to an exemplary embodiment.

Referring to a screen 1410 of FIG. 14, the electronic device 100 may display a live view including a drying rack 1401 and a dehumidifier 1402. For example, the electronic device 100 may identify the drying rack 1401 and the dehumidifier 1402 included in the live view through image processing technology.

The electronic device 100 may receive a drag input for connecting an image of the drying rack 1401 and an image of the dehumidifier 1402. The electronic device 100 may identify an attribute (e.g., laundry) of the drying rack 1401 and an attribute (e.g., dehumidification) of the dehumidifier 1402.

In the inter-object associated attribute table 310, the electronic device 100 may search for control information (e.g., control device: the dehumidifier, operation: power on) corresponding to a combination of "laundry" which is the attribute of the drying rack 1401 and "dehumidification" which is the attribute of the dehumidifier 1402. By analyzing the control information, the electronic device 100 may determine the dehumidifier 1402 as a target object and check that an operation to be performed by the dehumidifier 1420 is "activating the dehumidification function."

Referring to FIG. 14, the electronic device 100 may generate an operation signal including a control command which instructs to "activate the dehumidification function." Then, the electronic device 100 may transmit the generated operation signal to the dehumidifier 1420 through short-range communication.

Based on the operation signal received from the electronic device 100, the dehumidifier 1420 may turn on the power and perform the dehumidification function.

According to an exemplary embodiment, without going through a complex procedure, the user may cause the dehumidifier 1420 to operate by connecting the image of the drying rack 1401 and the image of the dehumidifier 1402 displayed in the live view of the electronic device 100.

FIG. 15 is a sequence diagram illustrating a method for an electronic device to control an additional object according to an exemplary embodiment when all of a plurality of objects are recognized by the electronic device as uncontrollable objects. In FIG. 15, a case in which both a first object 1501 and a second object 1502 are uncontrollable objects will be described as an example.

In operation S1510, the electronic device 100 recognizes the first object 1501 and the second object 1502.

According to an exemplary embodiment, the electronic device 100 recognizes the first object 1501 and the second object 1502 existing outside the electronic device 100 using the image sensor or the camera. Also, the electronic device 100 may recognize at least one among the first object 1501 and the second object 1502 through short-range communication.

Meanwhile, when three or more objects are recognized through the camera or the communication interface, the electronic device 100 may select the first object 1501 and the second object 1502 from among the recognized objects based on a user input.

Since operation S1510 corresponds to operation S210 of FIG. 2, the detailed description thereof will not be reiterated.

In operation S1520, the electronic device 100 may determine a third object as a target object using the inter-object associated attribute table 310.

For example, when the first object 1501 and the second object 1502 are uncontrollable objects, the electronic device 100 is unable to select a target object from the first object 1501 and the second object 1502. Therefore, the electronic device 100 may select a controllable third object based on an attribute of the first object 1501 and an attribute of the second object 1502.

In operation SI530, the electronic device 100 may determine whether the third object determined as the target object is an external device 1503 existing outside the electronic device 100 or the electronic device 100 itself.

In operation S1540, the electronic device 100 may generate an operation signal to transmit to the external device 1503.

The electronic device 100 may determine an operation of the external device 1503 based on the attribute of the first object 1501 and the attribute of the second object. Then, the electronic device 100 may generate an operation signal corresponding to the determined operation. The operation signal may be generated based on control protocol information of the external device 1503.

In operation S1550, when the third object determined as the target object is the external device 1503, the electronic device 100 may establish a communication link with the external device 1503.

For example, when the electronic device 100 is not connected to the external device 1503 for communication, the electronic device 100 may request a communication connection from the external device 1503 to establish a communication link. According to an exemplary embodiment, the communication link may include at least one of a Bluetooth network, a BLE network, a WLAN (Wi-Fi network), a WFD network, a UWB network, and a mobile communication network (e.g., a 2G, 3G, 4G, 5G, etc. network), but is not limited thereto.

According to an exemplary embodiment, the electronic device 100 may be connected to the external device 1503 directly through short-range communication (e.g., Bluetooth, Wi-Fi, etc.) or indirectly through a home gateway.

Meanwhile, when the electronic device 100 has been connected to the external device 1503 for communication in advance, operation S1550 may be omitted.

In operation S1560, the electronic device 100 may transmit the operation signal to the external device 1503. For example, the electronic device 100 may transmit the operation signal to the external device 1503 through a pre-established short-range communication link.

In operation S1570, the external device 1503 may perform the operation corresponding to the operation signal. According to an exemplary embodiment, when performing the operation, the external device 1503 may transmit an operation start message to the electronic device 100.

In operations S1540 and S1580, when the third object determined as the target object is not the external device 1503, the electronic device 100 may perform the determined operation. For example, the electronic device 100 may perform the operation determined based on the attribute of the first object 1501 and the attribute of the second object 1502 by itself without generating the operation signal for the external device 1503.

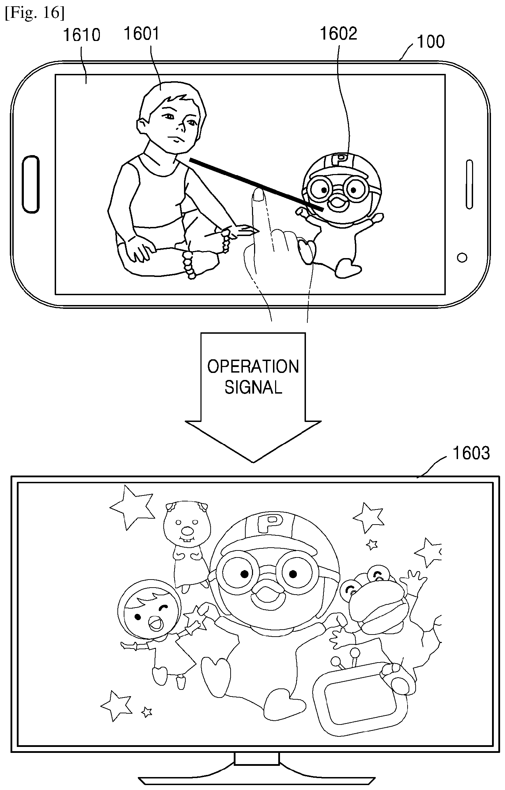

An exemplary embodiment in which the electronic device 100 controls a third object will be described in detail below with reference to FIGS. 16 to 20.

FIG. 16 is a diagram illustrating an operation of an electronic device controlling a TV based on an attribute of a person and an attribute of a doll according to an example that does not form a part of the claimed invention. In FIG. 16, a case in which a TV 1603 is an external device existing outside the electronic device 100 will be described as an example.

Referring to a screen 1610 of FIG. 16, the electronic device 100 may display a live view including an image in which a person 1601 plays with a doll 1602. For example, the electronic device 100 may identify the person 1601 and the doll 1602 displayed in the live view through image processing technology.

The electronic device 100 may receive a drag input for connecting an image of the person 1601 and an image of the doll 1602. The electronic device 100 may identify an attribute (e.g., age: child) of the person 1601 and an attribute (e.g., character) of the doll 1602.

In the inter-object associated attribute table 310, the electronic device 100 may search for control information (e.g., control device: the TV, operation: playing animation content in which the character appears) corresponding to a combination of "child" which is the attribute of the person 1601 and "character" which is the attribute of the doll 1602. By analyzing the control information, the electronic device 100 may determine the TV 1603 as a target object and check that an operation to be performed by the TV 1603 is "playing animation content in which the character appears."

Referring to FIG. 16, when the doll 1602 is a doll of a first character, the electronic device 100 may generate an operation signal including a control command which instructs to "play animation content in which the first character appears." Then, the electronic device 100 may transmit the generated operation signal to the TV 1603 through short-range communication.

Based on the operation signal received from the electronic device 100, the TV 1603 may play animation content in which the first character appears.

When no animation content in which the first character appears is stored in the TV 1603, the TV 1603 may search a content providing server for the animation content and play the animation content. Alternatively, the electronic device 100 may transmit the animation content in which the first character appears together with the operation signal.

According to an exemplary embodiment, without going through a complex procedure, the user may simply play animation content in which the doll 1602 of the child appears on the TV 1603.

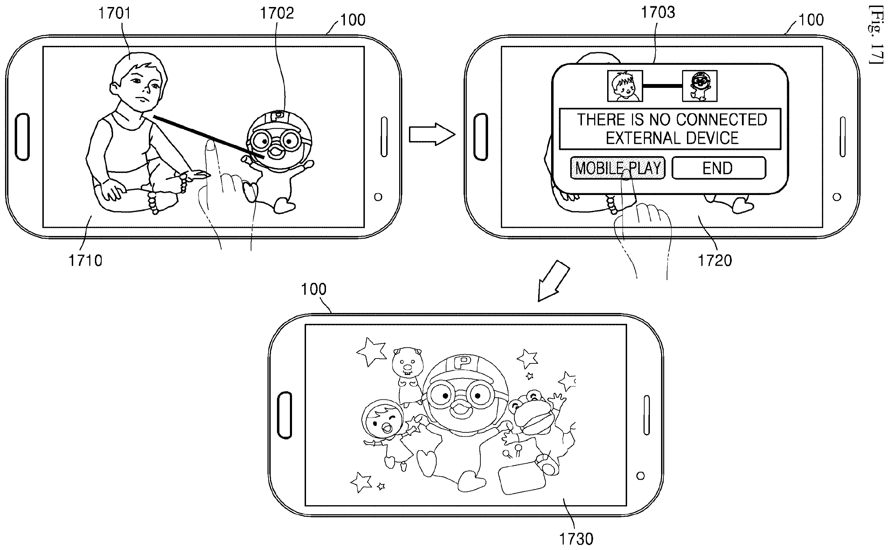

FIG. 17 is a diagram illustrating an operation of an electronic device playing content based on an attribute of a person and an attribute of a doll recognized by the electronic device according to an example that does not form a part of the claimed invention. In FIG. 17, a case in which the electronic device 100 is a mobile phone and a TV is an external device will be described as an example.

Referring to a screen 1710 of FIG. 17, the electronic device 100 may display a live view including an image in which a person 1701 plays with a doll 1702. For example, the electronic device 100 may identify the person 1701 and the doll 1702 displayed in the live view through image processing technology.

The electronic device 100 may receive a drag input for connecting an image of the person 1701 and an image of the doll 1702. The electronic device 100 may identify an attribute (e.g., age: child) of the person 1701 and an attribute (e.g., character) of the doll 1702.

In the inter-object associated attribute table 310, the electronic device 100 may search for control information (e.g., control device: a TV, operation: playing animation content in which the character appears) corresponding to a combination of "child" which is the attribute of the person 1701 and "character" which is the attribute of the doll 1702. By analyzing the control information, the electronic device 100 may determine a TV as a target object and check that an operation to be performed by the TV is "playing animation content in which the character appears."

Referring to a screen 1720 of FIG. 17, the electronic device 100 may attempt to establish a communication link with a TV. However, when the user is playing outdoors, the electronic device 100 may fail to connect to a TV for communication.

The electronic device 100 may display a confirmation window 1703 for playing animation content in which the character appears by itself.

Referring to a screen 1730 of FIG. 17, when the user selects "Mobile play" in the confirmation window 1703, the electronic device 100 may play animation content in which the character appears by itself.

According to an example that does not form a part of the claimed invention, the electronic device 100 may play animation content stored in the storage, or may search the content providing server for animation content and play the animation content.

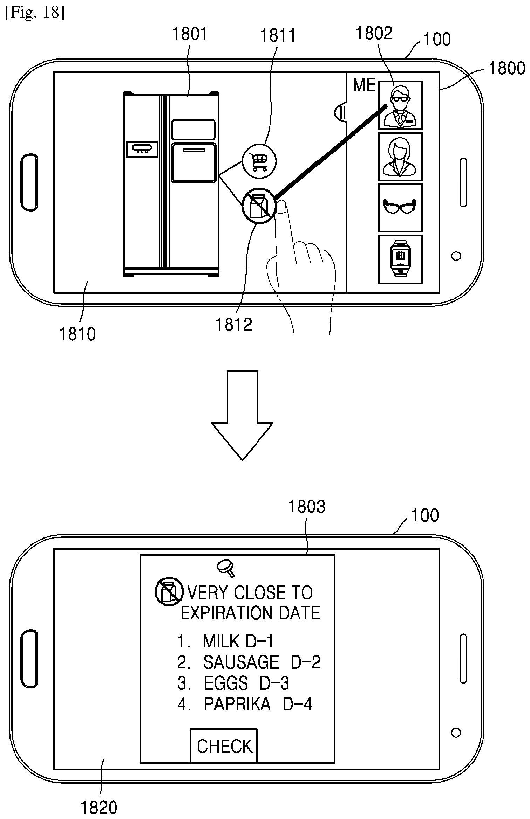

FIG. 18 is a diagram illustrating an operation of an electronic device displaying a notification based on an attribute of a refrigerator and an attribute of a person recognized by the electronic device according to an example that does not form a part of the claimed invention.

Referring to a screen 1810 of FIG. 18, the electronic device 100 may display a live view including a refrigerator 1801. For example, the electronic device 100 may recognize the refrigerator 1801 displayed in the live view through image processing technology.

Also, the electronic device 100 may identify attribute information of the refrigerator 1801, and may display icons indicating a plurality of attributes when the plurality of attributes are matched to the refrigerator 1801. For example, when there are "grocery shopping" and "expiration date" among attributes corresponding to the refrigerator 1801, the electronic device 100 may display a grocery shopping icon 1811 and an expiration date icon 1812.

Meanwhile, the electronic device 100 may display an object panel 1800 including at least one object image. According to an example that does not form a part of the claimed invention, the object panel 1800 may be located in a certain region of the screen. Also, the object panel 1800 is not usually shown but may appear on one side of the screen at the user's request.

According to an example that does not form a part of the claimed invention, object images displayed in the object panel 1800 may be images of objects frequently selected by the user. The user may add a new object image to the object panel 1800, or remove at least one object image from the object panel 1800.

The electronic device 100 may receive a drag input for connecting the expiration date icon 1812 and an icon 1802 corresponding to the user of the electronic device 100. The electronic device 100 may identify an attribute (e.g., expiration date) of the refrigerator 1801 and an attribute (e.g., user of the electronic device 100) of a person.

In the inter-object associated attribute table 310, the electronic device 100 may search for control information (e.g., control device: the electronic device 100, operation: displaying a list of foods very close to their expiration dates) corresponding to a combination of "expiration date" which is the attribute of the refrigerator 1801 and "user of the electronic device 100" which is the attribute of the person. By analyzing the control information, the electronic device 100 may check that an operation to be performed by the electronic device 100 is "displaying a list of foods very close to their expiration dates."

Referring to a screen 1820 of FIG. 18, the electronic device 100 may display a list 1803 of foods very close to their expiration dates.

For example, the electronic device 100 may establish a communication link with the refrigerator 1801 and receive information on foods (e.g., milk, sausages, eggs, paprika, etc.) very close to their expiration dates from the refrigerator 1801. Then, the electronic device 100 may display a pop-up window including information on the foods (e.g., milk, sausages, eggs, paprika, etc.) very close to their expiration dates.

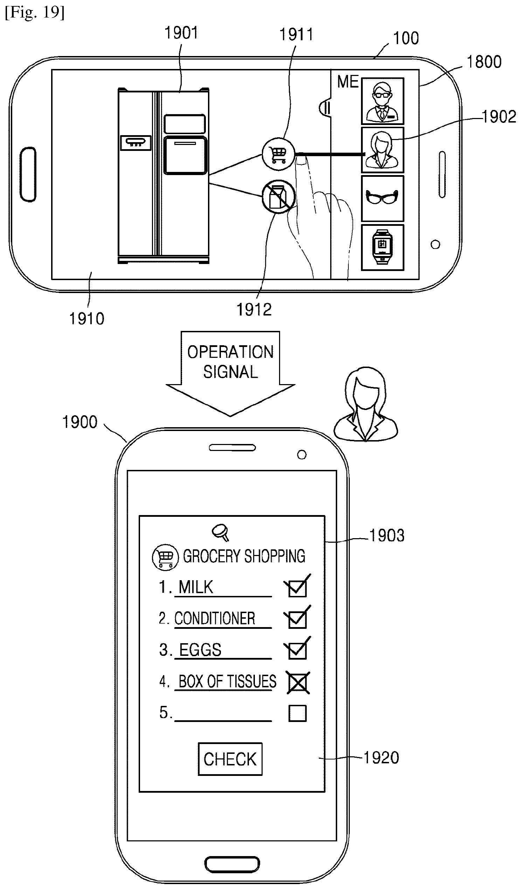

FIG. 19 is a diagram illustrating an operation of an electronic device controlling display of an external device based on an attribute of a refrigerator and an attribute of a person recognized by the electronic device according to an example that does not form a part of the claimed invention.

Referring to a screen 1910 of FIG. 19, the electronic device 100 may display an object panel 1800 and a live view including a refrigerator 1901.

The electronic device 100 may identify attribute information of the refrigerator 1901, and may display icons indicating a plurality of attributes when the plurality of attributes are matched to the refrigerator 1901. For example, when there are "grocery shopping" and "expiration date" among attributes corresponding to the refrigerator 1901, the electronic device 100 may display a grocery shopping icon 1911 and an expiration date icon 1912.

The electronic device 100 may receive a drag input for connecting the grocery shopping icon 1911 and an icon 1902 corresponding to a second user (e.g., wife). The electronic device 100 may identify an attribute (e.g., grocery shopping) of the refrigerator 1901 and an attribute (e.g., second user) of a person.

In the inter-object associated attribute table 310, the electronic device 100 may search for control information (e.g., control device: a mobile phone 1900 of the second user, operation: displaying a grocery shopping list) corresponding to a combination of "grocery shopping" which is the attribute of the refrigerator 1901 and "second user" which is the attribute of the person. By analyzing the control information, the electronic device 100 may determine the mobile phone 1900 of the second user as a target object and check that an operation to be performed by the mobile phone 1900 of the second user is "displaying a grocery shopping list."

Referring to a screen 1920 of FIG. 19, the electronic device 100 may generate an operation signal including a control command which instructs to "display a grocery shopping list." Then, the electronic device 100 may transmit the generated operation signal to the mobile phone 1900 of the second user through short-range communication. In this case, the mobile phone 1900 of the second user may display a grocery shopping list 1903 (e.g., milk, a conditioner, eggs, a box of tissues, etc.).

According to an example that does not form a part of the claimed invention, the electronic device 100 may transmit the grocery shopping list 1903 stored in the storage to the mobile phone 1900 of the second user, or may receive the grocery shopping list 1903 from the refrigerator 1901 and transmit the grocery shopping list 1903 to the mobile phone 1900 of the second user.

Also, the mobile phone 1900 of the second user may receive the grocery shopping list 1903 from the refrigerator 1901 or a relay server (e.g., a home gateway or an IoT hub), and display the received grocery shopping list 1903 on the screen.

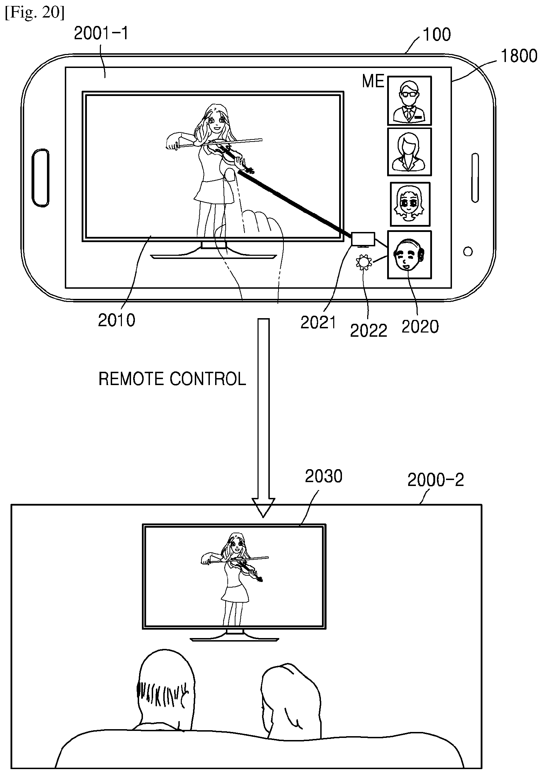

FIG. 20 is a diagram illustrating an operation of an electronic device remotely controlling an external device according to an example that does not form a part of the claimed invention.

Referring to a screen 2000-1 of FIG. 20, the electronic device 100 may display a live view including a first TV 2010 which plays a concert video of a first user (e.g., Jane). For example, the electronic device 100 may recognize the first TV 2010 displayed in the live view through image processing technology or short-range communication.

Also, the electronic device 100 may display an object panel 1800 including at least one object image. When a second user (the user of the electronic device 100) touches an icon 2020 corresponding to a third user (e.g., Tom) in the object panel 1800, the electronic device 100 may display attributes matched to the third user. For example, the electronic device 100 may display a mirroring icon 2021 and a setting icon 2022.

The electronic device 100 may receive a drag input for connecting an image of the first TV 2010 and the mirroring icon 2021. The electronic device 100 may identify an attribute (e.g., content) of the first TV 2010 and an attribute (e.g., mirroring) of the third user.

In the inter-object associated attribute table 310, the electronic device 100 may search for control information (e.g., control device: a third TV 2030 of the third user, operation: displaying content being played on the first TV 2010) corresponding to a combination of "content" which is the attribute of the first TV 2010 and "mirroring" which is the attribute of the third user. By analyzing the control information, the electronic device 100 may determine the third TV 2030 of the third user as a target object and check that an operation to be performed by the third TV 2030 is "displaying content (the concert video of the first user (e.g., Jane)) being played on the first TV 2010."

Referring to a reference numeral 2000-2 of FIG. 20, the electronic device 100 may generate an operation signal including a control command which instructs to "display the concert video of the first user (e.g., Jane)." Then, the electronic device 100 may transmit the operation signal to the third TV 2030 of the third user through long-range communication. The electronic device 100 may transmit a concert video file of the first user (e.g., Jane) or a screen showing the concert video of the first user (e.g., Jane) to the third TV 2030 of the third user.

The third TV 2030 of the third user may display the concert video of the first user (e.g., Jane) according to the received operation signal.

According to an exemplary embodiment, the electronic device 100 may receive a drag input for connecting an image of the first TV 2010 and the setting icon 2022. The electronic device 100 may identify an attribute (e.g., displaying content) of the first TV 2010 and an attribute (e.g., setting) of the third user.

In the inter-object associated attribute table 310, the electronic device 100 may search for control information (e.g., control device: the third TV 2030 of the third user, operation: reflecting setting information of the first TV 2010) corresponding to a combination of "displaying content" which is the attribute of the first TV 2010 and "setting" which is the attribute of the third user. The electronic device 100 may analyze the control information and control the first TV 2010 so that screen images displayed on the third TV 2030 of the third user are displayed on the first TV 2010. Also, the electronic device 100 may receive a setting for the screen images displayed on the first TV 2010 from the second user. For example, when the screen images include an interface for setting a display ratio, the electronic device 100 may receive an input for setting the display ratio to 90 %.

In this case, the electronic device 100 may generate an operation signal including a control command which instructs to "set the display ratio of the third TV 2030 to 90%." Then, the electronic device 100 may transmit the operation signal to the third TV 2030 of the third user through long-range communication. The third TV 2030 of the third user may set the display ratio to 90 % according to the received operation signal.

According to an exemplary embodiment, the second user may simply and remotely control devices of his or her parents who feel it difficult to manipulate the devices.

FIG. 21 is a flowchart illustrating a method for an electronic device to display attributes of a plurality of recognized objects according to an exemplary embodiment.

In operation S2110, the electronic device 100 may display attributes of a plurality of objects. For example, the electronic device 100 may display at least one attribute corresponding to a first object and at least one attribute corresponding to a second object on the screen.

According to an exemplary embodiment, the electronic device 100 may display attributes of the plurality of objects. For example, the electronic device 100 may display indicators corresponding to attributes of the plurality of objects. For example, the indicators may be icons, signs, text, etc., but are not limited thereto.

In operation S2120, the electronic device 100 may receive a user input for selecting at least one of the displayed attributes.

For example, the electronic device 100 may receive a user input for selecting a first attribute of the first object and a second attribute of the second object. Also, when there is one attribute corresponding to the second object, the electronic device 100 may receive a user input for selecting the first attribute of the first object and the second object.

In operation S2130, the electronic device 100 may determine a target object and an operation corresponding to the at least one attribute.

For example, the electronic device 100 may determine a target object to control between the first object and the second object based on the first attribute of the first object and the second attribute of the second object. Alternatively, the electronic device 100 may determine a third object as a target object to control based on the first attribute of the first object and the second attribute of the second object.

According to an exemplary embodiment, the electronic device 100 determines an operation corresponding to a combination of the first attribute of the first object and the second attribute of the second object using the inter-object associated attribute table 310. Then, the electronic device 100 generates an operation signal corresponding to the determined operation.

FIG. 22 is a diagram illustrating an operation of an electronic device displaying attributes of a TV and attributes of a light fixture according to an exemplary embodiment.

Referring to FIG. 22, the electronic device 100 may display a live view including a TV, a light fixture, an audio device 2224, a washing machine 2226, and a robot vacuum cleaner 2228. Through image processing of an image corresponding to the live view, the electronic device 100 may identify positions of the TV, the light fixture, the audio device, the robot vacuum cleaner, and the washing machine in the live view. Also, through short-range communication, the electronic device 100 may identify the positions of the TV, the light fixture, the audio device, the robot vacuum cleaner, and the washing machine in the live view.

The electronic device 100 may identify attribute information of the objects, and display indicators of attributes of the objects. For example, when a plurality of attributes (e.g., brightness, genre, and volume) are matched to a TV 2210, the electronic device 100 may display a first brightness icon 2211, a genre icon 2212, and a volume icon 2213. Also, when a plurality of attributes (e.g., color and brightness) are matched to a light fixture 2220, the electronic device 100 may display a color icon 2221 and a second brightness icon 2222.

Meanwhile, the electronic device 100 may receive a drag input for connecting the genre icon 2212 and the second brightness icon 2222. The electronic device 100 may search for control information (e.g., control device: the light fixture, operation: adjusting brightness according to a genre) corresponding to a combination of the attribute (genre) of the TV 2210 and the attribute (brightness) of the light fixture 2220 in the inter-object associated attribute table 310.

By analyzing the control information, the electronic device 100 may determine the light fixture 2220 as a target object and check that an operation to be performed by the light fixture is "adjusting brightness according to a genre." The electronic device 100 may check that a movie is currently being played on the TV 2210 based on state information of the TV 2210, and generate an operation signal which instructs to set brightness to 10 % corresponding to a movie mode. Then, the electronic device 100 may transmit the generated operation signal to the light fixture.

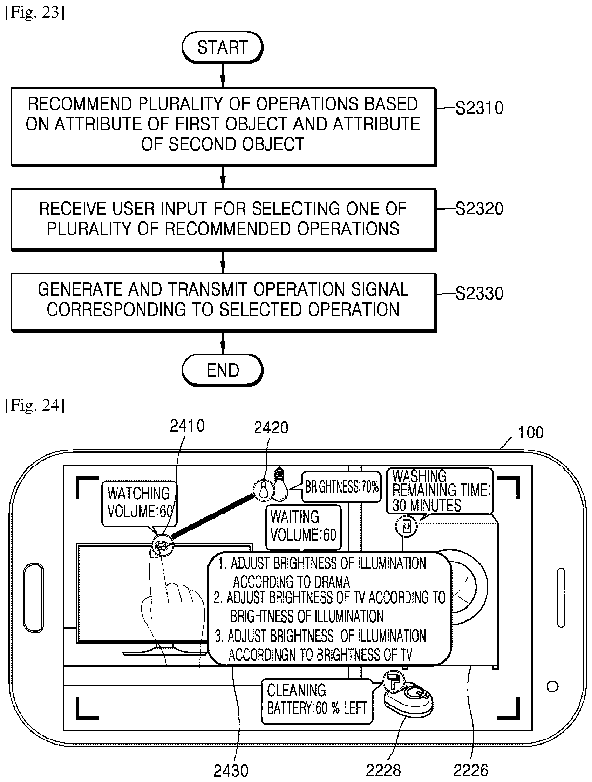

FIG. 23 is a flowchart illustrating a method for an electronic device to recommend a plurality of operations according to an exemplary embodiment.

In operation S2310, the electronic device 100 may recommend a plurality of operations based on attributes of a first object and attributes of a second object.

For example, when two attributes correspond to the first object and two attributes correspond to the second object, there may be four operations corresponding to a combination of the attributes of the first object and the attributes of the second object. Therefore, the electronic device 100 may provide a list of a plurality of operations corresponding to the first object and the second object which are selected by the user. For example, the electronic device 100 may display all of the four operations or recommended two of the four operations.

According to an exemplary embodiment, a recommended list including recommended operations may be set in advance by the user. Also, the electronic device 100 may learn the usage pattern of the user and generate a recommended list according to the usage pattern of the user. For example, the electronic device 100 may generate a recommended list including operations frequently used by the user. The electronic device 100 may generate a recommended list including operations which are used by the user one or more times per week.

Meanwhile, when one operation corresponds to a combination of an attribute of the first object and an attribute of the second object, the electronic device 100 may immediately generate an operation signal corresponding to the operation without displaying a recommended list.

In operation S2320, the electronic device 100 may receive a user input for selecting one of the plurality of recommended operations.

Here, the user input for selecting one of the plurality of operations may be varied. For example, the user input for selecting one of the plurality of operations may be at least one of a touch input (e.g., a tap, a touch and hold, a double tap, a drag, panning, a flick, a drag and drop), a voice input, an ocular input, and a bending input, but is not limited thereto.

In operation S2330, the electronic device 100 may generate an operation signal corresponding to the selected operation. Then, the electronic device 100 may transmit the operation signal to a target object. For example, the operation signal may be generated based on control protocol information of the target object.

FIG. 24 is a diagram illustrating an operation of an electronic device recommending a plurality of operations based on an attribute of a TV and an attribute of a light fixture according to an exemplary embodiment.

Referring to FIG. 24, the electronic device 100 may display a live view including a TV 2410, a light fixture 2420, the audio device 2224, the robot vacuum cleaner 2228, and the washing machine 2226. The electronic device 100 may identify positions of at least one among the TV 2410, the light fixture 2420, the audio device 2224, the robot vacuum cleaner 2228, and the washing machine 2226 in the live view through image processing of an image corresponding to the live view. Also, the electronic device 100 may identify positions of at least one among the TV 2410, the light fixture 2420, the audio device 2224, the robot vacuum cleaner 2228, and the washing machine 2226 in the live view through short-range communication.

When the user wants to view content played on the TV 2410 in a dark environment, the electronic device 100 may receive a user input for selecting the TV 2410 and the light fixture 2420 through the live view. For example, the electronic device 100 may receive a drag input of touching and dragging the TV 2410 to the light fixture 2420.

The electronic device 100 may identify an attribute of the TV 2410 and an attribute of the light fixture 2420. Then, the electronic device 100 may search for control information corresponding to a combination of the attribute of the TV and the attribute of the light fixture in the inter-object associated attribute table 310.

However, since a plurality of attributes (e.g., brightness, genre, and volume) are matched to the TV and a plurality of attributes (e.g., color and brightness) are matched to the light fixture, a plurality of pieces of control information may be searched for in the inter-object associated attribute table 310.

Therefore, the electronic device 100 may display a recommended operation list 2430 among operations included in the plurality of pieces of control information. For example, the recommended operation list 2430 may include a first operation (e.g., adjusting brightness of illumination according to a drama) corresponding to a combination of "genre" which is an attribute of the TV 2410 and "brightness" which is an attribute of the light fixture 2420, a second operation (e.g., adjusting the luminance of the TV 2410 according to brightness of illumination) corresponding to a combination of "brightness" which is an attribute of the TV 2410 and "brightness" which is an attribute of the light fixture 2420, and a third operation (e.g., adjusting illumination according to the luminance of the TV 2410) corresponding to a combination of "brightness" which is an attribute of the TV 2410 and "brightness" which is an attribute of the light fixture 2420.

When the user selects the first operation in the recommended operation list 2430, the electronic device 100 may transmit an operation signal including a control command which instructs to adjust a brightness level to the light fixture 2420.

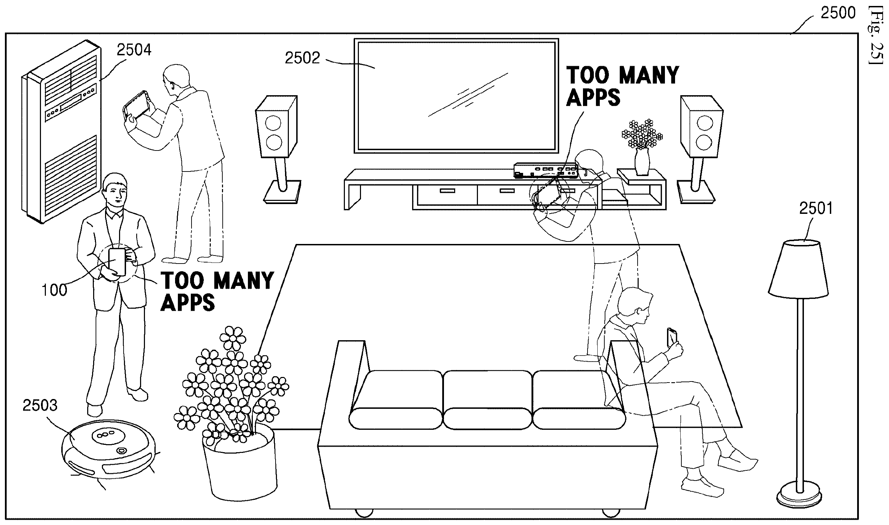

FIG. 25 is a diagram illustrating an application execution system according to an exemplary embodiment.

Referring to FIG. 25, an application execution system 2500 according to an exemplary embodiment may include an electronic device 100 and a plurality of objects (e.g., a light fixture 2501, a TV 2502, a robot vacuum cleaner 2503, an air conditioner 2504, etc.). Also, according to an exemplary embodiment, the application execution system may include a server (not shown) in addition to the electronic device 100 and the plurality of objects.

The electronic device 100 may be a device which may execute applications related to each of the plurality of objects. An application may denote a set of computer programs devised to perform a particular task. For example, the application may be a schedule management application, an address book application, a video player application, a map application, a broadcast application, an exercise management application, a payment application, a parenting application, a healthcare application, an e-book application, etc., but is not limited thereto.

Meanwhile, according to an exemplary embodiment, applications may include a controller application for controlling an object. For convenience of description, the controller application will be referred to as a "controller" below.

According to an exemplary embodiment, the electronic device 100 may execute an application related to a particular object at a user's request. However, since there are a variety of applications in the electronic device 100, it is difficult for the user to rapidly execute the application related to the particular object in the electronic device 100. For example, the user may want to execute a first application for changing an illuminance of the light fixture 2501. However, when there are a large number of applications installed on the electronic device 100, the user may have difficulty in rapidly finding the first application.

Therefore, a method for the electronic device 100 to provide convenience to the user by rapidly searching for or executing an application related to an object with object recognition model information will be described below.

In an exemplary embodiment, object recognition model information may denote information on models for recognizing each of a plurality of objects and executing functions (e.g., applications or controllers) corresponding to each of the plurality of objects. A model for recognizing an object (which will be referred to as an "object recognition model" below) may include images for identifying the object. For example, a first object recognition model for recognizing a first object (e.g., a TV) may include first images (e.g., TV images) corresponding to the first object, and a second object recognition model for recognizing a second object (e.g., a refrigerator) may include second images (e.g., refrigerator images) corresponding to the second object.

Meanwhile, according to an exemplary embodiment, object recognition model information may include information on applications (or controllers) linked to each of a plurality of objects. For example, object recognition model information may include information on a third application (e.g., a music player application) linked to a third object (e.g., a speaker).

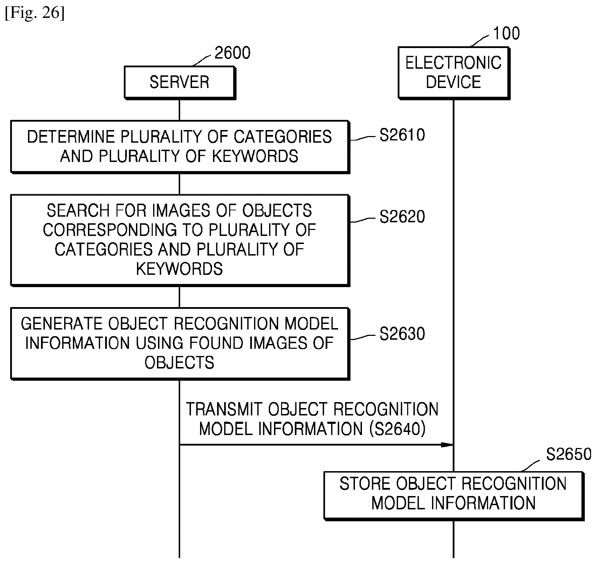

According to an exemplary embodiment, object recognition model information may be generated by the electronic device 100 or a server. An operation of a server generating object recognition model information of general objects will be described in detail below with reference to FIG. 26.

FIG. 26 is a sequence diagram illustrating a method of a server generating object recognition model information according to an exemplary embodiment.

In operation S2610, a server 2600 may determine a plurality of categories and a plurality of keywords.

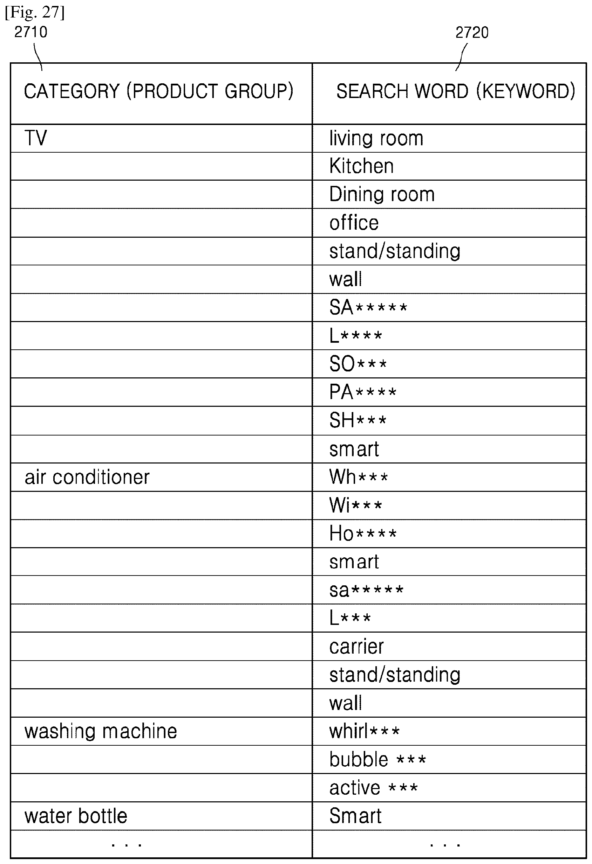

For example, referring to FIG. 27, the server 2600 may determine product groups (e.g., a TV, an air conditioner, a vacuum cleaner, etc.) as categories 2710. Also, the server 2600 may determine places (e.g., a living room, a kitchen, an office, etc.) in which products are used, the names of manufacturers of the products, forms (e.g., a standing type, a wall-mounted type, and mobile type) in which the products are used, etc., as keywords 2720, but the keywords 2720 are not limited thereto.

In operation S2620, the server 2600 may search for images of objects corresponding to the plurality of categories and the plurality of keywords.

For example, when the category 2710 is "TV" and the keyword 2720 is "living room," the server 2600 may search a search site for images corresponding to a living room TV. Also, when the category 2710 is "TV" and the keyword 2720 is "office," the server 2600 may search a search site for images corresponding to a TV in an office.

According to an exemplary embodiment, the server 2600 may search for an application or a controller corresponding to a category and a keyword. For example, when the category 2710 is "TV" and the keyword 2720 is "living room," the server 2600 may search a website for a controller corresponding to a living room TV. Also, when the category 2710 is "water bottle" and the keyword 2720 is "smart," the server 2600 may search a website for an application of a smart water bottle.

According to an exemplary embodiment, the server 2600 may generate folders according to the categories and classify the found images. In an exemplary embodiment, a folder may be a user interface for showing content (e.g., images) related to a certain basis (category) all together.

In operation S2630, the server 2600 may generate object recognition model information using the found images of the objects.

According to an exemplary embodiment, to increase an object recognition rate, the server 2600 may generate training images corresponding to the found images of the objects using deep learning technology. Deep learning is a branch of machine learning and enables complex modeling by emulating a human brain. Machine learning is artificial intelligence technology which enables a computer to train with data and understand a target or a situation like a human.

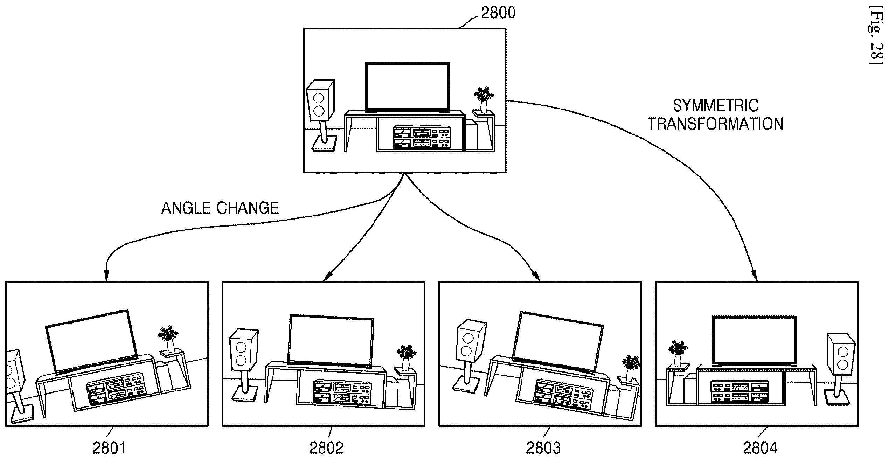

For example, the server 2600 may change an angle of a found image to generate training images for recognizing an object. Referring to FIG. 28, when a living room TV image 2800 is acquired, the server 2600 may generate a first training image 2801 obtained by rotating the living room TV image 2800 counterclockwise by 30 degrees, a second training image 2802 obtained by rotating the living room TV image 2800 clockwise by 5 degrees, a third training image 2803 obtained by rotating the living room TV image 2800 clockwise by 20 degrees, a fourth training image 2804 obtained through a symmetrical left-right transformation of the living room TV image 2800, and so on.

According to an exemplary embodiment, the server 2600 may generate a plurality of object recognition models including the found images of the objects and training images corresponding to the found images of the objects. For example, the server 2600 may generate object recognition models of the living room TV including the original living room TV image 2800, the first training image 2801, the second training image 2802, the third training image 2803, and the fourth training image 2804.

According to an exemplary embodiment, the server 2600 may generate object recognition model information by matching each of the plurality of object recognition models and application (or controller) information with each other. For example, the object recognition model information generated by the server 2600 may include first matching information obtained by matching an object recognition model of the living room TV with controller information for controlling the living room TV, second matching information obtained by matching an object recognition model of a refrigerator with refrigerator management application information, and so on.

In operation S2640, the server 2600 may transmit the object recognition model information to the electronic device 100.

According to an exemplary embodiment, the server 2600 may the transmit object recognition model information to the electronic device 100 when a request is received from the electronic device 100, or may transmit the object recognition model information to the electronic device 100 at regular time intervals. Also, when a particular event occurs, the server 2600 may transmit the object recognition model information to the electronic device 100. For example, when the object recognition model information is updated, the server 2600 may automatically transmit the updated object recognition model information to the electronic device 100.

In operation S2650, the electronic device 100 may store the object recognition model information received from the server 2600.

According to an exemplary embodiment, the electronic device 100 may store the object recognition model information in a memory in the electronic device 100 or a storage device outside the electronic device 100.

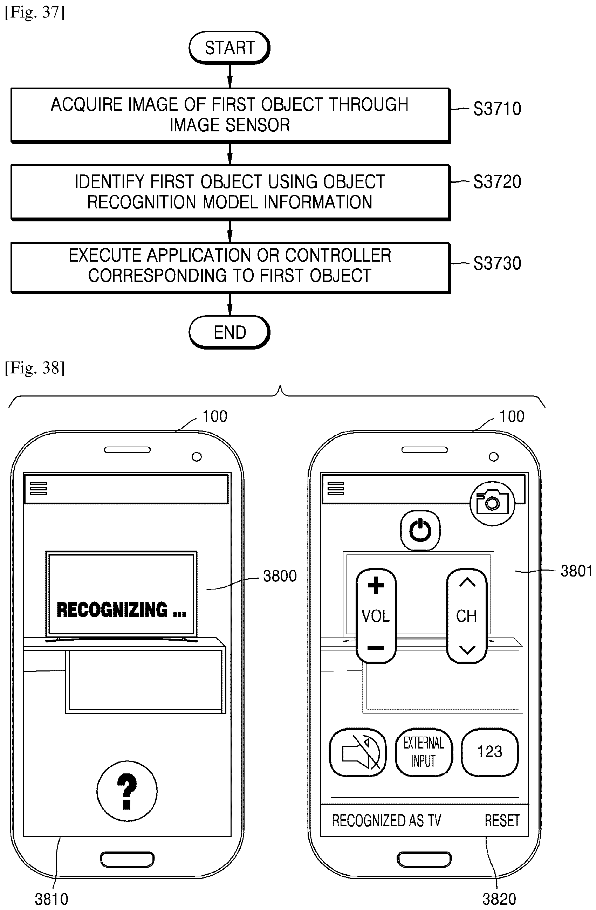

According to an exemplary embodiment, when an image of a particular object is acquired through the image sensor, the electronic device 100 may automatically execute an application corresponding to the particular object using the stored object recognition model information. An operation of the electronic device 100 executing the application using the object recognition model information will be described in detail below with reference to FIG. 37.

FIG. 26 illustrates a case in which the server 2600 performs operation S2610 to operation S2640 as an example, but an exemplary embodiment is not limited. According to an exemplary embodiment, the electronic device 100 may perform operation S2610 to operation S2630.

Also, according to an exemplary embodiment, some of operations among operation S2610 to operation S2650 may be omitted. For example, when the plurality of categories and the plurality of keywords are determined in advance, operation S2610 may be omitted. Also, when the electronic device 100 performs operation S2610 to operation S2630, operation S2640 may be omitted.

Meanwhile, when the server 2600 searches for general images of an object and generates object recognition model information, images included in the object recognition model information may differ from an image of the object actually used by the user. In this case, an object recognition error may occur in the electronic device 100. Therefore, a method of the server 2600 modifying object recognition model information to correct the object recognition error will be described below.

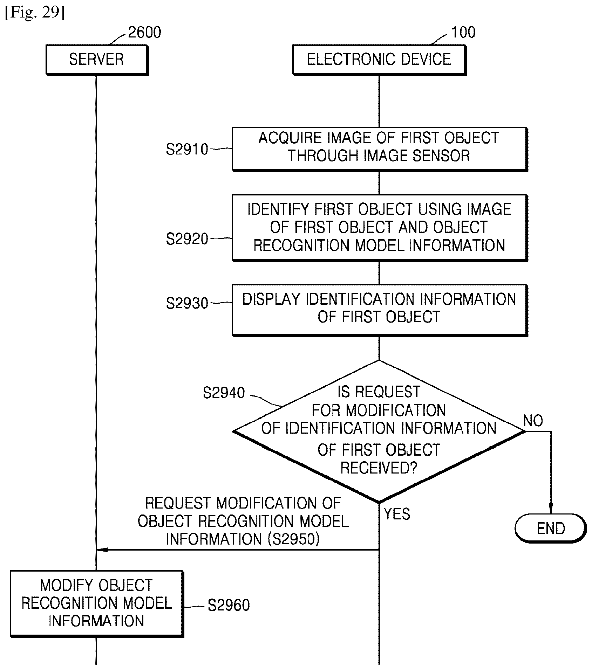

FIG. 29 is a sequence diagram illustrating a method of modifying object recognition model information according to an exemplary embodiment when there is an object recognition error.

In operation S2910, the electronic device 100 may acquire an image of a first object through the image sensor.

For example, the electronic device 100 may activate the image sensor and capture (take) an image of the first object outside the electronic device 100 using the activated image sensor, thereby acquiring the image of the first object.

In operation S2920, the electronic device 100 may identify the first object using the image of the first object and object recognition model information.

For example, the electronic device 100 may identify the first object by comparing the image of the first object acquired through the image sensor and images included in the object recognition model information. As an example, when the image of the first object acquired through the image sensor is similar to a second image included in the object recognition model information and the second image is an image of a TV, the electronic device 100 may identify the first object as a TV.

In operation S2930, the electronic device 100 may display identification information of the first object. For example, the identification information of the first object may include a name of the first object, an icon of the first object, a trademark of the first object, etc., but information included in the identification information is not limited thereto.

For example, when the first object is identified as a TV, the electronic device 100 may display a pop-up window including a TV icon on the screen.

In operation S2940, the electronic device 100 may receive a request for a modification of the identification information of the first object.

For example, when the first object is a refrigerator but the electronic device 100 identifies the first object as a TV, the electronic device 100 may receive a request for a modification of the identification information of the first object. The electronic device 100 may receive a name, etc. of the first object from the user.

In operation S2950, when there is the request for a modification of the identification information of the first object, the electronic device 100 may request that the server 2600 modify the object recognition model information.

For example, when there is a request for a modification of the identification information of the first object, an object recognition model of the first object has been incorrectly generated, and thus the electronic device 100 may transmit a request for a modification of the object recognition model of the first object to the server 2600. The electronic device 100 may transmit the image of the first object acquired through the image sensor and the identification information of the first object (e.g., the name of the first object, etc.) to the server 2600.

In operation S2960, the server 2600 may modify the object recognition model information.

According to an exemplary embodiment, the server 2600 may generate training images corresponding to the first object using the image of the first object. Then, the server 2600 may update the object recognition model by adding the newly generated training images to the object recognition model of the first object. Also, in the object recognition model information, the server 2600 may store information obtained by matching the object recognition model of the first object with the identification information of the first object.

Meanwhile, when no object recognition model of the first object has been defined in the object recognition model information, the server 2600 may modify the object recognition model information by newly defining an object recognition model of the first object in the object recognition model information.

According to an exemplary embodiment, when the modification of the object recognition model information is finished, the server 2600 may transmit the modified object recognition model information to the electronic device 100. In this case, an object recognition rate of the electronic device 100 may increase.

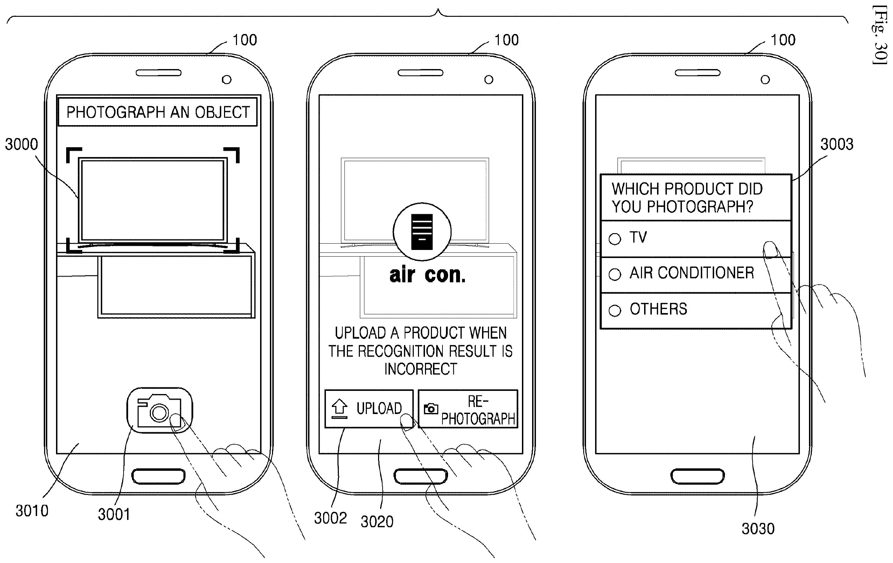

FIG. 30 is a diagram illustrating a case in which an object recognition error occurs in an electronic device.

Referring to a first screen 3010 of FIG. 30, the electronic device 100 may receive an input of touching a capture button 3001. In this case, the electronic device 100 may photograph an external object 3000 using the image sensor. For example, when the external device 3000 is a TV, the electronic device 100 may acquire an image including the TV.

Referring to a second screen 3020 of FIG. 30, the electronic device 100 may identify the external device 3000 by comparing the acquired image with images included in object recognition model information and display identification information of the external device 3000. For example, the electronic device 100 may determine the external device 3000 as an air conditioner and display an icon and text of the air conditioner. However, the photographed external device 3000 is actually not an air conditioner but a TV, and thus the user may touch an upload button 3002 for requesting a modification of the object recognition model information.

Referring to a third screen 3030 of FIG. 30, the electronic device 100 may display a box 3003 for inquiring which product the user has photographed in response to the input of touching the upload button 3002. The electronic device 100 may receive an input indicating that the external device 3000 is a TV, and request the modification of the object recognition model information while transmitting the image and the name (i.e., "TV") of the external device 3000 to the server 2600.

According to an exemplary embodiment, when the external device 3000 is photographed with the electronic device 100 after the object recognition model information is modified, the electronic device 100 may correctly determine that the external device 3000 is a TV using the modified object recognition model information.

Meanwhile, besides object recognition models for general objects generated by the server 2600, the electronic device 100 or the server 2600 may generate a personalized object recognition model for a particular object according to a request of the user. An operation of the electronic device 100 or the server 2600 generating a personalized object recognition model will be described in detail below.

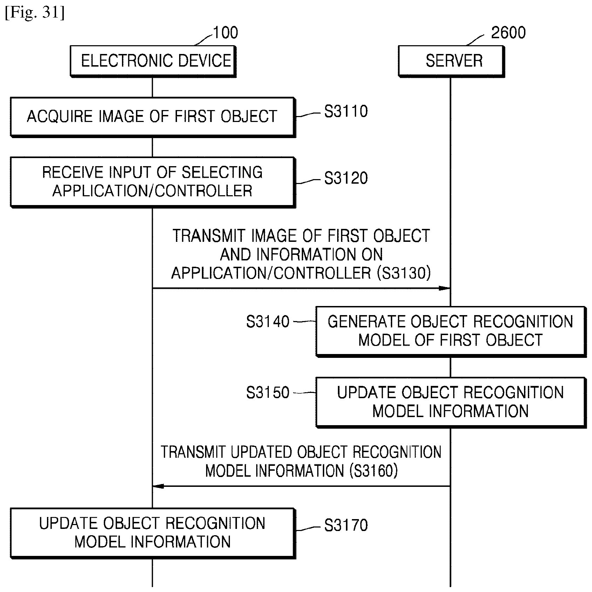

FIG. 31 is a sequence diagram illustrating a method of generating personalized object recognition model information according to an exemplary embodiment.

In operation S3110, the electronic device 100 may acquire an image of a first object through the image sensor. The image of the first object may be a still image or a video. When the image of the first object is a video, the image of the first object may include a plurality of video frames. Since operation S3110 corresponds to operation S2910 of FIG. 29, the detailed description thereof will not be reiterated.

According to an exemplary embodiment, the electronic device 100 may receive identification information of the first object from the user. For example, the electronic device 100 may receive a product group, a use, a product name, an icon, etc. of the photographed first object.

In operation S3120, the electronic device 100 may receive an input of selecting an application (or a controller). For example, when the image of the first object is captured, the electronic device 100 may receive the user's input of selecting an application that the user wants to execute in relation to the first object.

According to an exemplary embodiment, the electronic device 100 may display a list of applications installed thereon, and receive an input of selecting at least one application in the application list.

According to an exemplary embodiment, the electronic device 100 may identify the first object by analyzing the image of the first object and recommend at least one application corresponding to the first object. The electronic device 100 may receive an input of selecting the recommended application.

According to an exemplary embodiment, the electronic device 100 may receive an input of searching for a particular application. In this case, the electronic device 100 may search for the particular application in an application store and install the particular application.

In operation S3130, the electronic device 100 may transmit the image of the first object and information on the application (or the controller) to the server 2600. For example, the information on the application (or the controller) may include the name, version information, developer information, etc. of the application, but is not limited thereto.

For example, the electronic device 100 may request generation of an object recognition model of the first object while transmitting the image of the first object acquired through the image sensor and the information on the particular application (or the controller) selected by the user to the server 2600. According to an exemplary embodiment, the electronic device 100 may also transmit identification information of the first object (e.g., the name of the first object) to the server 2600.

In operation S3140, the server 2600 may generate an object recognition model of the first object. For example, the server 2600 may generate training images corresponding to the image of the first object received from the electronic device 100. Since an operation of the server 2600 generating training images has been described with reference to FIG. 28, the detailed description thereof will not be reiterated. The server 2600 may generate an object recognition model of the first object including the image of the first object and the training images corresponding to the image of the first object.

According to an exemplary embodiment, the server 2600 may generate matching information of the first object obtained by matching the object recognition model of the first object with the information on the application (or the controller) selected by the user.

In operation S3150, the server 2600 may update previously generated object recognition model information using the object recognition model of the first object. For example, the server 2600 may newly add the object recognition model of the first object and the matching information of the first object to the previously generated object recognition model information.

According to an exemplary embodiment, when there is no previously generated object recognition model information, updating of object recognition model information may include newly generating object recognition model information.

In operation S3160, the server 2600 may transmit the updated object recognition model information to the electronic device 100.

According to an exemplary embodiment, the server 2600 may separately transmit the personalized object recognition model information of the particular object selected by the user and general object recognition model information of general objects. Also, the server 2600 may integrate the personalized object recognition model information with the general object recognition model information and transmit the integrated information as one file to the electronic device 100. Meanwhile, according to an exemplary embodiment, the server 2600 may only transmit the personalized object recognition model information of the particular object selected by the user to the electronic device 100.

In operation S3170, the electronic device 100 may update the previously stored object recognition model information based on the object recognition model information received from the server 2600.

For example, the electronic device 100 may compare a version of the previously stored object recognition model information with a version of the object recognition model information received from the server 2600, and change the previously stored object recognition model information with the object recognition model information received from the server 2600 when the object recognition model information received from the server 2600 is a later version than the previously stored object recognition model information.

FIG. 31 illustrates a case in which the server 2600 generates an object recognition model of the first object by way of example, but an exemplary embodiment is not limited. For example, the electronic device 100 may generate an object recognition model of the first object by itself.

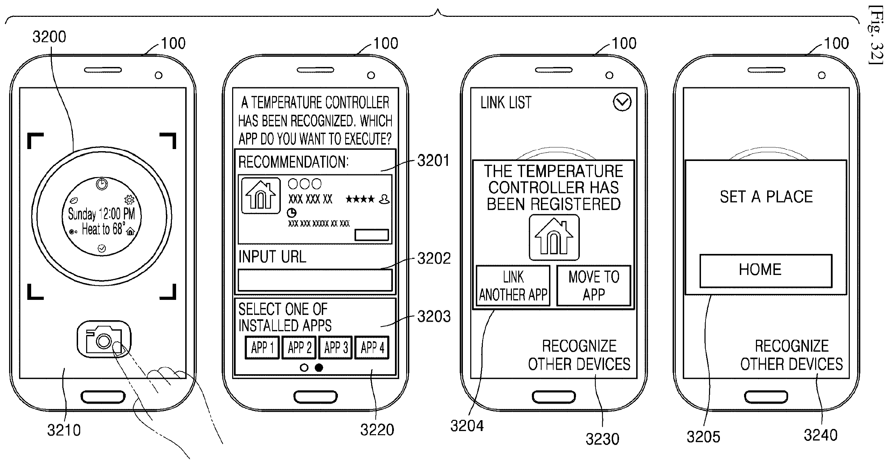

An operation of generating personalized object recognition model information of a particular object selected by the user will be further described below with reference to FIGS. 32 to 34.

FIG. 32 is a diagram illustrating an operation of linking an object and an application according to an exemplary embodiment. FIG. 32 illustrates a case in which the user newly registers a temperature controller with the server 2600 by way of example.

Referring to a first screen 3210 of FIG. 32, the electronic device 100 may photograph an external object 3200 in response to an input of touching a capture button. For example, the electronic device 100 may acquire an image including the external object 3200 through the image sensor.

According to an exemplary embodiment, the electronic device 100 may identify the external object 3200 by analyzing the image acquired through the image sensor. For example, the electronic device 100 may compare feature points (or feature vectors) of the external object 3200 included in the acquired image with feature points (or feature vectors) of objects included in previously stored images, thereby identifying the external object 3200 as a temperature controller.

According to an exemplary embodiment, the electronic device 100 may receive identification information of the external object 3200 from the user. For example, the electronic device 100 may receive an input indicating that the photographed external object 3200 is a temperature controller.

Referring to a second screen 3220 of FIG. 32, the electronic device 100 may provide a GUI for receiving a user input of selecting an application that the user wants to link to the temperature controller.

According to an exemplary embodiment, the electronic device 100 may provide a recommendation window 3201 for displaying a recommended application. For example, the electronic device 100 may display an application "OOO" provided by a manufacturer of the temperature controller in the recommendation window 3201.

According to an exemplary embodiment, the electronic device 100 may provide an input window 3202 for inputting an address (e.g., a uniform resource locator (URL)) of a website that the user wants to link to the temperature controller. Also, according to an exemplary embodiment, the electronic device 100 may display a list 3203 of applications previously installed on the electronic device 100.

When the user selects the application "OOO" provided by the manufacturer of the temperature controller, the electronic device 100 may generate object recognition model information of the temperature controller using the image of the temperature controller, the identification information of the temperature controller, and information on the application "OOO."

For example, the electronic device 100 may request generation of object recognition model information of the temperature controller while transmitting the image of the temperature controller, the identification information of the temperature controller, and the information on the application "OOO" to the server 2600. In this case, the server 2600 may generate training images using the image of the temperature controller. Also, the server 2600 may generate object recognition model information of the temperature controller by matching the identification information of the temperature controller, the training images, and the information on the application "OOO" with each other.

When the generation of the object recognition model information of the temperature controller is finished by the server 2600, the electronic device 100 may receive the object recognition model information of the temperature controller from the server 2600.

Referring to a third screen 3230 of FIG. 32, when the generation of the object recognition model information of the temperature controller is finished, the electronic device 100 may display a completion screen 3204 displaying a message (e.g., "The temperature controller has been registered").

Referring to a fourth screen 2340 of FIG. 32, the electronic device 100 may provide a setting window 3205 for setting a place in which the external object 3200 is used. The electronic device 100 may receive an input of setting a place in which the external object 3200 is used through the setting window 3205. For example, when the temperature controller is used in a home, the electronic device 100 may receive an input of selecting "Home" through the setting window 3205.

The electronic device 100 may add place information to the object recognition model information of the temperature controller. In this case, although images of the same object are obtained through the image sensor, the electronic device 100 may execute different applications according to places in which the electronic device 100 is located. For example, the electronic device 100 may execute the application "OOO" when an image of the temperature controller is captured in the home, and may execute application "XXX" when an image of the temperature controller is captured in an office.

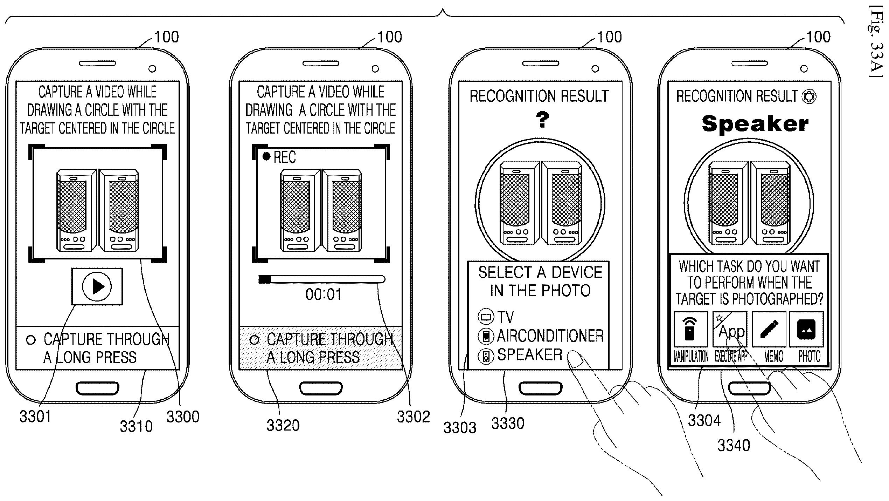

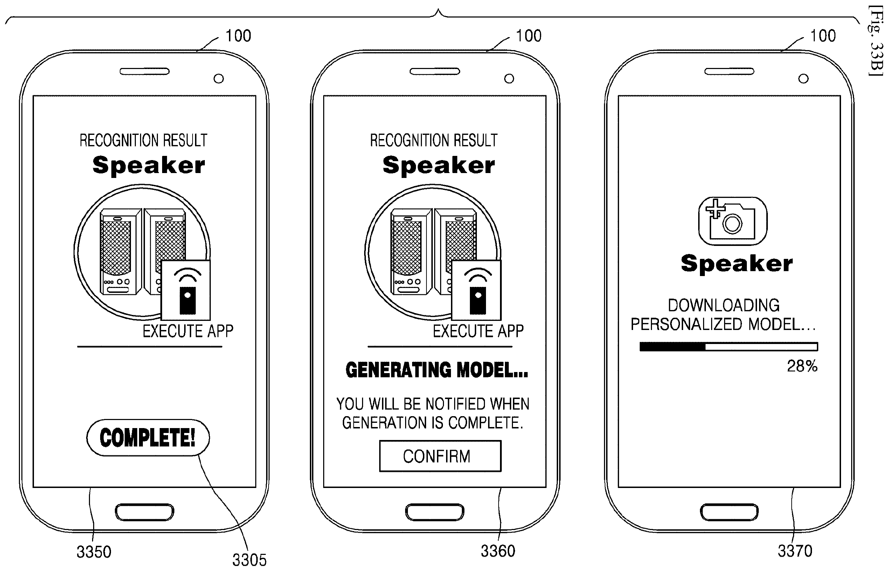

FIG. 33A is a diagram illustrating an operation of an electronic device acquiring a video of an object according to an exemplary embodiment. FIG. 33B is a diagram illustrating an operation of an electronic device downloading object recognition model information from a server. FIGS. 33A and 33B illustrate a case in which the user newly registers speakers with the server 2600 by way of example.

Referring to a first screen 3310 of FIG. 33A, to increase an object recognition rate, the electronic device 100 may display a message (e.g., "capture a video while drawing a circle with the target centered in the circle") for inducing the user to capture a video of an external object 3300 (e.g., speakers) rather than a still image. The electronic device 100 may receive an input of touching a video capture button 3301.

Referring to a second screen 3320 of FIG. 33A, the electronic device 100 may capture a video of the external object 3300 in response to the input of selecting the video capture button 3301. According to an exemplary embodiment, the electronic device 100 may display an indicator 3302, e.g., a bar, indicating that a video is being captured, e.g., the video capturing is in process or completed.

Referring to a third screen 3330 of FIG. 33A, when the capturing of the video of the external object 3300 is finished, the electronic device 100 may display an input window 3303 for inputting identification information of the external object 3300.

For example, the electronic device 100 may display a list of predefined categories (e.g., a TV, an air conditioner, a speaker, etc.). When the user selects a speaker in the input window 3303, the electronic device 100 may recognize that the external object 3300 is a speaker.

Referring to a fourth screen 3340 of FIG. 33A, the electronic device 100 may provide a list 3304 of functions which may be linked to the external object 3300. For example, the electronic device 100 may display the list 3304 including a manipulation function, an application execution function, a memo function, a photo display function, and so on. When the user selects the application execution function, the electronic device 100 may provide a GUI for inputting a particular application corresponding to a speaker.

The electronic device 100 may request generation of object recognition model information of the speaker while transmitting the video of the speaker, the identification information of the speaker, and information on the particular application selected through the GUI to the server 2600.

Referring to a fifth screen 3350 of FIG. 33B, when the video of the speaker is completely transmitted to the server 2600, the electronic device 100 may display an indicator 3305 indicating that the upload has been finished.

Referring to a sixth screen 3360 of FIG. 33B, the electronic device 100 may display a message indicating that the server 2600 is generating object recognition model information of the speaker.

The server 2600 may generate training images using the video of the speaker. Since the video of the speaker includes a plurality of video frames, the server 2600 may generate various training images using the plurality of video frames. Also, the server 2600 may generate object recognition model information of the speaker by matching the identification information of the speaker, the training images, and the information on the particular application with each other.

Referring to a seventh screen 3370 of FIG. 33B, when the generation of the object recognition model information of the speaker is finished, the electronic device 100 may automatically download the object recognition model information of the speaker from the server 2600, as shown by a bar 3372.

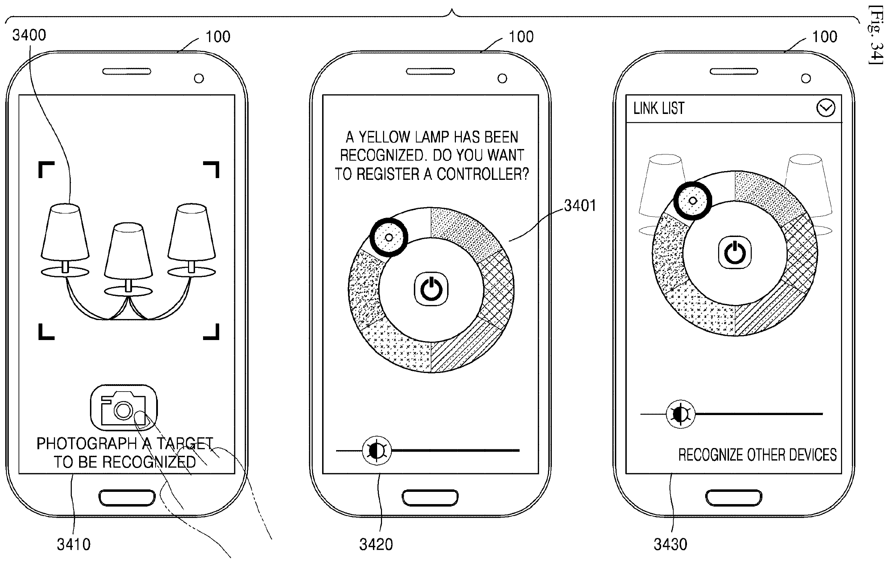

FIG. 34 is a diagram illustrating an operation of linking an object and a controller according to an exemplary embodiment. FIG. 34 illustrates a case in which the user newly registers a lamp with the server 2600 by way of example.

Referring to a first screen 3410 of FIG. 34, the electronic device 100 may photograph an external object 3400 in response to an input of touching a capture button. For example, the electronic device 100 may acquire an image including the external object 3400 (e.g., a lamp) through the image sensor.

According to an exemplary embodiment, the electronic device 100 may identify the external object 3400 by analyzing the image acquired through the image sensor. For example, the electronic device 100 may compare feature points (or feature vectors) of the external object 3400 included in the acquired image with feature points (or feature vectors) of objects included in previously stored images, thereby identifying the external object 3400 as a lamp.

According to an exemplary embodiment, the electronic device 100 may receive identification information of the external object 3400 from the user. For example, the electronic device 100 may receive an input indicating that the photographed external object 3400 is a yellow lamp.

Referring to a second screen 3420 of FIG. 34, the electronic device 100 may receive an input of linking the lamp to a controller 3401. For example, the controller 3401 may include an interface for adjusting a color and/or brightness of the lamp. Meanwhile, the controller 3401 may have been developed by a manufacturer of the lamp.

The electronic device 100 may request generation of object recognition model information of the lamp while transmitting the image of the lamp, identification information of the lamp, and information on the controller 3401 to the server 2600. In this case, the server 2600 may generate training images using the image of the lamp. Also, the server 2600 may generate object recognition model information of the lamp by matching the identification information of the lamp, the training images, and the information on the controller 3401 with each other.

When the generation of the object recognition model information of the lamp is finished by the server 2600, the electronic device 100 may receive the object recognition model information of the lamp from the server 2600.

Referring to a third screen 3430 of FIG. 34, when the electronic device 100 acquires an image of a lamp through the image sensor after storing the object recognition model information of the lamp, the electronic device 100 may automatically execute the controller 3401 using the object recognition model information of the lamp. An operation of the electronic device 100 automatically executing the controller 3401 will be described in detail below with reference to FIG. 37.

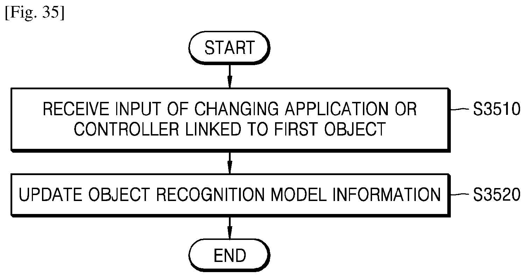

Meanwhile, the user may want to change an application or a controller linked to a particular object. An operation of the electronic device 100 changing an application or a controller linked to a particular application according to the user's request will be described in detail below with reference to FIG. 35.

FIG. 35 is a flowchart illustrating a method of updating object recognition model information according to an exemplary embodiment.

In operation S3510, the electronic device 100 may receive an input of changing an application or a controller linked to a first object.

For example, the electronic device 100 may receive an input of changing a first application linked to the first object to a second application. Alternatively, the electronic device 100 may receive an input of changing the first application linked to the first object to a first controller.

In operation S3520, the electronic device 100 may update object recognition model information in response to the input of changing an application or a controller linked to the first object.

According to an exemplary embodiment, when an input of changing the first application linked to the first object to the second application is received, the electronic device 100 may request that the server 2600 modify object recognition model information of the first object.

The server 2600 may modify the object recognition model information of the first object by matching the object recognition model information of the first object with the second application instead of the first application.

The electronic device 100 may receive the modified object recognition model information of the first object from the server 2600 and update previously stored object recognition model information based on the modified object recognition model information of the first object.

Meanwhile, according to an exemplary embodiment, the electronic device 100 may update the previously stored object recognition model information by modifying the object recognition model information of the first object by itself.

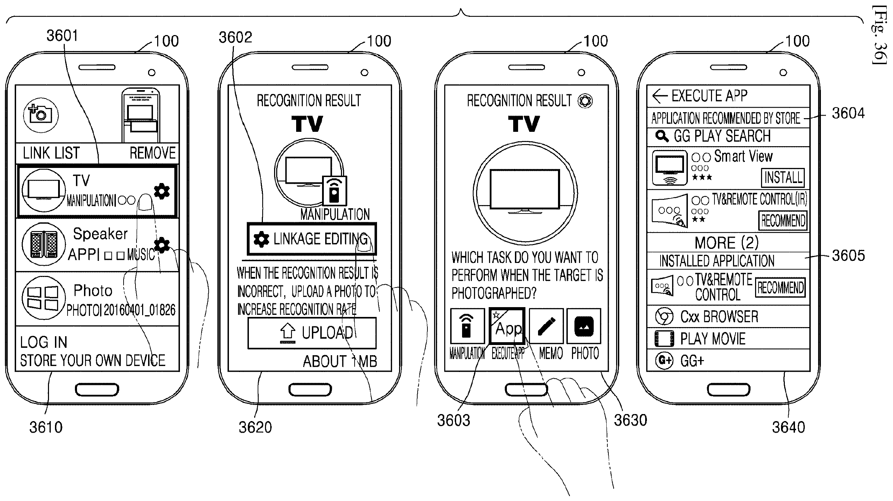

An operation of the electronic device 100 changing an application or a controller linked to a particular object according to the user's request will be further described with reference to FIG. 36.

FIG. 36 is a diagram illustrating an operation of an electronic device modifying object recognition model information at a user's request according to an exemplary embodiment.

Referring to a first screen 3610 of FIG. 36, the electronic device 100 may provide a list of objects whose object recognition models have been generated. For example, identification information (e.g., a TV, a speaker, photos, etc.) of the objects and information on applications (or controllers) linked to each of the objects may be displayed in the list.

The electronic device 100 may receive an input of selecting a TV 3601 in the list. For example, the TV 3601 may be linked to a controller.

Referring to a second screen 3620 of FIG. 36, the electronic device 100 may receive a request to edit the linkage between the TV 3601 and the controller. For example, the electronic device 100 may receive an input of touching a linkage editing button 3602.

Referring to a third screen 3630 of FIG. 36, the electronic device 100 may provide a list of functions which may be linked to the TV 3601 in response to the input of touching the linkage editing button 3602. The user may select an application execution function 3603 in the list.

Referring to a fourth screen 3640 of FIG. 36, when the user selects the application execution function 3603, the electronic device 100 may provide a GUI for inputting a particular application corresponding to the TV 3601. The electronic device 100 may provide a list 3604 of recommended applications and a list 3605 of preset applications through the GUI.

The electronic device 100 may request a modification of object recognition model information of the TV 3601 while transmitting identification information of the TV 3601 and information on the particular application selected through the GUI to the server 2600. For example, the server 2600 may modify the object recognition model information of the TV 3601 by matching the identification information of the TV 3601 with the information of the particular application instead of the controller.

FIG. 37 is a flowchart illustrating a method of an electronic device executing an application or a controller according to an exemplary embodiment.

In operation S3710, the electronic device 100 may acquire an image of a first object through the image sensor.

For example, the electronic device 100 may activate the image sensor and capture (take) an image of the first object outside the electronic device 100 using the activated image sensor, thereby acquiring the image of the first object.

In operation S3720, the electronic device 100 may identify the first object using object recognition model information.

For example, the electronic device 100 may identify the first object by comparing the image of the first object acquired through the image sensor and images included in the object recognition model information. As an example, when the image of the first object acquired through the image sensor is similar to a second image included in the object recognition model information and the second image is an image of a speaker, the electronic device 100 may identify the first object as a speaker.

In operation S3730, the electronic device 100 may execute an application or a controller corresponding to the first object.

According to an exemplary embodiment, the electronic device 100 may check matching information included in the object recognition model information and execute a particular application (or controller) matched with an object recognition model of the first object. For example, when the first object is a speaker and a speaker and a music player application are matched to the object recognition model information, the electronic device 100 may execute the music player application.

FIG. 38 is a diagram illustrating an operation of an electronic device displaying a controller corresponding to a TV according to an exemplary embodiment.

Referring to a first screen 3810 of FIG. 38, the electronic device 100 may identify an external object 3800 by comparing an image of the external object 3800 acquired through the image sensor with images included in object recognition model information. For example, when a degree of similarity between the image of the external object 3800 and an image of a TV included in the object recognition model information is larger than a threshold value (e.g., about 95 %), the electronic device 100 may recognize the external object 3800 as a TV.

Referring to a second screen 3820 of FIG. 38, when a TV and a controller 3801 have been matched with the object recognition model information stored in the electronic device 100, the electronic device 100 may display the controller 3801, e.g., a controller GUI, on the screen.

Therefore, according to an exemplary embodiment, the user may rapidly execute an application related to an object by simply capturing an image of the object in the electronic device 100.

Meanwhile, according to an exemplary embodiment, the user may link a particular object to a memo and/or a website in addition to an application and/or controller. An operation of the electronic device 100 linking an object and a memo (or a website address) according to the user's request will be described in detail below.

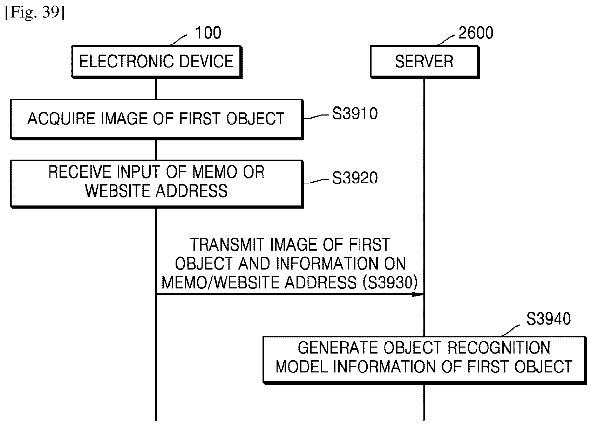

FIG. 39 is a sequence diagram illustrating a method of generating object recognition model information by linking a memo or a website address and an object according to an exemplary embodiment.

In operation S3910, the electronic device 100 may acquire an image of a first object through the image sensor. The image of the first object may be a still image or a video. When the image of the first object is a video, the image of the first object may include a plurality of video frames. Since operation S3910 corresponds to operation S2910 of FIG. 29, the detailed description thereof will not be reiterated.

According to an exemplary embodiment, the electronic device 100 may receive identification information of the first object from the user. For example, the electronic device 100 may receive a product group, a use, a product name, an icon, etc. of the photographed first object.

In operation S3920, the electronic device 100 may receive a memo or a website address.

For example, when the image of the first object is captured, the electronic device 100 may receive an input of storing a memo that the user wants to display in relation to the first object. Alternatively, when the image of the first object is captured, the electronic device 100 may receive an input of defining a website address to which the user wants to connect in relation to the first object.

In operation S3930, the electronic device 100 may transmit the image of the first object and information on the memo (or the website address) to the server 2600.

For example, the electronic device 100 may request generation of object recognition model information of the first object while transmitting the image of the first object acquired through the image sensor, the information on the memo (or the website address) input by the user, and identification information of the first object (e.g., the name, the product group, etc. of the first object) to the server 2600.

In operation S3940, the server 2600 may generate object recognition model information of the first object according to the request received from the electronic device 100.

For example, the server 2600 may generate training images corresponding to the image of the first object received from the electronic device 100. Since the operation of the server 2600 generating training images has been described with reference to FIG. 28, the detailed description thereof will not be reiterated. The server 2600 may generate an object recognition model of the first object including the image of the first object and the training images corresponding to the image of the first object. Also, the server 2600 may generate object recognition model information of the first object including matching information obtained by matching the object recognition model of the first object with the memo (or the website address) input by the user.

When the generation of the object recognition model information of the first object is finished by the server 2600, the electronic device 100 may receive the object recognition model information of the first object from the server 2600.

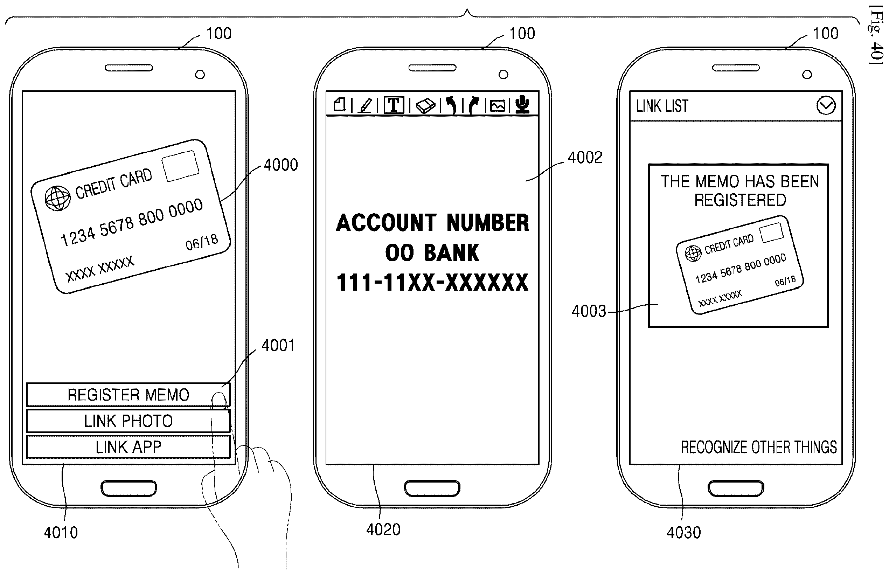

FIG. 40 is a diagram illustrating an operation of linking a credit card and a memo according to an exemplary embodiment.

Referring to a first screen 4010 of FIG. 40, the electronic device 100 may photograph an external object 4000 in response to an input of touching a capture button. For example, the electronic device 100 may acquire an image including a credit card through the image sensor.

According to an exemplary embodiment, the electronic device 100 may identify the external object 4000 by analyzing the image acquired through the image sensor. For example, the electronic device 100 may identify the external object 4000 as a credit card by analyzing the acquired image and recognize text or numbers marked on the credit card.

According to an exemplary embodiment, the electronic device 100 may receive identification information of the external object 4000 from the user. For example, the electronic device 100 may receive an input indicating that the photographed external object 4000 is a credit card.

According to an exemplary embodiment, when the external object 4000 is identified, the electronic device 100 may provide a list 4001 of functions which may be linked to the external object 4000. For example, the electronic device 100 may display a list including a memo registration function 4001, a photo linkage function, an application linkage function, and so on. The electronic device 100 may receive an input of selecting the memo registration function 4001 in the list.

Referring to a second screen 4020 of FIG. 40, when the user selects the memo registration function 4001, the electronic device 100 may display a memo input window 4002. The electronic device 100 may receive a memo including payment account information of the credit card from the user through the memo input window 4002.

The electronic device 100 may request generation of object recognition model information of the credit card while transmitting the image of the credit card, identification information of the credit card, and information on the memo to the server 2600. In this case, the server 2600 may generate training images using the image of the credit card. Also, the server 2600 may generate object recognition model information of the credit card by matching the identification information of the credit card, the training images, and the memo with each other.

Referring to a third screen 4030 of FIG. 40, when the generation of the object recognition model information of the credit card is finished by the server 2600, the electronic device 100 may receive the object recognition model information of the credit card from the server 2600. Also, the electronic device 100 may display a completion message 4003 (e.g., "The memo has been registered").

When the electronic device 100 acquires an image of the credit card through the image sensor after storing the object recognition model information of the credit card, the electronic device 100 may automatically display the memo including the payment account information of the credit card on the screen using the object recognition model information of the credit card.

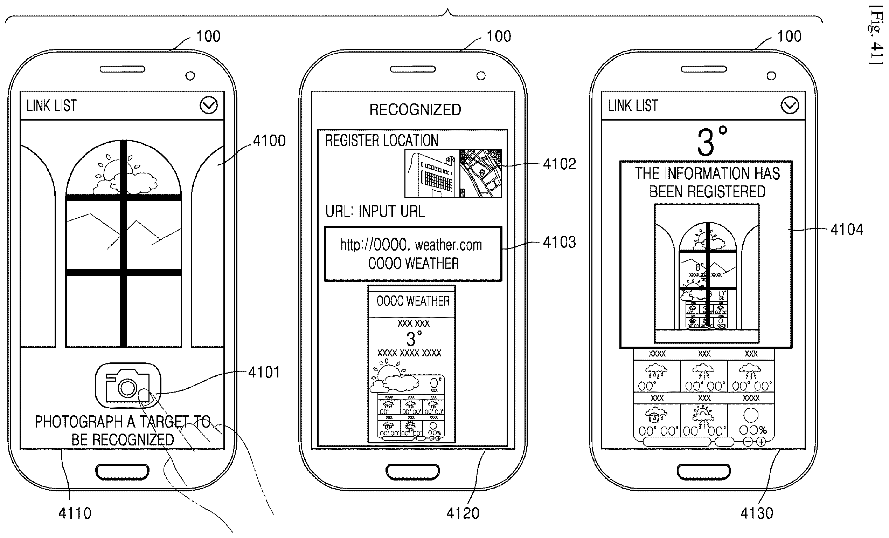

FIG. 41 is a diagram illustrating an operation of linking a window and a website address according to an exemplary embodiment.

Referring to a first screen 4110 of FIG. 41, the electronic device 100 may photograph an external object 4100 in response to an input of touching a capture button 4101. For example, the electronic device 100 may acquire an image including a window through the image sensor.

According to an exemplary embodiment, the electronic device 100 may identify the external object 4100 by analyzing the image acquired through the image sensor. For example, the electronic device 100 may identify the external object 4100 as a window by analyzing the acquired image.

According to an exemplary embodiment, the electronic device 100 may receive identification information of the external object 4100 from the user. For example, the electronic device 100 may receive an input indicating that the photographed external object 4100 is a window.

Referring to a second screen 4120 of FIG. 41, the electronic device 100 may display current location information 4102 using a location sensor (e.g., a global positioning system (GPS)). Also, when the image of the window is acquired, the electronic device 100 may receive address information (e.g., a URL) 4103 of a website to which the user intends to connect. For example, the electronic device 100 may receive address information (e.g., "http://OOOO.weather.com") of a website which provides weather information.

The electronic device 100 may request generation of object recognition model information of the window while transmitting the image of the window, the identification information of the window, the address information 4103 of the website providing weather information, the location information 4102, etc. to the server 2600. In this case, the server 2600 may generate training images using the image of the window. Also, the server 2600 may generate object recognition model information of the window by matching the identification information of the window, the training images, the address information 4103 of the website providing weather information, and the location information 4102 with each other.

Referring to a third screen 4130 of FIG. 41, when the generation of the object recognition model information of the window is finished by the server 2600, the electronic device 100 may receive the object recognition model information of the window from the server 2600. Also, the electronic device 100 may display a completion message 4104 (e.g., "The information has been registered").

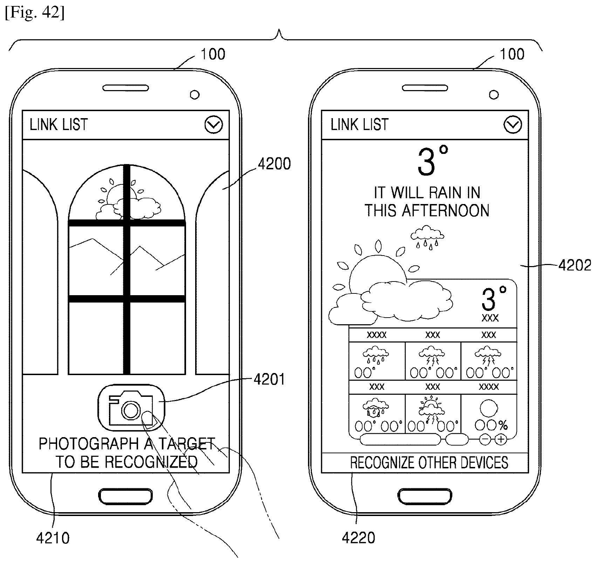

FIG. 42 is a diagram illustrating an operation of an electronic device displaying weather information corresponding to a window according to an exemplary embodiment.

Referring to a first screen 4210 of FIG. 42, the electronic device 100 may photograph an external object 4200 through the image sensor in response to an input of touching a capture button 4201. The electronic device 100 may identify the external object 4200 by comparing the image of the external object 4200 acquired through the image sensor with images included in object recognition model information. For example, when a degree of similarity between the image of the external object 4200 and an image of a window included in the object recognition model information is larger than a threshold value (e.g., about 95%), the electronic device 100 may recognize the external object 4200 as a window.

Referring to a second screen 4220 of FIG. 42, when a window and address information of a website providing weather information are matched with the object recognition model information stored in the electronic device 100, the electronic device 100 may connect to the website providing weather information and display weather information 4202 on the screen. Therefore, the user may rapidly check weather information by simply capturing an image of a window.

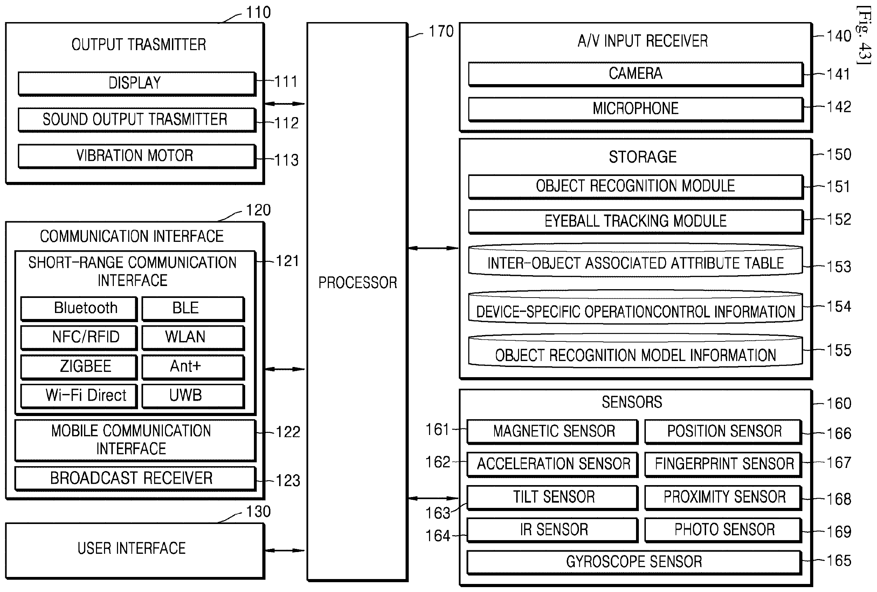

FIG. 43 is a block diagram illustrating a configuration of an electronic device according to an exemplary embodiment.

Referring to FIG. 43, the electronic device 100 may include an output transmitter 110, a communication interface 120, a user interface 130, an audio/video (A/V) input receiver 140, a storage 150, e.g., a storage device, a sensors 160, and a processor 170, e.g., a microprocessor. However, all of the illustrated components are not essential components. The electronic device 100 may be implemented by a larger or smaller number of components than the illustrated components. For example, the electronic device 100 may be implemented by the processor 170 and the communication interface 120 or by the processor 170, the communication interface 120, and the output transmitter 110, but is not limited thereto.

The output transmitter 110 is intended to output an audio signal, a video signal, or a vibration signal, and may include a display 111, a sound output transmitter 112, a vibration motor 113, and so on.

The display 111 may display information processed by the electronic device 100. For example, the display 111 may display a plurality of objects recognized by the electronic device 100.

When the display 111 and a touch pad constitute a layered structure and are configured as a touch screen, the display 111 may be used as an input device as well as an output device. The display 111 may include at least one of a liquid crystal display (LCD), a thin film transistor (TFT)-LCD, an organic light-emitting diode (OLED) display, a flexible display, a three-dimensional (3D) display, and an electrophoretic display. According to an implementation form of the electronic device 100, the electronic device 100 may include two or more displays 111. In this case, the two or more displays may be disposed to face each other using a hinge.

The display 111 may display the plurality of objects recognized by the electronic device 100. For example, the display 111 may display a plurality of objects recognized through an image sensor. Also, the display 111 may display a plurality of objects recognized through short-range communication. The display 111 may display actual images or virtual images of the plurality of objects. For example, the display 111 may display a live view including the plurality of objects or an object map including virtual images of the plurality of objects.

The display 111 may display at least one attribute of a first object and a second object. For example, the display 111 may display an icon, a sign, or text corresponding to the at least one attribute.

The display 111 may display a recommended operation list including a plurality of operations determined based on an attribute of the first object and an attribute of the second object. Also, the display 111 may display state information corresponding to the plurality of objects.

The sound output transmitter 112 may output audio data received from the communication interface 120 or stored in the storage 150. Also, the sound output transmitter 112 may output a sound signal related to a function (e.g., a call-signal receiving sound, a message receiving sound, and a notification sound) performed by the electronic device 100. For example, the sound output transmitter 112 may include a speaker, a buzzer, etc., but is not limited thereto.

The vibration motor 113 may output a vibration signal. For example, the vibration motor 113 may output a vibration signal corresponding to an output of audio data (e.g., a call-signal receiving sound, a message receiving sound, etc.) or video data.

The communication interface 120 may include one or more components which enables communication between the electronic device 100 and an external object or between the electronic device 100 and a server. For example, the communication interface 120 may include a short-range wireless communication interface 121, a mobile communication interface 122, and a broadcast receiver 123.

The short-range wireless communication interface 121 may include a Bluetooth communication interface, a BLE communication interface, an NFC communication interface, a WLAN and/or Wi-Fi communication interface, a Zigbee communication interface, an infrared data association (IrDA) communication interface, a WFD communication interface, a UWB communication interface, an Ant+ communication interface, etc., but is not limited thereto. For example, the short-range wireless communication interface 121 may include a Li-Fi communication interface.

Li-Fi may be a sub-technique of VLC technology for transferring information using a wavelength of light emitted from an LED. Li-Fi may be used anywhere in which there is illumination and is harmless to a human body. Also, Li-Fi has high stability and security due to its short range, and enables high-speed communication at low cost.

The mobile communication interface 122 exchanges wireless signals with at least one of a base station, an external terminal, and a server in a mobile communication network. For example, the wireless signals may include various forms of data in accordance with exchange of voice-call signals, video-call signals, or text/multimedia messages.

The broadcast receiver 123 receives a broadcast signal and/or information related to a broadcast from the outside of the electronic device 100 through a broadcast channel. The broadcast channel may include a satellite channel and a terrestrial channel. For example, the electronic device 100 does not include the broadcast receiver 123.

The communication interface 120 may recognize the plurality of objects located within a certain distance from the electronic device 100.

The communication interface 120 may transmit an operation signal generated based on an attribute of the first object and an attribute of the second object to a target object (e.g., the first object, the second object, or a third object). The communication interface 120 may receive an operation completion message or an operation start message from the target object.

The user interface 130 denotes a means for the user to input data for controlling the electronic device 100. For example, the user interface 130 may be a keypad, a dome switch, a touchpad (a touch capacitive-type, a pressure resistive-type, an IR beam sensing type, a surface acoustic wave-type, an integral strain gauge-type, a piezoelectric effect-type, etc.), a jog wheel, a jog switch, etc., but is not limited thereto.

The user interface 130 may receive a user input for selecting the first object and the second object among the plurality of objects displayed on the display 111. Also, the user interface 130 may receive a user input for selecting at least one attribute displayed on the display 111. The user interface 130 may receive a user input for selecting one of the plurality of recommended operations. A user input may be one of a touch input, a voice input, a bending input, and an ocular input, but is not limited thereto.

The A/V input receiver 140 is intended to input an audio signal or a video signal, and may include a camera 141, a microphone 142, and so on. The camera 141 may obtain a video frame of a still image, a video, etc. in a video call mode or a photography mode. An image captured through the camera may be processed by the processor 170 or an additional image processor (not shown).

The video frame processed by the camera 141 may be stored in the storage 150 or transmitted to the outside through the communication interface 120. Two or more cameras 141 may be provided according to a configuration of the electronic device 100.

The microphone 142 receives and processes an external sound signal into electrical voice data. For example, the microphone 142 may receive a sound signal from an external device or a speaker. The microphone 142 may use various noise removal algorithms to remove noise occurring in the process of receiving the external sound signal.

The storage 150 may store programs for processing and control of the processor 170, and may perform input and/or output of data (e.g., attribute information of an object, communication connection information, etc.).

The storage 150 may include, for example, an internal memory or an external memory. The internal memory may include at least one of a volatile memory (e.g., a dynamic random access memory (DRAM), a static RAM (SRAM), a synchronous dynamic RAM (SDRAM), etc.), and a non-volatile memory (e.g., a one-time programmable read-only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory, a NOR flash memory, etc.), a hard disk drive, or a solid state drive (SSD)).

The external memory may include a flash drive, for example, a compact flash (CF) memory card, a secure digital (SD) memory card, a micro-SD memory card, a mini-SD memory card, an extreme digital (XD) memory card, a multimedia card (MMC), a memory stick, or so on. Through various interfaces, the external memory may be functionally and/or physically connected to the electronic device 100. Also, the electronic device 100 may manage a web storage which performs a storage function of the storage 150 on the Internet.

The programs stored in the storage 150 may be classified into a plurality of modules according to their functions, for example, into an object recognition module 151, an eyeball tracking module 152, etc., but the plurality of modules are not limited thereto.

The object recognition module 151 may include an image processing algorithm for recognizing the first object and the second object included in the original frame. The object recognition module 151 may detect the contour of the first object and the contour of the second object through analysis of the original frame. Then, the object recognition module 151 may compare the detected contours of the first object and the second object with a predefined template to detect types, names, etc. of the objects.

The object recognition module 151 may include a face recognition algorithm for performing face recognition on an object. The object recognition module 151 may compare features of a face extracted from a face region with facial features of pre-registered users. The object recognition module 151 may include an OCR algorithm for performing OCR on characters included in an object.

The object recognition module 151 may determine distances from the electronic device 100 to the objects recognized through short-range communication based on the intensities of communication signals of the objects.

The eyeball tracking module 152 may analyze eye blinks, a gaze position, and/or a moving speed of an eyeball to interpret an ocular input of the user.

The storage 150 may store an inter-object associated attribute table 153, device-specific operation control information 154, and object recognition model information 155.

The inter-object associated attribute table 153 or 310 may be a table in which control information corresponding to a combination of attributes of a plurality of objects is defined. For example, the control information may include information on a device to be controlled (referred to as a control device or a target object below) among the plurality of objects and an operation to be performed by the control device.

The device-specific operation control information 154 may include information on device-specific control protocols. For example, the device-specific operation control information 154 may include a data format for generating an operation signal, information on a control command language included in the operation signal, and so on.

The object recognition model information 155 may include information for recognizing each of the plurality of objects and performing functions (e.g., applications or controllers) corresponding to each of the plurality of objects. For example, the object recognition model information 155 may include a plurality of object recognition models for identifying each of the plurality of objects and function information (e.g., application information, controller information, memo information, website address information, etc.) matched to each of the plurality of object recognition models.

The sensors 160 may sense a state of the electronic device 100 or a state of surroundings of the electronic device 100 and transfer the sensed information to the processor 170.

The sensors 160 may include at least one of a magnetic sensor 161, an acceleration sensor 162, a tilt sensor 163, an IR sensor 164, a gyroscope sensor 165, a location sensor 166, a fingerprint sensor 167, a proximity sensor 168, and a photo sensor 169, but is not limited thereto. Since a function of each sensor may be intuitively inferred from its name by those of ordinary skill in the art, the detailed description thereof will be omitted.

The processor 170 usually controls overall operation of the electronic device 100. For example, by controlling the programs stored in the storage 150, the processor 170 may control all of the output transmitter 110, the communication interface 120, the user interface 130, the A/V input receiver 140, the storage 150, the sensors 160, and so on.

The processor 170 recognizes the first object and the second object and identify an attribute of the first object and an attribute of the second object. The processor 170 may select an object to control between the first object and the second object based on the attribute of the first object and the attribute of the second object, and generate an operation signal for the selected object. For example, when the second object is selected between the first object and the second object, the processor 170 may generate an operation signal for the second object based on state information of the first object and function information of the second object.

The processor 170 may generate an operation signal for a selected object based on a sequence in which the user touches the first object and the second object. For example, when the user drags an object in a first direction (e.g., the direction from the first object to the second object), the processor 170 may generate a first operation signal corresponding to a first operation, and when the user drags an object in a second direction (e.g., the direction from the second object to the first object), the processor 170 may generate a second operation signal corresponding to a second operation.

When the first object and the second object are uncontrollable objects, the processor 170 may select a controllable third object based on an attribute of the first object and an attribute of the second object. The processor 170 may generate an operation signal for the third object and control the communication interface 120 to transmit the operation signal for the third object to the third object.

When the first object and the second object are uncontrollable objects, the processor 170 may select an operation of the electronic device 100 based on an attribute of the first object and an attribute of the second object, and perform the selected operation.

According to a user input for selecting one of a plurality of operations recommended based on attributes of the first object and attributes of the second object, the processor 170 may generate an operation signal corresponding to the selected operation.

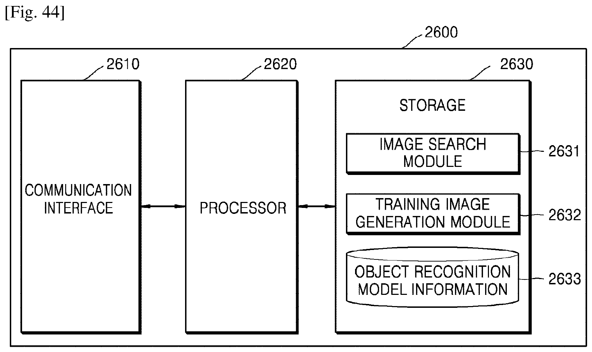

FIG. 44 is a block diagram illustrating a configuration of a server according to an exemplary embodiment.

As shown in FIG. 44, the server 2600 according to an exemplary embodiment may include a communication interface 2610, a processor 2620, e.g., a microprocessor, and a storage 2630, e.g., a storage device. However, all the illustrated components are not essential components. The server 2600 may be implemented by a larger or smaller number of components than the illustrated components.

The communication interface 2610 may include one or more components which enable communication between the server 2600 and the electronic device 100. For example, the communication interface 2610 may receive an image of an object, information on an application (a controller, a memo, or a website address) linked to the object, identification information of the object, and a request for generation of object recognition model information from the electronic device 100.

When object recognition model information is generated, the communication interface 2610 may transmit the object recognition model information to the electronic device 100. The communication interface 2610 may transmit the object recognition model information to the electronic device periodically or when a particular event occurs.

The processor 2620 usually controls overall operation of the server 2620. For example, the processor 2620 may generate general object recognition model information of general objects or personalized object recognition model information of particular objects selected by the user.

The storage 2630 may store programs for processing of the processor 2620 and store input and/or output data. For example, the storage 2630 may store an image search module 2631, a training image generation module 2632, and so on.

The image search module 2631 may search for images of objects corresponding to a plurality of categories and a plurality of keywords. For example, when the category is "TV" and the keyword is "living room," the image search module 2631 may search a search server for images corresponding to a living room TV.

The training image generation module 2632 may generate training images corresponding to found object images using deep learning technology. For example, the training image generation module 2632 may generate training images for recognizing an object by changing an angle of a found image.

Also, the storage 2630 may build a DB 2633 for managing object recognition model information generated by the server 2600.

A method according to an exemplary embodiment may be embodied in the form of program instructions executable by various computing tools and recorded in a computer-readable recording medium. The computer-readable recording medium may include program instructions, data files, data structures, etc., solely or in combination. The program instructions recorded in the computer-readable recording medium may be designed or configured for exemplary embodiments, or may be known to and used by those of ordinary skill in the computer software art. Examples of the computer-readable recording medium include magnetic media, such as a hard disk, a floppy disk, and a magnetic tape, optical media, such as a compact disc ROM (CD-ROM) and a digital versatile disc (DVD), magneto-optical media, such as an optical disk, and hardware devices, such as a ROM, a RAM, a flash memory, etc., specially configured to store and execute the program instructions. Examples of the program instructions include a high-level language code executable by a computer using an interpreter, etc. as well as a machine language code created by a compiler.

According to an exemplary embodiment, the electronic device 100 determines a target object to control and a target operation according to a user's intention based on attributes of a plurality of objects recognized by the electronic device 100, thereby enabling the user to conveniently control an external device.

Although a few exemplary embodiments have been shown and described, exemplary embodiments are not limited thereto. It would be appreciated by those skilled in the art that changes may be made in these exemplary embodiments without departing from the disclosure, the scope of which is defined in the claims.

## Claims

1. A method in an electronic device (100) to control an object, the method comprising:
identifying a plurality of objects including a first object and a second object, wherein identifying comprises one or more of:
capturing, by an image sensor, live images of the plurality of objects and identifying the plurality of objects by image analysis of the captured images; and
locating the plurality of objects within a predetermined distance from the electronic device (100) via short-range communication between the electronic device and each of the plurality of objects and identifying the located plurality of objects by receiving identification information over the short-range communication;
wherein the method further comprises:
displaying images corresponding to the plurality of identified objects on a display (111);
receiving user input via a user interface (130) to select the first object and the second object, the user input selecting a displayed image corresponding to the first object and selecting a displayed image corresponding to the second object, from among the displayed images of the plurality of objects;
identifying, by a processor (170) of the electronic device, a first attribute of the first object and a second attribute of the second object, wherein the first and second attributes indicate one or more of: current state information of the first and second objects, information on functions supported by the first and second objects, or identification information for the first and second objects;
selecting, by the processor, a target object from among the plurality of objects and the electronic device to control based on both the first attribute and the second attribute by comparing the first attribute and second attribute to attributes in a stored inter-object associated attribute table, identifying an operation signal corresponding to both the first and second attributes according to a combination of the first and second attributes from the stored inter-object associated attribute table, and identifying the target object based on the identified operation signal, the operation signal configured to be transmitted over a communication connection between the electronic device and the target device;
generating, by the processor, the operation signal for the identified target object, the operation signal configured to instruct an operation of the target object according to the inter-object associated attribute table; and
controlling, by the processor, an operation of the target object by transmitting the generated operation signal over a communication connection between the electronic device and the target device.

2. The method of claim 1, wherein the displaying images corresponding to the plurality of identified objects comprises:
displaying captured images of the plurality of objects, when the plurality of objects is identified using image analysis.

3. The method of claim 1, wherein the displaying images corresponding to the plurality of identified objects comprises:
displaying images captured by an image sensor of the plurality of objects, or
displaying virtual images representative of the identified objects in an object map,
when the plurality of objects is identified using short-range communication between the electronic device and each of the plurality of objects.

4. The method of claim 1, wherein the recognizing comprises detecting the first object and the second object and determining that the first and second objects are uncontrollable objects, wherein an uncontrollable object is a thing which cannot communicate with, or be controlled by, the electronic device, and
the method further comprises:
selecting a third object, among the plurality of objects, as the target object to control, based on the first attribute and the second attribute;
generating the operation signal for the third object; and
transmitting the generated operation signal for controlling the third object, to the third object.

5. The method of claim 1, wherein:
the identifying comprises detecting the first object and the second object and determining that the first and second objects are uncontrollable objects, wherein an uncontrollable object is a thing which cannot communicate with, or be controlled by, the electronic device,
the selecting comprises selecting the electronic device (100) itself as the target object, and
the method further comprises:
selecting an operation of the electronic device (100) based on the first attribute and the second attribute; and
performing the selected operation.

6. The method of claim 1, wherein the first attribute is one of a plurality of attributes of the first object,
the second attribute is one of a plurality of attributes of the second object, and
the identifying the first attribute and the second attribute comprises displaying at least one attribute among the plurality of attributes of the first object, and at least one attribute among the plurality of attributes of the second object.

7. The method of claim 6, wherein the identifying the first attribute and the second attribute further comprises:
receiving a user input via a user interface (130) for selecting at least one attribute from the displayed attributes, as the first attribute or the second attribute.

8. The method of claim 1, wherein the generating the operation signal for the target object comprises:
generating the operation signal for the second object based on a state information of the first object, the state information received from the first object and indicating a current state of the first object, and a function information of the second object, the function information received from the second object and indicating a function supported by the second object, when the second object is selected as the target object.

9. The method of claim 1, wherein the generating the operation signal for the target object comprises:
generating the operation signal for the target object based on a sequence in which a user touches the first object and the second object.

10. The method of claim 1, wherein the generating the operation signal for the target object comprises:
recommending a plurality of operations based on the first attribute and the second attribute;
receiving a user input via a user interface (130) for selecting one of the plurality of recommended operations; and
generating the operation signal corresponding to the selected operation.

11. A non-transitory computer-readable recording medium storing a program which, when executed by a computer system, causes the computer system to execute the method of claim 1.

12. An electronic device (100) comprising:
a processor (170) configured to control:
a display (111) to display images corresponding to a plurality of objects including a first object and a second object, wherein the plurality of objects are identified by one or more of:
capturing, by an image sensor, live images of the plurality of objects and identifying the plurality of objects by image analysis of the captured images; and
locating the plurality of objects within a predetermined distance from the electronic device (100) via short-range communication between the electronic device and each of the plurality of objects and identifying the located plurality of objects by receiving identification information over the short-range communication;
the electronic device further comprising:
a user interface (130) configured to receive a user input for selecting the first object by selecting a displayed image corresponding to the first object and configured to receive a user input for selecting the second object by selecting a displayed image corresponding to the second object, wherein the displayed images are selected from among the displayed images of the plurality of objects;
the processor (170) further configured to:
identify a first attribute of the first object and a second attribute of the second object, wherein the first and second attributes indicate one or more of: current state information of the first and second objects, information on functions supported by the first and second objects, or identification information for the first and second objects;
select a target object to control, from among the plurality of objects, based on both the first attribute and the second attribute, by being configured to:
compare the first attribute and second attribute to attributes in a stored inter-object associated attribute table,
identify an operation signal corresponding to both the first and second attributes according to a combination of the first and second attributes from the stored inter-object associated attribute table, and
identify the target object based on the identified operation signal, the operation signal configured to be transmitted over a communication connection between the electronic device and the target device;
generate the operation signal for the identified target object, the operation signal configured to instruct an operation of the target object according to the inter-object associated attribute table; and
a communication interface (120) configured to transmit the generated operation signal over a communication connection between the electronic device and the target device to the target object to control an operation of the target object,
wherein the target object is an object external to the electronic device.

13. The electronic device (100) of claim 12, further comprising the image sensor configured to capture the images of the plurality of objects to be displayed on a display (111), when the plurality of objects is identified using image analysis.

14. The electronic device (100) of claim 12, further comprising the short-range communication means configured to locate the plurality of objects to be displayed as virtual images representative of the identified objects in an object map on the display (111).

15. The electronic device (100) of claim 12, wherein, when the first object and the second object are uncontrollable objects, and wherein an uncontrollable object is a thing which cannot communicate with, or be controlled by, the electronic device, the processor (170) is further configured to:
select a third object, among the plurality of objects, as the target object to control, based on the first attribute and the second attribute,
generate the operation signal for the third object, and
control the communication interface (120) to transmit the operation signal for controlling the third object, to the third object.

## Patentansprüche

1. Verfahren in einer elektronischen Vorrichtung (100) zum Steuern eines Objekts, wobei das Verfahren Folgendes umfasst:
Identifizieren einer Vielzahl von Objekten, die ein erstes Objekt und ein zweites Objekt beinhaltet, wobei das Identifizieren eines oder mehrere des Folgenden umfasst:
Erfassen, durch einen Bildsensor, von Live-Bildern der Vielzahl von Objekten und Identifizieren der Vielzahl von Objekten durch Bildanalyse der erfassten Bilder; und
Lokalisieren der Vielzahl von Objekten innerhalb einer vorbestimmten Entfernung von der elektronischen Vorrichtung (100) über Nahbereichskommunikation zwischen der elektronischen Vorrichtung und jedem aus der Vielzahl von Objekten und Identifizieren der lokalisierten Vielzahl von Objekten durch Empfangen von Identifikationsinformationen über die Nahbereichskommunikation;
wobei das Verfahren ferner Folgendes umfasst:
Anzeigen von Bildern, die der Vielzahl von identifizierten Objekten entsprechen, auf einer Anzeige (111);
Empfangen von Benutzereingabe über eine Benutzerschnittstelle (130), um das erste Objekt und das zweite Objekt auszuwählen, wobei die Benutzereingabe aus den angezeigten Bildern der Vielzahl von Objekten ein angezeigtes Bild auswählt, das dem ersten Objekt entspricht, und ein angezeigtes Bild auswählt, das dem zweiten Objekt entspricht;
Identifizieren, durch einen Prozessor (170) der elektronischen Vorrichtung, eines ersten Attributs des ersten Objekts und eines zweiten Attributs des zweiten Objekts, wobei das erste und das zweite Attribut eines oder mehrere des Folgenden angeben: aktuelle Zustandsinformationen des ersten und des zweiten Objekts, Informationen über Funktionen, die von dem ersten und dem zweiten Objekt unterstützt werden, oder Identifikationsinformationen für das erste und das zweite Objekt;
Auswählen, durch den Prozessor, eines Zielobjekts aus der Vielzahl von Objekten und der zu steuernden elektronischen Vorrichtung basierend sowohl auf dem ersten Attribut als auch dem zweiten Attribut durch Vergleichen des ersten Attributs und des zweiten Attributs mit Attributen in einer gespeicherten objektübergreifenden zugehörigen Attributtabelle, Identifizieren eines Betriebssignals, das sowohl dem ersten als auch dem zweiten Attribut entspricht, gemäß einer Kombination des ersten und des zweiten Attributs aus der gespeicherten objektübergreifenden zugehörigen Attributtabelle, und Identifizieren des Zielobjekts basierend auf dem identifizierten Betriebssignal, wobei das Betriebssignal konfiguriert ist, um über eine Kommunikationsverbindung zwischen der elektronischen Vorrichtung und der Zielvorrichtung übertragen zu werden;
Erzeugen, durch den Prozessor, des Betriebssignals für das identifizierte Zielobjekt, wobei das Betriebssignal konfiguriert ist, um einen Betrieb des Zielobjekts gemäß der objektübergreifenden zugehörigen Attributtabelle anzuweisen; und
Steuern, durch den Prozessor, eines Betriebs des Zielobjekts durch Übertragen des erzeugten Betriebssignals über eine Kommunikationsverbindung zwischen der elektronischen Vorrichtung und der Zielvorrichtung.

2. Verfahren nach Anspruch 1, wobei das Anzeigen von Bildern, die der Vielzahl von identifizierten Objekten entsprechen, Folgendes umfasst:
Anzeigen von erfassten Bildern der Vielzahl von Objekten, wenn die Vielzahl von Objekten unter Verwendung von Bildanalyse identifiziert wird.

3. Verfahren nach Anspruch 1, wobei das Anzeigen von Bildern, die der Vielzahl von identifizierten Objekten entsprechen, Folgendes umfasst:
Anzeigen von Bildern, die durch einen Bildsensor der Vielzahl von Objekten erfasst werden, oder
Anzeigen von virtuellen Bildern, welche die identifizierten Objekte in einer Objektkarte darstellen,
wenn die Vielzahl von Objekten identifiziert ist, Verwenden von Nahbereichskommunikation zwischen der elektronischen Vorrichtung und jedem der Vielzahl von Objekten.

4. Verfahren nach Anspruch 1, wobei das Erkennen das Erfassen des ersten Objekts und des zweiten Objekts und das Bestimmen umfasst, dass das erste und das zweite Objekt nicht steuerbare Objekte sind, wobei ein nicht steuerbares Objekt ein Ding ist, das nicht mit der elektronischen Vorrichtung kommunizieren oder durch diese gesteuert werden kann, und
das Verfahren ferner Folgendes umfasst:
Auswählen eines dritten Objekts aus der Vielzahl von Objekten als das zu steuernde Zielobjekt basierend auf dem ersten Attribut und dem zweiten Attribut;
Erzeugen des Betriebssignals für das dritte Objekt; und
Übertragen des erzeugten Betriebssignals zum Steuern des dritten Objekts an das dritte Objekt.

5. Verfahren nach Anspruch 1, wobei:
das Identifizieren das Erfassen des ersten Objekts und des zweiten Objekts und das Bestimmen umfasst, dass das erste und das zweite Objekt nicht steuerbare Objekte sind, wobei ein nicht steuerbares Objekt ein Ding ist, das nicht mit der elektronischen Vorrichtung kommunizieren oder durch diese gesteuert werden kann,
das Auswählen das Auswählen der elektronischen Vorrichtung (100) selbst als das Zielobjekt umfasst, und
das Verfahren ferner Folgendes umfasst:
Auswählen eines Betriebs der elektronischen Vorrichtung (100) basierend auf dem ersten Attribut und dem zweiten Attribut; und
Durchführen des ausgewählten Betriebs.

6. Verfahren nach Anspruch 1, wobei das erste Attribut eines aus einer Vielzahl von Attributen des ersten Objekts ist,
das zweite Attribut eines aus einer Vielzahl von Attributen des zweiten Objekts ist, und
das Identifizieren des ersten Attributs und des zweiten Attributs das Anzeigen von zumindest einem Attribut aus der Vielzahl von Attributen des ersten Objekts und von zumindest einem Attribut aus der Vielzahl von Attributen des zweiten Objekts umfasst.

7. Verfahren nach Anspruch 6, wobei das Identifizieren des ersten Attributs und des zweiten Attributs ferner Folgendes umfasst:
Empfangen einer Benutzereingabe über eine Benutzerschnittstelle (130) zum Auswählen von zumindest einem Attribut aus den angezeigten Attributen als das erste Attribut oder das zweite Attribut.

8. Verfahren nach Anspruch 1, wobei das Erzeugen des Betriebssignals für das Zielobjekt Folgendes umfasst:
Erzeugen des Betriebssignals für das zweite Objekt basierend auf einer Zustandsinformation des ersten Objekts, wobei die Zustandsinformation von dem ersten Objekt empfangen wird und einen aktuellen Zustand des ersten Objekts angibt, und einer Funktionsinformation des zweiten Objekts, wobei die Funktionsinformation von dem zweiten Objekt empfangen wird und eine Funktion angibt, die von dem zweiten Objekt unterstützt wird, wenn das zweite Objekt als das Zielobjekt ausgewählt ist.

9. Verfahren nach Anspruch 1, wobei das Erzeugen des Betriebssignals für das Zielobjekt Folgendes umfasst:
Erzeugen des Betriebssignals für das Zielobjekt basierend auf einer Sequenz, in der ein Benutzer das erste Objekt und das zweite Objekt berührt.

10. Verfahren nach Anspruch 1, wobei das Erzeugen des Betriebssignals für das Zielobjekt Folgendes umfasst:
Empfehlen einer Vielzahl von Betrieben basierend auf dem ersten Attribut und dem zweiten Attribut;
Empfangen einer Benutzereingabe über eine Benutzerschnittstelle (130) zum Auswählen von einem aus der Vielzahl von empfohlenen Betrieben; und
Erzeugen des Betriebssignals entsprechend dem ausgewählten Betrieb.

11. Nichtflüchtiges computerlesbares Aufzeichnungsmedium, das ein Programm speichert, das, wenn es durch ein Computersystem ausgeführt wird, das Computersystem veranlasst, das Verfahren nach Anspruch 1 auszuführen.

12. Elektronische Vorrichtung (100), umfassend:
einen Prozessor (170), der konfiguriert ist, um Folgendes zu steuern:
eine Anzeige (111) zum Anzeigen von Bildern, die einer Vielzahl von Objekten entsprechen, beinhaltend ein erstes Objekt und ein zweites Objekt, wobei die Vielzahl von Objekten durch eines oder mehrere des Folgenden identifiziert wird:
Erfassen, durch einen Bildsensor, von Live-Bildern der Vielzahl von Objekten und Identifizieren der Vielzahl von Objekten durch Bildanalyse der erfassten Bilder; und
Lokalisieren der Vielzahl von Objekten innerhalb einer vorbestimmten Entfernung von der elektronischen Vorrichtung (100) über Nahbereichskommunikation zwischen der elektronischen Vorrichtung und jedem aus der Vielzahl von Objekten und Identifizieren der lokalisierten Vielzahl von Objekten durch Empfangen von Identifikationsinformationen über die Nahbereichskommunikation;
wobei die elektronische Vorrichtung ferner Folgendes umfasst:
eine Benutzerschnittstelle (130), die konfiguriert ist, um eine Benutzereingabe zum Auswählen des ersten Objekts durch Auswählen eines angezeigten Bildes, das dem ersten Objekt entspricht, zu empfangen, und konfiguriert ist, um eine Benutzereingabe zum Auswählen des zweiten Objekts durch Auswählen eines angezeigten Bildes, das dem zweiten Objekt entspricht, zu empfangen, wobei die angezeigten Bilder aus den angezeigten Bildern der Vielzahl von Objekten ausgewählt werden;
wobei der Prozessor (170) ferner für Folgendes konfiguriert ist:
Identifizieren eines ersten Attributs des ersten Objekts und eines zweiten Attributs des zweiten Objekts, wobei das erste und das zweite Attribut eines oder mehrere des Folgenden angeben: aktuelle Zustandsinformationen des ersten und des zweiten Objekts, Informationen über Funktionen, die von dem ersten und dem zweiten Objekt unterstützt werden, oder Identifikationsinformationen für das erste und das zweite Objekt;
Auswählen eines zu steuernden Zielobjekts aus der Vielzahl von Objekten basierend sowohl auf dem ersten Attribut als auch dem zweiten Attribut, indem er für Folgendes konfiguriert ist:
Vergleichen des ersten Attributs und des zweiten Attributs mit Attributen in einer gespeicherten objektübergreifenden zugehörigen Attributtabelle,
Identifizieren eines Betriebssignals, das sowohl dem ersten als auch dem zweiten Attribut entspricht, gemäß einer Kombination des ersten und des zweiten Attributs aus der gespeicherten objektübergreifenden zugehörigen Attributtabelle, und
Identifizieren des Zielobjekts basierend auf dem identifizierten Betriebssignal, wobei das Betriebssignal konfiguriert ist, um über eine Kommunikationsverbindung zwischen der elektronischen Vorrichtung und der Zielvorrichtung übertragen zu werden;
Erzeugen des Betriebssignals für das identifizierte Zielobjekt, wobei das Betriebssignal konfiguriert ist, um einen Betrieb des Zielobjekts gemäß der objektübergreifenden zugehörigen Attributtabelle anzuweisen; und
eine Kommunikationsschnittstelle (120), die konfiguriert ist, um das erzeugte Betriebssignal über eine Kommunikationsverbindung zwischen der elektronischen Vorrichtung und der Zielvorrichtung an das Zielobjekt zu übertragen, um einen Betrieb des Zielobjekts zu steuern,
wobei das Zielobjekt ein Objekt außerhalb der elektronischen Vorrichtung ist.

13. Elektronische Vorrichtung (100) nach Anspruch 12, ferner umfassend den Bildsensor, der konfiguriert ist, um die Bilder der Vielzahl von Objekten zu erfassen, die auf einer Anzeige (111) anzuzeigen sind, wenn die Vielzahl von Objekten unter Verwendung von Bildanalyse identifiziert wird.

14. Elektronische Vorrichtung (100) nach Anspruch 12, ferner umfassend das Nahbereichskommunikationsmittel, das konfiguriert ist, um die Vielzahl von Objekten zu lokalisieren, die als virtuelle Bilder anzuzeigen sind, welche die identifizierten Objekte in einer Objektkarte auf der Anzeige (111) darstellen.

15. Elektronische Vorrichtung (100) nach Anspruch 12, wobei, wenn das erste Objekt und das zweite Objekt nicht steuerbare Objekte sind, und wobei ein nicht steuerbares Objekt ein Ding ist, das nicht mit der elektronischen Vorrichtung kommunizieren oder durch diese gesteuert werden kann, der Prozessor (170) ferner für Folgendes konfiguriert ist:
Auswählen eines dritten Objekts aus der Vielzahl von Objekten als das zu steuernde Zielobjekt, basierend auf dem ersten Attribut und dem zweiten Attribut,
Erzeugen des Betriebssignals für das dritte Objekt, und
Steuern der Kommunikationsschnittstelle (120), um das Betriebssignal zum Steuern des dritten Objekts an das dritte Objekt zu übertragen.

## Revendications

1. Procédé de commande d'un objet dans un dispositif électronique (100), le procédé comprenant :
l'identification d'une pluralité d'objets comprenant un premier objet et un deuxième objet, dans lequel l'identification comprend une ou plusieurs parmi :
la capture, par un capteur d'images, d'images en direct de la pluralité d'objets et l'identification de la pluralité d'objets par analyse d'image des images capturées ; et
la localisation de la pluralité d'objets à une distance prédéterminée du dispositif électronique (100) via une communication à courte portée entre le dispositif électronique et chacun de la pluralité d'objets et l'identification de la pluralité d'objets localisés par la réception d'informations d'identification via la communication à courte portée ;
dans lequel le procédé comprend en outre :
l'affichage d'images correspondant à la pluralité d'objets identifiés sur un affichage (111) ;
la réception d'une entrée utilisateur via une interface utilisateur (130) pour sélectionner le premier objet et le deuxième objet, l'entrée utilisateur sélectionnant une image affichée correspondant au premier objet et sélectionnant une image affichée correspondant au deuxième objet, parmi les images affichées de la pluralité d'objets ;
l'identification, par un processeur (170) du dispositif électronique, d'un premier attribut du premier objet et d'un deuxième attribut du deuxième objet, dans lequel les premier et deuxième attributs indiquent une ou plusieurs parmi : des informations d'état actuel des premier et deuxième objets, des informations sur les fonctions prises en charge par les premier et deuxième objets, ou des informations d'identification pour les premier et deuxième objets ;
la sélection, par le processeur, d'un objet cible parmi la pluralité d'objets et le dispositif électronique à commander sur la base à la fois du premier attribut et du deuxième attribut en comparant le premier attribut et le deuxième attribut à des attributs dans une table d'attributs associés inter-objets stockée, l'identification d'un signal d'opération correspondant à la fois aux premier et deuxième attributs selon une combinaison des premier et deuxième attributs de la table d'attributs associés inter-objets stockée, et l'identification de l'objet cible sur la base du signal d'opération identifié, le signal d'opération configuré pour être transmis via une connexion de communication entre le dispositif électronique et le dispositif cible ;
la génération, par le processeur, du signal d'opération pour l'objet cible identifié, le signal d'opération configuré pour instruire une opération de l'objet cible selon la table d'attributs associés inter-objets ; et
la commande, par le processeur, d'une opération de l'objet cible en transmettant le signal d'opération généré via une connexion de communication entre le dispositif électronique et le dispositif cible.

2. Procédé selon la revendication 1, dans lequel l'affichage d'images correspondant à la pluralité d'objets identifiés comprend :
l'affichage d'images capturées de la pluralité d'objets, lorsque la pluralité d'objets est identifiée à l'aide d'une analyse d'image.

3. Procédé selon la revendication 1, dans lequel l'affichage d'images correspondant à la pluralité d'objets identifiés comprend :
l'affichage d'images capturées par un capteur d'images de la pluralité d'objets, ou
l'affichage d'images virtuelles représentatives des objets identifiés dans une carte d'objets,
lorsque la pluralité d'objets est identifiée à l'aide d'une communication à courte portée entre le dispositif électronique et chacun de la pluralité d'objets.

4. Procédé selon la revendication 1, dans lequel la reconnaissance comprend la détection du premier objet et du deuxième objet et la détermination que les premier et deuxième objets sont des objets non-commandables, dans lequel un objet non-commandable est une chose qui ne peut pas communiquer avec, ou être commandée par, le dispositif électronique, et
le procédé comprend en outre :
la sélection d'un troisième objet, parmi la pluralité d'objets, en tant qu'objet cible à commander, sur la base du premier attribut et du deuxième attribut ;
la génération du signal d'opération pour le troisième objet ; et
la transmission du signal d'opération généré pour commander le troisième objet, au troisième objet.

5. Procédé selon la revendication 1, dans lequel :
l'identification comprend la détection du premier objet et du deuxième objet et la détermination que les premier et deuxième objets sont des objets non-commandables, dans lequel un objet non-commandable est une chose qui ne peut pas communiquer avec, ou être commandée par, le dispositif électronique,
la sélection comprend la sélection du dispositif électronique (100) lui-même en tant qu'objet cible, et
le procédé comprend en outre :
la sélection d'une opération du dispositif électronique (100) sur la base du premier attribut et du deuxième attribut ; et
l'exécution de l'opération sélectionnée.

6. Procédé selon la revendication 1, dans lequel le premier attribut est l'un d'une pluralité d'attributs du premier objet,
le deuxième attribut est l'un d'une pluralité d'attributs du deuxième objet, et
l'identification du premier attribut et du deuxième attribut comprend l'affichage d'au moins un attribut parmi la pluralité d'attributs du premier objet, et d'au moins un attribut parmi la pluralité d'attributs du deuxième objet.

7. Procédé selon la revendication 6, dans lequel l'identification du premier attribut et du deuxième attribut comprend en outre :
la réception d'une entrée utilisateur via une interface utilisateur (130) pour sélectionner au moins un attribut parmi les attributs affichés, en tant que premier attribut ou deuxième attribut.

8. Procédé selon la revendication 1, dans lequel la génération du signal d'opération pour l'objet cible comprend :
la génération du signal d'opération pour le deuxième objet sur la base d'informations d'état du premier objet, les informations d'état reçues en provenance du premier objet et indiquant un état actuel du premier objet, et d'informations de fonction du deuxième objet, les informations de fonction reçues en provenance du deuxième objet et indiquant une fonction prise en charge par le deuxième objet, lorsque le deuxième objet est sélectionné comme objet cible.

9. Procédé selon la revendication 1, dans lequel la génération du signal d'opération pour l'objet cible comprend :
la génération du signal d'opération pour l'objet cible sur la base d'une séquence dans laquelle un utilisateur touche le premier objet et le deuxième objet.

10. Procédé selon la revendication 1, dans lequel la génération du signal d'opération pour l'objet cible comprend :
la recommandation d'une pluralité d'opérations sur la base du premier attribut et du deuxième attribut ;
la réception d'une entrée utilisateur via une interface utilisateur (130) pour sélectionner l'une de la pluralité d'opérations recommandées ; et
la génération du signal d'opération correspondant à l'opération sélectionnée.

11. Support d'enregistrement non transitoire lisible par ordinateur stockant un programme qui, lorsqu'il est exécuté par un système informatique, amène le système informatique à exécuter le procédé de la revendication 1.

12. Dispositif électronique (100) comprenant :
un processeur (170) configuré pour commander :
un affichage (111) pour afficher des images correspondant à une pluralité d'objets comprenant un premier objet et un deuxième objet, dans lequel la pluralité d'objets sont identifiés par une ou plusieurs parmi :
la capture, par un capteur d'images, d'images en direct de la pluralité d'objets et l'identification de la pluralité d'objets par analyse d'image des images capturées ; et
la localisation de la pluralité d'objets à une distance prédéterminée du dispositif électronique (100) via une communication à courte portée entre le dispositif électronique et chacun de la pluralité d'objets et l'identification de la pluralité d'objets localisés par la réception d'informations d'identification via la communication à courte portée ;
le dispositif électronique comprenant en outre :
une interface utilisateur (130) configurée pour recevoir une entrée utilisateur pour sélectionner le premier objet en sélectionnant une image affichée correspondant au premier objet et configurée pour recevoir une entrée utilisateur pour sélectionner le deuxième objet en sélectionnant une image affichée correspondant au deuxième objet, dans lequel les images affichées sont sélectionnées parmi les images affichées de la pluralité d'objets ;
le processeur (170) configuré en outre pour :
identifier un premier attribut du premier objet et un deuxième attribut du deuxième objet, dans lequel les premier et deuxième attributs indiquent une ou plusieurs parmi : des informations d'état actuel des premier et deuxième objets, des informations sur les fonctions prises en charge par les premier et deuxième objets, ou des informations d'identification pour les premier et deuxième objets ;
sélectionner un objet cible à commander, parmi la pluralité d'objets, sur la base à la fois du premier attribut et du deuxième attribut, en étant configuré pour :
comparer le premier attribut et le deuxième attribut aux attributs dans une table d'attributs associés inter-objets stockée,
identifier un signal d'opération correspondant à la fois aux premier et deuxième attributs selon une combinaison des premier et deuxième attributs à partir de la table d'attributs associés inter-objets stockée, et
identifier l'objet cible sur la base du signal d'opération identifié, le signal d'opération configuré pour être transmis via une connexion de communication entre le dispositif électronique et le dispositif cible ;
générer le signal d'opération pour l'objet cible identifié, le signal d'opération configuré pour instruire une opération de l'objet cible selon la table d'attributs associés inter-objets ; et
une interface de communication (120) configurée pour transmettre le signal d'opération généré via une connexion de communication entre le dispositif électronique et le dispositif cible à l'objet cible pour commander une opération de l'objet cible,
dans lequel l'objet cible est un objet externe au dispositif électronique.

13. Dispositif électronique (100) selon la revendication 12, comprenant en outre le capteur d'image configuré pour capturer les images de la pluralité d'objets à afficher sur un affichage (111), lorsque la pluralité d'objets est identifiée à l'aide d'une analyse d'image.

14. Dispositif électronique (100) selon la revendication 12, comprenant en outre les moyens de communication à courte portée configurés pour localiser la pluralité d'objets à afficher sous forme d'images virtuelles représentatives des objets identifiés dans une carte d'objets sur l'affichage (111).

15. Dispositif électronique (100) selon la revendication 12, dans lequel, lorsque le premier objet et le deuxième objet sont des objets non-commandables, et dans lequel un objet non-commandable est une chose qui ne peut pas communiquer avec, ou être commandée par, le dispositif électronique, le processeur (170) est en outre configuré pour :
sélectionner un troisième objet, parmi la pluralité d'objets, en tant qu'objet cible à commander, sur la base du premier attribut et du deuxième attribut,
générer le signal d'opération pour le troisième objet, et
commander l'interface de communication (120) pour transmettre le signal d'opération pour commander le troisième objet, au troisième objet.
